(19) Europäisches Patentamt / European Patent Office / Office européen des brevets

(11) **EP 4 082 677 A1**

(12) **EUROPEAN PATENT APPLICATION**
published in accordance with Art. 153(4) EPC

(43) Date of publication:
**02.11.2022 Bulletin 2022/44**

(21) Application number: **21747626.6**

(22) Date of filing: **25.01.2021**

(51) International Patent Classification (IPC):
**B05D 3/06** *(2006.01)*

(52) Cooperative Patent Classification (CPC):
**B05D 3/06; B05D 7/00; B05D 7/24; B32B 5/10;
B32B 15/082; B32B 15/092; B32B 27/16;
B32B 27/20; B32B 27/26; B32B 27/38;
C08G 59/40; C08G 59/68; C08J 5/04; C08J 5/24;
C08J 7/00;** (Cont.)

(86) International application number:
**PCT/JP2021/002399**

(87) International publication number:
**WO 2021/153487 (05.08.2021 Gazette 2021/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.01.2020 JP 2020013259
02.03.2020 JP 2020034764
03.03.2020 JP 2020035570
28.04.2020 JP 2020079015**

(71) Applicant: **Toray Industries, Inc.**
**Tokyo, 103-8666 (JP)**

(72) Inventors:
• **MACHIDA, Ginpei**
**Iyo-gun, Ehime 791-3193 (JP)**
• **KOYANAGI, Shizue**
**Nagoya-shi, Aichi 455-8502 (JP)**
• **TAKETA, Ichiro**
**Iyo-gun, Ehime 791-3193 (JP)**
• **SAKATA, Hiroaki**
**Iyo-gun, Ehime 791-3193 (JP)**

(74) Representative: **Prüfer & Partner mbB**
**Patentanwälte · Rechtsanwälte**
**Sohnckestraße 12**
**81479 München (DE)**

(54) **COATING AGENT, SHEET-LIKE INTERMEDIATE BASE MATERIAL, PHOTOCURABLE RESIN FILM, FIBER-REINFORCED COMPOSITE MATERIAL INTERMEDIATE, FIBER-REINFORCED COMPOSITE MATERIAL, METHOD FOR PRODUCING FIBER-REINFORCED COMPOSITE MATERIAL INTERMEDIATE, AND METHOD FOR PRODUCING FIBER-REINFORCED COMPOSITE MATERIAL**

(57) [Problem] The main object is to provide a surface protect material that is high in UV resistance, able to protect the surface of the prepreg used as the parent material, able to prevent a fiber composite material from being deteriorated by UV, able to prevent defects during painting, able to serve for control of the resin flow, and low in the volatilization percentage during curing.

[Means of solution] A coating agent for spraying or manual application comprising an epoxy resin composition containing at least the components [A] to [D] given below, wherein relative to the total quantity of epoxy resin, which accounts for 100 parts by mass, the component [A] accounts for 90 to 100 parts by mass; the component [B] accounts for 15 to 75 parts by mass; the component [C] accounts for 0.05 to 75 parts by mass; and the component [D] accounts for 0.1 to 10 parts by mass: [A] non-aromatic epoxy resin, [B] pigment having an number average particle size of 0.1 to 10 μm, [C] non-aromatic thermoplastic resin, and [D] cationic curing agent or anionic curing agent.

EP 4 082 677 A1

**(Cont. next page)**

(52) Cooperative Patent Classification (CPC): (Cont.)
**C08K 3/013; C08L 29/04; C08L 29/14;
C08L 31/04; C08L 63/00; C08L 101/00;
C09D 7/61; C09D 7/63; C09D 163/00;
C09D 201/00**

**Description**

TECHNICAL FIELD

The present invention relates to a coating agent for spraying or manual application that includes a highly light resistant epoxy resin composition, a sheet shaped intermediate material that includes a highly light resistant epoxy resin composition and a metal foil or mesh, a method for producing a fiber reinforced composite material using a coating agent that contains a highly light resistant epoxy resin composition, a fiber reinforced composite intermediate formed by preparing a sheet shaped film of a highly light resistant epoxy resin composition attached to a mold, light-curing it, and laying a fiber reinforced composite material base thereon, and a method for producing a fiber reinforced composite material by molding a fiber reinforced composite intermediate.

BACKGROUND ART

Prepregs, which are prepared by impregnating reinforced fibers such as carbon fiber with a thermosetting resin such as epoxy resin, are often used in manufacturing products that require high structural performance such as aircraft structural members, windmill blades, automobile outer panels, IC trays, laptop PC housings, and other computer members. However, fiber reinforced composite materials produced by curing general prepregs are low in light resistance (UV resistance) and likely to deteriorate or alter when their surfaces are exposed to light. Therefore, in recent years, there has been an increasing demand for fiber reinforced composite materials having light resistant surfaces.
Patent document 1 discloses a sheet material having UV shielding property to be used as a surface protective film for fiber reinforced composite materials. In addition, Patent document 2 discloses a combination of an epoxy resin having no aromatic rings, a carboxylic acid anhydride also having no aromatic rings, and an ultraviolet absorber to be used to form a UV resistant resin composition. Non-aromatic epoxy compounds are generally so low in molecular weight and so weak in intramolecular interactions that they are low in viscosity and likely to volatilize easily.

PRIOR ART DOCUMENTS

PATENT DOCUMENTS

Patent document 1: Published Japanese Translation of PCT International Publication JP 2015-507648
Patent document 2: International Publication WO 2003/002661

SUMMARY OF INVENTION

PROBLEMS TO BE SOLVED BY THE INVENTION

However, the technique disclosed in Patent document 1 is disadvantageous in that the epoxy resin composition used as the film material contains an aromatic ring and accordingly, the film material itself is poor in UV resistance. In the case of the technique disclosed in Patent document 2, furthermore, a carboxylic anhydride is applied as a curing agent for an epoxy resin composition, and therefore, the technique is disadvantageous because of being low in design freedom in controlling the handleability and resin flow when producing a surface protective material and in controlling the volatilization during the curing step.
Thus, the main object of the present invention is to provide a surface protective material that is high in UV resistance, able to protect the surface of the prepreg used as the parent material, able to prevent a fiber composite material from being deteriorated by UV, able to prevent defects during painting, able to serve for control of the resin flow, and low in the volatilization percentage during curing.

MEANS OF SOLVING THE PROBLEMS

The present invention has the following constitutional features to solve these problems. Specifically, the coating agent according to the present invention is a coating agent for spraying or manual application containing an epoxy resin composition that includes at least the components [A] to [D] given below, wherein relative to the total quantity of epoxy resin, which accounts for 100 parts by mass, the component [A] accounts for 90 to 100 parts by mass; the component [B] accounts for 15 to 75 parts by mass; the component [C] accounts for 0.05 to 75 parts by mass; and the component [D] accounts for 0.1 to 10 parts by mass:

[A] non-aromatic epoxy resin,
[B] pigment having an average particle size of 0.1 to 10 $\mu$m,
[C] non-aromatic thermoplastic resin, and
[D] cationic curing agent or anionic curing agent.

The sheet shaped intermediate material according to the present invention includes a metal sheet (metal mesh or metal foil) coated with an epoxy resin composition that includes at least the components [A] to [D] given below, wherein relative to the total quantity of epoxy resin, which accounts for 100 parts by mass, the component [A] accounts for 90 to 100 parts by mass; the component [B] accounts for 15 to 75 parts by mass; the component [C] accounts for 20 to 75 parts by mass; and the component [D] accounts for 0.1 to 10 parts by mass:

[A] non-aromatic epoxy resin,
[B] pigment having an average particle size of 0.1 to 10 $\mu$m,
[C] non-aromatic thermoplastic resin, and
[D] cationic curing agent or anionic curing agent.

The production method for a fiber reinforced composite intermediate according to the present invention includes a step for applying an epoxy resin composition containing the components [A] to [D] given below over the surface of a fiber reinforced composite material base and a subsequent step for photo-curing the epoxy resin composition:

[A] non-aromatic epoxy resin,
[B] pigment having an average particle size of 0.1 to 10 $\mu$m,
[C] non-aromatic thermoplastic resin, and
[D] cationic curing agent or anionic curing agent.

The production method for a fiber reinforced composite material according to the present invention includes a molding step for further applying heat and/or pressure to mold the fiber reinforced composite intermediate produced by the production method for a fiber reinforced composite intermediate described above.
The production method for a fiber reinforced composite intermediate according to the present invention includes a step for attaching to a mold a resin film containing an epoxy resin composition that includes the components [A] to [D] given below, a subsequent step for photo-curing the epoxy resin composition, and a step for laying a fiber reinforced composite material base on the resin film:

[A] non-aromatic epoxy resin,
[B] pigment having a volume average particle size of 0.1 to 10 $\mu$m,
[C] non-aromatic thermoplastic resin, and
[D] cationic curing agent or anionic curing agent.

The production method for a fiber reinforced composite material according to the present invention includes a step for further applying heat and/or pressure to post-cure the fiber reinforced composite intermediate produced by the production method for a fiber reinforced composite intermediate described above.
In addition, the present invention also provides a resin film having the following constitutional features to solve the above problems. Specifically, it is a photo-curable resin film containing an epoxy resin composition that includes the components [A] to [D] given below:

[A] non-aromatic epoxy resin,
[B] pigment having a volume average particle size of 0.1 to 10 $\mu$m,
[C] non-aromatic thermoplastic resin, and
[D] cationic curing agent or anionic curing agent.

For the present invention, the term "being photo-curable" means a property characterized by undergoing a curing reaction under the irradiation of light such as visible light, ultraviolet light, and infrared light

ADVANTAGEOUS EFFECTS OF THE INVENTION

The present invention can provide a coating agent that contains a highly light resistant epoxy resin composition, a sheet shaped intermediate material that includes a highly weather resistant epoxy resin composition and a metal foil or mesh, a resin film that includes a highly light resistant epoxy resin composition, a fiber reinforced composite intermediate, and a fiber reinforced composite material.

The present invention can also provide a fiber reinforced composite intermediate that contains a highly UV resistant material serving to protect the surface of a parent material for a fiber reinforced composite material such as prepreg to prevent its degradation by UV and that also works to prevent the resin of the parent material with lower UV resistance and the coating agent with higher UV resistance from being mixed in the heat-curing step. The present invention can also provide a fiber reinforced composite intermediate and a fiber reinforced composite material that contain a resin film including an epoxy resin composition with high UV resistance and good UV shielding property serving to protect the surface of a parent material for a fiber reinforced composite material such as prepreg to prevent its degradation by UV and that also works to prevent the resin of the parent material with lower UV resistance and the resin film from being mixed in the heat-curing and/or pressure-curing step.

DESCRIPTION OF PREFERRED EMBODIMENTS

The epoxy resin composition according to the present invention adopts the following constitutions.

An epoxy resin composition including at least the components [A] to [D] given below:

[A] non-aromatic epoxy resin,
[B] pigment having an average particle size of 0.1 to 10 μm,
[C] non-aromatic thermoplastic resin, and
[D] cationic curing agent or anionic curing agent.

The component [A] used for the present invention is a non-aromatic epoxy resin. Here, the term "aromatic" indicates a chemical structure that contains an aromatic hydrocarbon or a conjugated unsaturated heterocyclic compound and a chemical structure that does not fit this definition is "non-aromatic". More specifically, a non-aromatic epoxy resin is an epoxy resin that does not contain an aromatic hydrocarbon group or an unsaturated heterocyclic ring in its chemical structure. Examples of non-aromatic epoxy resins include alicyclic epoxy resins (epoxy resins containing cycloalkane rings) such as tetrahydroindene diepoxide, vinylcyclohexene oxide, (3',4'-epoxycyclohexane)methyl 3,4-epoxycyclohexane carboxylate, dipentene dioxide, bis(3,4-epoxycyclohexylmethyl) adipate, dicyclopentadiene dioxide, bis(2,3-epoxycyclopentyl) ether, 1,2-epoxy-4-(2-oxiranyl)cyclohexane addition product of 2,2-bis(hydroxymethyl)-1-butanol, epsilon-caprolactone modified tetra(3,4-epoxycyclohexylmethyl) butanetetracarboxylate, bi-7-oxabicyclo[4.1.0]heptane, dodecahydrobisphenol A diglycidyl ether, dodecahydrobisphenol F diglycidyl ether, 1,4-cyclohexanedimethanol diglycidyl ether, hexahydrophthalic acid diglycidyl ester, hexahydroterephthalic acid diglycidyl ester, diglycidyl ether of 2,2-bis(4-hydroxycyclohexyl)propane (generic name: hydrogenated bisphenol A type liquid epoxy resin). Specific example of an epoxy resin that contains none of an aromatic ring, amine nitrogen atom, cycloalkane ring, and cycloalkene ring include ethylene glycol diglycidyl ether, propylene glycol diglycidyl ether, 1,4-butanediol glycidyl ether, 1,6-hexanediol diglycidyl ether, neopentylene glycol diglycidyl ether, glycerol polyglycidyl ether, diglycerol polyglycidyl ether, trimethylolpropane polyglycidyl ether, sorbitol polyglycidyl ether, 1,4-bis(2-oxiranyl)butane, pentaerythritol polyglycidyl ether. Specific example of a monofunctional epoxy compound containing neither of an aromatic ring and an amine nitrogen atom (an epoxy compound containing one oxirane ring alone) include 4-tert-butyl glycidyl ether, butyl glycidyl ether, 1-butene oxide, 1,2-epoxy-4-vinyl cyclohexane, and 2-ethylhexyl glycidyl ether.

From the viewpoint of heat resistance, alicyclic epoxy compounds are preferred as the non-aromatic epoxy resins.

Commercial products may be used as the non-aromatic epoxy resins. Examples include CELLOXIDE (registered trademark) 2021P, CELLOXIDE (registered trademark) 8010, CELLOXIDE (registered trademark) 2000, EPOLEAD (registered trademark) GT401, CELLOXIDE (registered trademark) 2081, EHPE 3150 (manufactured by Daicel Chemical Industries, Ltd.), THI-DE (manufactured by JXTG Energy Corporation), TTA21, AAT15, TTA22 (manufactured by Sunchemical Co., Ltd.), Ex-121, Ex-211, Ex-212, Ex-313, Ex-321, Ex-411 (manufactured by Nagase ChemteX Corporation), Epolite (registered trademark) 4000 (manufactured by Kyoeisha Chemical), ST-3000, ST-4000 (manufactured by NIPPON STEEL Chemical & Material Co., Ltd), YX8000 (manufactured by Mitsubishi Chemical Corporation), and EPALOY 5000 (manufactured by HUNTSMAN).

The use of at least two of the non-aromatic epoxy resins listed above serves to control the reactivity of the epoxy resin composition and realize a good balance between the fast curability and the pot life of the epoxy resin composition.

If the above non-aromatic epoxy resins account for 90 to 100 parts by mass relative to the total mass, i.e. 100 parts by mass, of the epoxy resin composition, it ensures a high light resistance (high UV resistance).

If the epoxy resin composition contains alicyclic epoxy resins alone, furthermore, it serves to obtain a cured epoxy resin that has a high glass transition temperature while maintaining UV resistance.

The components[B] is a pigment (having an average particle size of 0.1 to 10 μm). Examples of such pigments include barium sulfate, zinc sulfide, titanium oxide, molybdate red, cadmium red, chrome oxide, titanium yellow, cobalt green, cobalt blue, ultramarine blue, barium titanate, carbon black, iron oxide, red phosphorus, and copper chromate. For these pigments, it is necessary that the average particle size be 0.1 to 10 $\mu$m, and it is preferably 0.1 to 5 $\mu$m, and more preferably 0.3 to 5 $\mu$m, to make it possible to obtain an epoxy resin composition with good UV shielding property. Here, the average particle diameter is a value determined by the laser diffraction scattering method using LA-950 (manufactured by Horiba, Ltd.). A volume based measurement taken by using Araldite (registered trademark) GY282 (component: bisphenol F type epoxy resin, manufactured by Huntsman Japan K.K.) as dispersion medium is adopted as measured particle size distribution, and the particle diameter value (median diameter) at 50% on the resulting particle size distribution cumulative curve is adopted as average particle diameter.

If the above pigments account for 15 to 75 parts by mass, preferably 25 to 55 parts by mass, and more preferably 30 to 50 parts by mass, relative to the total mass, i.e. 100 parts by mass, of all epoxy resins contained in the epoxy resin composition, it serves to ensure a good balance between the light shielding property of the cured epoxy resin and either the stickiness of the epoxy resin composition to the fiber reinforced composite material base precursor according to the present invention during the manual application step or that of the epoxy resin composition to the surface to which the epoxy resin composition is applied.

If the above pigments account for 15 to 75 parts by mass, preferably 25 to 55 parts by mass, and more preferably 30 to 50 parts by mass, relative to the total mass, i.e. 100 parts by mass, of all epoxy resins contained in the epoxy resin composition, it serves to ensure a good balance between the light shielding property of the cured epoxy resin and either the stickiness of the epoxy resin composition to the fiber reinforced composite material base according to the present invention during the manual application step or that of the epoxy resin composition to the surface to which the epoxy resin composition is applied.

Furthermore, if the above pigments preferably account for 15 to 75 parts by mass, more preferably 25 to 55 parts by mass, and still more preferably 30 to 50 parts by mass, relative to the total mass, i.e. 100 parts by mass, of all epoxy resins contained in the epoxy resin composition, it serves to provide a cured epoxy resin having good UV shielding property and ensure a good balance between the tackiness of the sheet shaped intermediate material or resin film that contains the epoxy resin composition according to the present invention and the UV shielding property of the cured product.

The component [C] is a non-aromatic thermoplastic resin. Here, the term "aromatic" indicates a chemical structure that contains an aromatic hydrocarbon or a conjugated unsaturated heterocyclic compound and a chemical structure that does not fit this definition is "non-aromatic. More specifically, a non-aromatic thermoplastic resin is a thermoplastic resin that does not contain an aromatic hydrocarbon group or an unsaturated heterocyclic ring in its chemical structure. Examples of a non-aromatic thermoplastic resin include polyvinyl alcohol, polyvinyl acetal, polyvinyl formal, polyvinyl acetoacetal, polyvinyl butyral, polyvinyl acetate, hydrogenated bisphenol A pentaerythritol phosphite polymer, hydrogenated terpene, and hydrogenated terpene phenol.

In particular, polyvinyl alcohol, polyvinyl formal, polyvinyl butyral, polyvinyl acetoacetal, and polyvinyl acetate, which are high in the solubility in non-aromatic epoxy resins, are preferred because the viscosity of the epoxy resin composition can be adjusted easily. Polyvinyl acetoacetal and polyvinyl butyral are more preferred because they serve to produce a cured epoxy resin composition with an increased elongation percentage. Here, the elongation percentage means a bending strain (%) determined from three-point bending test of a cured epoxy resin composition having a predetermined shape.

It is preferable for these non-aromatic thermoplastic resins to be soluble in the epoxy resin of the component [A]. For example, at least 10 parts by mass of a powdery thermoplastic resin is added to 100 parts by mass of the epoxy resin of the component [A] and they are kneaded at 100°C to 120°C for 1 hour. If a decrease in the quantity of the powdery thermoplastic resin from the initial value was detected, then it is regarded as soluble. A decrease in the quantity is deemed to occur if it is so small that the powder is no longer detectable optically or if the mass of the collected powdery remainder is smaller by 10% or more than that of the initial value. From the viewpoint of dissolution in an epoxy resin, it is preferable for the powdery thermoplastic resin to have an average particle size of 100 $\mu$m or less as determined by the laser diffraction method. On the other hand, the average particle size is preferably 100 nm or more because it serves to easily prevent the coagulation of the powder during storage and its mixing with an epoxy resin by stirring.

Furthermore, such a non-aromatic thermoplastic resin should have a molecular weight of 5,000 to 70,000 g/mol, preferably 7,000 to 65,000 g/mol, and more preferably 10,000 to 60,000 g/mol, because it ensures a good balance between its uniform dissolution in an epoxy resin composition and reduction of the resin flow. Here, the molecular weight means the weight average molecular weight in terms of polystyrene measured by gel permeation chromatography using HLC-8420 GPC (manufactured by Tosoh Corporation).

Commercial products may be used as the above non-aromatic thermoplastic resins. Examples include J-POVAL (registered trademark) (manufactured by Japan Vam & Poval Co., Ltd.), Vinylec (registered trademark) (manufactured by JNC), S-Lec (registered trademark) (manufactured by Sekisui Chemical Co., Ltd.), Urutorasen (registered trademark) (manufactured by Tosoh Corporation), JPH-3800 (manufactured by Johoku Chemical Co., Ltd.), and YS Polystar UH130 (manufactured by Yasuhara Chemical Co., Ltd.).

When the epoxy resin composition is sprayed for coating, the non-aromatic thermoplastic resin preferably accounts for 0.05 part by mass or more relative to the total mass, i.e. 100 parts by mass, of all epoxy resins contained in the epoxy resin composition because a resin flow can be reduced. Here, spraying means a method that uses a container filled with an epoxy resin composition and atomizes the epoxy resin composition in the form of mist or foam through a nozzle by means of high pressure air or mechanical motion. When an epoxy resin composition is sprayed for coating, the above non-aromatic thermoplastic resin preferably accounts for 0.05 to 1 part by mass, more preferably 0.1 to 0.5 part by mass, to ensure that a high spraying rate per unit time can be maintained and also that the resin flow can be reduced effectively.

On the other hand, when the epoxy resin composition is manually applied for coating, the above non-aromatic thermoplastic resin preferably accounts for 1 to 75 parts by mass, more preferably 5 to 65 parts by mass, and still more preferably 10 to 55 parts by mass, relative to the total mass, i.e. 100 parts by mass, of the non-aromatic epoxy resin of the component [A] to ensure that the cured epoxy resin will have good light shielding property and that an appropriate stickiness will be achieved either between the epoxy resin composition and the fiber reinforced composite material base precursor according to the present invention during the manual application step or between the epoxy resin composition and the surface to which the epoxy resin composition is applied. Here, the term "manual application" means, for example, the technique of putting an epoxy resin composition in a container, immersing a brush, roller, etc. in the epoxy resin composition, and applying it manually to a surface using the brush, roller, etc. or the technique of putting the epoxy resin composition on a surface and spreading it using a spatula, bar coater, etc.

On the other hand, when the epoxy resin composition is manually applied for coating, the above non-aromatic thermoplastic resin preferably accounts for 1 to 75 parts by mass, more preferably 5 to 65 parts by mass, and still more preferably 10 to 55 parts by mass, relative to the total mass, i.e. 100 parts by mass, of the non-aromatic epoxy resin of the component [A] to ensure that the cured epoxy resin will have good light shielding property and that an appropriate stickiness will be achieved either between the epoxy resin composition and the fiber reinforced composite material base precursor according to the present invention during the manual application step or between the epoxy resin composition and the surface to which the epoxy resin composition is applied. Here, the term "manual application" means, for example, the technique of putting an epoxy resin composition in a container, immersing a brush, roller, etc. in the epoxy resin composition, and applying it manually to a surface using the brush, roller, etc. or the technique of putting the epoxy resin composition on a surface and spreading it using a spatula, bar coater, etc.

Furthermore, if the above non-aromatic thermoplastic resin accounts for 20 to 75 parts by mass, preferably 30 to 65 parts by mass, and more preferably 30 to 55 parts by mass, relative to the total mass, i.e. 100 parts by mass, of all epoxy resins contained in the epoxy resin composition, it serves to produce a resin film with an appropriate tackiness.

Furthermore, if the epoxy resin composition is used to prepare a sheet shaped intermediate material, the non-aromatic thermoplastic resin should account for 20 to 75 parts by mass, preferably 30 to 65 parts by mass, and more preferably 30 to 55 parts by mass, relative to the total mass, i.e. 100 parts by mass, of all epoxy resins contained in the epoxy resin composition because it serves to produce a sheet shaped intermediate material with an appropriate tackiness.

The component [D] is a cationic curing agent or an anionic curing agent. Examples of such a cationic curing agent include 1-naphthylmethylmethyl p-hydroxyphenylsulfonium=hexafluoroantimonate, 2-methylbenzylmethyl p-hydroxyphenylsulfonium hexafluoroantimonate, benzylmethyl p-hydroxyphenylsulfonium hexafluoroantimonate, dimethyl-p-acetoxyphenyl sulfonium hexafluoroantimonate, diaryliodonium salts, boron trifluoride piperidine, boron trifluoride monoethylamine, diaryliodonium salts, and sulfonium salts.

Commercial products may be used as the above cationic curing agent. Examples include Adekaopton (registered trademark) CP-77, Adekaopton (registered trademark) CP-66 (manufactured by Adeka Corporation), CI-2639, CI-2624 (manufactured by Nippon Soda Co., Ltd.), SAN-AID (registered trademark) SI-60, SAN-AID (registered trademark) SI-80, SAN-AID (registered trademark) SI-100, SAN-AID (registered trademark) SI-150, SAN-AID (registered trademark) SI-B4, SAN-AID (registered trademark) SI-B5 (manufactured by Sanshin Chemical Industry Co., Ltd.), TA-100, IK-1PC(80) (manufactured by San-Apro Ltd.), Boron Trifluoride Piperidine, and Boron Trifluoride Monoethylamine (manufactured by Stella Chemifa Corporation). The cationic curing agent is preferably a photothermal cationic curing agent or a thermal cationic curing agent. A photothermal cationic curing agent becomes reactive when exposed to light such as ultraviolet or visible light having a wavelength not higher than a certain level or exposed to heat at a temperature not lower than a certain level, whereas a thermal cationic curing agent becomes reactive when exposed to heat. The use of a photothermal cationic curing agent is preferable because curing can be caused in a wide variety of environments while the use of a thermal cationic curing agent is preferable because high storage stability can be maintained by appropriate temperature control.

Examples of anionic curing agents include phosphorus hexafluoride, antimony hexafluoride, arsenic hexafluoride, tin hexachloride, iron tetrachloride, bismuth pentachloride, and niobium hexachloride.

The use of at least two of the curing agents listed above serves to control the reactivity of the epoxy resin composition and realize a good balance between the fast curability and the pot life of the epoxy resin composition.

If the above curing agents account for 0.1 to 10 parts by mass, preferably 1 to 5 parts by mass, and more preferably 1 to 3 parts by mass, relative to the total mass, i.e. 100 parts by mass, of all epoxy resins contained in the epoxy resin composition, it serves to ensure fast curability, reduced resin flow and volatilization, and a good balance among fast curability, pot life, and UV resistance.

The reactivity of the epoxy resin composition can be controlled by selecting a curing agent of an appropriate type in an appropriate quantity. When a fiber reinforced composite material base precursor coated with the coating agent containing an epoxy resin composition is molded, the epoxy resin composition will cure faster than the resin in the fiber reinforced composite material base precursor in the molding step. Consequently, the resin in the fiber reinforced composite material base precursor will not get into the epoxy resin composition after the end of the curing of the epoxy resin composition. Therefore, this is preferable because it can effectively prevent the resin in the fiber reinforced composite material base precursor from getting into the epoxy resin composition. Here, depending on the curing temperature of the fiber reinforced composite material base precursor, the DSC exothermic peak temperature of the coating agent is preferably lower by 40°C or more, more preferably by 60°C or more, than the curing temperature of the fiber reinforced composite material base precursor. In the case where the curing temperature of the fiber reinforced composite material base precursor is 180°C, it is preferable, from the viewpoint of handleability as well, that the coating agent have a DSC exothermic peak temperature in the range of 80°C to 120°C.

The reactivity of the epoxy resin composition can be controlled by selecting a curing agent of an appropriate type in an appropriate quantity. When a fiber reinforced composite material base coated with the coating agent containing an epoxy resin composition is molded, the epoxy resin composition will cure faster than the resin in the fiber reinforced composite material base in the molding step and the resin in the fiber reinforced composite material base will not get into the epoxy resin composition after the end of the curing of the epoxy resin composition. Therefore, this is preferable because it can effectively prevent the resin in the fiber reinforced composite material base from getting into the epoxy resin composition. Here, depending on the curing temperature of the fiber reinforced composite material base, the DSC exothermic peak temperature of the coating agent is preferably lower by 40°C or more, more preferably by 60°C or more, than the curing temperature of the fiber reinforced composite material base precursor. In the case where the curing temperature of the fiber reinforced composite material base precursor is 180°C, it is preferable, from the viewpoint of handleability as well, that the coating agent have a DSC exothermic peak temperature in the range of 80°C to 120°C.

When a fiber reinforced composite material base precursor having the sheet shaped intermediate material according to the present invention attached thereon is molded, the epoxy resin composition will cure faster than the resin in the fiber reinforced composite material base precursor in the molding step and the resin in the fiber reinforced composite material base precursor will not get into the epoxy resin composition after the end of the curing of the epoxy resin composition. Therefore, this is preferable because it can effectively prevent the resin in the fiber reinforced composite material base precursor from getting into the epoxy resin composition. Here, depending on the curing temperature of the fiber reinforced composite material base precursor, the DSC exothermic peak temperature of the coating agent is preferably lower by 40°C or more, more preferably by 60°C or more, than the curing temperature of the fiber reinforced composite material base precursor. In the case where the curing temperature of the fiber reinforced composite material base precursor is 180°C, it is preferable, from the viewpoint of handleability as well, that the coating agent have a DSC exothermic peak temperature in the range of 80°C to 120°C.

In addition, the epoxy resin composition according to the present invention can contain a thixotropic agent as the component [E]. Examples of the thixotropic agent include silicon dioxide, magnesium silicon sodium fluoride hydroxide oxide, alkyl quaternary ammonium salts, synthetic hectorite, clay minerals, modified bentonite, and mixtures of minerals and organic modified bentonite.

Commercial products may be used as the above thixotropic agent, and examples include fumed silica (Aerosil (registered trademark) (manufactured by Nippon Aerosil Co., Ltd.)), OPTIGEL (registered trademark), OPTIBENT (registered trademark), GARAMITE (registered trademark), LAPONITE (registered trademark), TIXOGEL (registered trademark), CRAYTONE (registered trademark), CLOISITE (registered trademark) (manufactured by BYK), Somasif (registered trademark) ME-100, and Micro Mica MK (manufactured by Katakura & Co-op Agri Corporation).

If the above thixotropic agent preferably accounts for 0.1 to 20 parts by mass, more preferably 0.5 to 10 parts by mass, and still more preferably 0.5 to 5 parts by mass, relative to the total mass, i.e. 100 parts by mass, of all epoxy resins contained in the epoxy resin composition, it serves to ensure a good balance between the effect of reducing the resin flow in the molding step and either stickiness of the coating agent containing the epoxy resin composition according to the present invention to the fiber reinforced composite material base precursor or that of the epoxy resin composition to the surface to which the epoxy resin composition is applied.

If the above thixotropic agent preferably accounts for 0.1 to 20 parts by mass, more preferably 0.5 to 10 parts by mass, and still more preferably 0.5 to 5 parts by mass, relative to the total mass, i.e. 100 parts by mass, of all epoxy resins contained in the epoxy resin composition, it serves to ensure a good balance between the effect of reducing the resin flow in the molding step and either stickiness of the coating agent containing the epoxy resin composition according to the present invention to the fiber reinforced composite material base or that of the epoxy resin composition to the surface to which the epoxy resin composition is applied.

If the above thixotropic agent accounts for 0.1 to 20 parts by mass, preferably 0.5 to 10 parts by mass, and more preferably 0.5 to 5 parts by mass, relative to the total mass, i.e. 100 parts by mass, of all epoxy resins contained in the epoxy resin composition, it serves to ensure a good balance between the effect of reducing the resin flow in the sheet shaped intermediate material or resin film in the molding step and the tackiness thereof.

In addition, the epoxy resin composition according to the present invention can contain a cure stabilizer as the component [F]. Examples of the cure stabilizer include 4-hydroxyphenyldimethyl sulfonium=methyl sulfate and 4-(methylthio) phenol.

Commercial products may be used as the above cure stabilizer, and examples include SAN-AID (registered trademark) SI-S and SAN-AID (registered trademark) S-ME (manufactured by Sanshin Chemical Industry Co., Ltd.).

If the above cure stabilizer preferably accounts for 0.1 to 10 parts by mass, more preferably 0.1 to 5 parts by mass, and still more preferably 0.1 to 2.5 parts by mass, relative to the total mass, i.e. 100 parts by mass, of all epoxy resins contained in the epoxy resin composition, it serves to realize a good balance between the fast curability and the pot life of the epoxy resin composition.

The epoxy resin composition according to the present invention can contain a rubber as the component [G]. Examples of the rubber include natural rubber, diene rubbers, and non-diene rubbers. Examples of the diene rubber include styrene-butadiene rubber, isoprene rubber, butadiene rubber, chloroprene rubber, and acrylonitrile-butadiene rubber. Examples of the non-diene rubber include butyl rubber, ethylene-propylene rubber, ethylene-propylene-diene rubber, urethane rubber, silicone rubber, and fluororubber. To include in the epoxy resin composition according to the present invention, non-diene rubbers are preferable, and in particular, ethylene-propylene rubber, ethylene-propylene-diene rubber, silicone rubber, and fluororubber, which have no double bonds in the polymer principal chains, are more preferable because they are high in light resistance and have less influence on the UV resistance of the epoxy resin composition according to the present invention. In regard to the form of the rubber, furthermore, it is preferably in the form of powder in particular because it can show a high dispersibility in the epoxy resin composition.

Commercial products may be used as the above rubber, and examples include KMP-598, KMP-600, KMP-601, KMP-602, KMP-605 (manufactured by Shin-Etsu Chemical Co., Ltd.), CEVIAN (registered trademark) (manufactured by Daicel Miraizu Ltd.), JSR N215SL, JSR N222SH, JSR N238H, JSR N241H, JSR N250S, PN30A, PN20HA, and N280 (manufactured by JSR Corporation).

When the epoxy resin composition is sprayed for coating, the above rubber preferably accounts for 0.05 parts by mass or more relative to the total mass, i.e. 100 parts by mass, of all epoxy resins contained in the epoxy resin composition because it has the effect of reducing the resin flow and serves to produce a cured epoxy resin composition with a high elongation percentage, which has the effect of preventing cracks from occurring after the coating step. Here, the elongation percentage means a bending strain (%) determined from three-point bending test of a cured epoxy resin composition having a predetermined shape, and spraying means a method that uses a container filled with the epoxy resin composition and atomizes the epoxy resin composition in the form of mist or foam through a nozzle by means of high pressure air or mechanical motion. The above rubber preferably accounts for 0.05 to 1 part by mass relative to the total mass, i.e. 100 parts by mass, of all epoxy resins contained in the epoxy resin composition because it ensures that a high spraying rate per unit time can be maintained and also that the resin flow can be reduced effectively.

In the case where the epoxy resin composition is manually applied for coating, furthermore, the rubber more preferably accounts for 1 to 50 parts by mass relative to the total mass, i.e. 100 parts by mass, of all epoxy resins. If the rubber accounts for 1 part by mass or more relative to the total mass, i.e. 100 parts by mass, of all epoxy resins, it has the effect of reducing the resin flow and serves to produce a cured epoxy resin composition with a high elongation percentage, which has the effect of preventing cracks from occurring after the coating step, whereas if it accounts for 50 parts by mass or less, it ensures high stickiness of the epoxy resin composition to the surface. Here, the term "manual application" means, for example, the technique of putting an epoxy resin composition in a container, immersing a brush, roller, etc. in the epoxy resin composition, and applying it manually to a surface using the brush, roller, etc. or the technique of putting the epoxy resin composition on a surface and spreading it using a spatula, bar coater, etc.

Furthermore, in the case where the epoxy resin composition is used to prepare a sheet shaped intermediate material, the rubber preferably accounts for 5 to 50 parts by mass relative to the total mass, i.e. 100 parts by mass, of all epoxy resins. If the rubber accounts for 5 parts by mass or more relative to the total mass, i.e. 100 parts by mass, of all epoxy resins, it has the effect of reducing the resin flow and serves to produce a cured epoxy resin composition with a high elongation percentage, which has the effect of preventing cracks from occurring after the coating step, whereas if it accounts for 50 parts by mass or less, it ensures high stickiness of the sheet shaped intermediate material to the surface.

From the viewpoint of the work environment and accurate control of the thickness after the molding step, the coating agent for spraying or manual application that contains the epoxy resin composition according to the present invention preferably undergoes only a 10% or less volatilization when left for 1 hour in an environment at 180°C.

From the viewpoint of ensuring high UV resistance and protection of a coated surface from UV, it is preferable for a cured product of the epoxy resin composition according to the present invention to be free of changes in color when exposed to 1,000 kJ/m$^2$ irradiation with UV in the wavelength range of 300 to 400 nm. For the present invention, being free of changes in color means showing a color difference ΔE*ab of 4 or less between before and after UV irradiation, wherein the color difference ΔE*ab is determined by irradiating a cured epoxy resin composition with 1,000 kJ/m$^2$ of ultraviolet light in the wavelength range of 300 to 400 nm and measuring the colorimetric value before and after the irradiation by a polyilluminant spectrophotometer.

The coating agent for spraying or manual application that includes the epoxy resin composition according to the present invention can be heat-cured after being applied to a metal surface or can be heat-cured together with an uncured prepreg, RTM material, or resin film infusion (RFI) material (for the present invention, referred to as fiber reinforced composite material base precursor) generally used to produce fiber reinforced composite materials, after being applied to the outermost surface thereof. Here, the prepreg is a fiber reinforced composite material base precursor prepared by impregnating reinforcing fibers with a thermosetting resin such as epoxy resin; the RTM material is a fiber reinforced composite material base precursor prepared by laying a reinforcing fiber base material on a mold and injecting a liquid thermosetting resin thereon to impregnate the reinforcing fiber base material therewith; and the RFI material is a fiber reinforced composite material base precursor prepared by laying a thermosetting resin film on a reinforcing fiber base material and then heating and pressing the layered body to impregnate the reinforcing fiber base material with the thermosetting resin. When coating a metal surface, it may be good to first apply a silane coupling agent on the metal surface before coating it, treat it with light or heat, and then coat the metal surface with the epoxy resin composition. If such treatment with a silane coupling agent is performed, the silane coupling acts as a bridge between the metal surface and the coating agent that contains the epoxy resin composition according to the present invention to ensure improved adhesiveness between the metal surface and the coating agent and improved wettability of the coating agent on the metal surface. As a result of its curing, the cured epoxy resin composition covers the surface of the fiber reinforced composite material base precursor after the curing, thereby forming an integrated fiber reinforced composite material.

Preferred examples of the reinforcing fiber to use in the fiber reinforced composite material base precursor include various carbon fibers, graphite fiber, glass fiber, and aramid fiber.

The coating agent for spraying or manual application that includes the epoxy resin composition according to the present invention can work effectively when applied to a fiber reinforced composite material base precursor and heat-cured together. Here, the epoxy resin composition may be applied by spraying or it may be manually applied using a brush, bar coater, or the like. In addition, if vacuum drawing is performed using a mold releasing film etc. after manual application, it will serve to develop increased stickiness of the coating agent for spraying or manual application that includes the epoxy resin composition according to the present invention to the fiber reinforced composite material base precursor.

There are various methods useful to coat a surface with the epoxy resin composition according to the present invention. For example, a method uses a container filled with the epoxy resin composition and atomizes the epoxy resin composition in the form of mist or foam through a nozzle by means of high pressure air or mechanical motion or another method uses a brush, roller, etc. immersed in the epoxy resin composition to apply it to a surface. In addition, the use of a bar coater, spatula, or the like can also serve to coat a surface with the coating agent according to the present invention. Any of the coating methods may be used while heating the epoxy resin composition as required to reduce the viscosity.

As described above, there are various coating methods useful to coat a surface with the coating agent for spraying or manual application that includes the epoxy resin composition according to the present invention, but the practicality of these coating methods depends on the viscosity of the epoxy resin composition at room temperature. Spray coating is preferable for an epoxy resin composition having a viscosity of 100 to 500 mPa•s at room temperature. In the case of performing spraying coating, the resin flow is reduced at room temperature to allow the coating agent to have a uniform thickness if the viscosity at room temperature is 100 mPa•s or less, whereas the epoxy resin composition can be applied without causing clogging to ensure high workability if the viscosity at room temperature is 500 m•Pa or less.

Manual application with a roller, brush, etc. is preferable if the epoxy resin composition has a viscosity of more than 0.5 Pa•s and 30 Pa•s or less at room temperature. The viscosity at room temperature of the epoxy resin composition is preferably more than 0.5 Pa•s because its dripping can be prevented in the coating step, whereas the immersion of a brush, roller, or the like in the epoxy resin composition can be performed easily to ensure high workability if it is 30 Pa•s or less.

If the viscosity at room temperature of the epoxy resin composition is more than 30 Pa•s and 30,000 Pa•s or less, manual application with a spatula, bar coater, or the like is preferable. In the case of performing manual application for coating, the viscosity at room temperature of the epoxy resin composition is preferably more than 30 Pa•s because it has the effect of strongly reducing the resin flow in the epoxy resin composition during the curing step. Furthermore, it is preferable for the viscosity at room temperature of the epoxy resin composition to be 30,000 Pa•s or less because it ensures strong stickiness between the epoxy resin composition and the fiber reinforced composite material base precursor and high adhesiveness between the epoxy resin composition and the fiber reinforced composite material after the curing step.

In the case where the coating agent for spraying or manual application that includes the epoxy resin composition according to the present invention is applied to the fiber reinforced composite material base precursor, it is preferable for the areal weight to be in the range of 30 to 300 g/m$^2$. If the areal weight of the epoxy resin composition is 30 g/m$^2$ or more, the surface of the fiber reinforced composite material can be covered so that it cannot be seen through, thereby ensuring sufficient light resistance. On the other hand, the areal weight of the epoxy resin composition is preferably 300 g/m$^2$ or less because heat generation during curing of the epoxy resin composition is suppressed when molded together with the fiber reinforced composite material.

As a molding method for the coating agent for spraying or manual application that includes the epoxy resin composition according to the present invention and the fiber reinforced composite material, it is good to apply it over the outermost surface of a fiber reinforced composite material base precursor and cure them together. The above coating agent that contains the epoxy resin composition according to the present invention may be applied, in an appropriate form, over the outermost surface of a fiber reinforced composite material base precursor, and they are pressed and heated to cure the resin contained in the coating agent that contains the epoxy resin composition according to the present invention and in the fiber reinforced composite material base precursor, thereby producing a fiber reinforced composite material. Here, the application of heat and pressure is carried out by using an appropriate method such as the press molding method, autoclave molding method, vacuum bagging molding method, wrapping tape molding method, and internal pressure molding method.

The sheet shaped intermediate material according to the present invention can be heat-cured together with an uncured prepreg, RTM material, or resin film infusion (RFI) material (for the present invention, referred to as fiber reinforced composite material base precursor) generally used to produce fiber reinforced composite materials, after being applied to the outermost surface thereof. Here, the prepreg is a fiber reinforced composite material base precursor prepared by impregnating reinforcing fibers with a thermosetting resin such as epoxy resin; the RTM material is a fiber reinforced composite material base precursor prepared by laying a reinforcing fiber base material on a mold and injecting a liquid thermosetting resin thereon to impregnate the reinforcing fiber base material therewith; and the RFI material is a fiber reinforced composite material base precursor prepared by laying a thermosetting resin film on a reinforcing fiber base material and then heating and pressing the layered body to impregnate the reinforcing fiber base material with the thermosetting resin. As a result of its curing, the cured sheet shaped intermediate material covers the surface of the fiber reinforced composite material base precursor after the curing, thereby forming an integrated fiber reinforced composite material.

The sheet shaped intermediate material according to the present invention is mainly formed of a metal foil or metal mesh, which acts as support, impregnated or coated with an epoxy resin composition, which contains a thermosetting resin. Here, only one surface of the metal foil or metal mesh may be impregnated or coated with the epoxy resin composition, or both surfaces may be impregnated or coated therewith. If the epoxy resin composition exists on only one side, the sheet shaped intermediate material will be easy to handle when attaching it because it is less likely to stick to the hand. On the other hand, if the epoxy resin composition exists on both sides, it is advantageous in that both surfaces are tacky and easily attached not only to the fiber reinforced composite material base precursor, which acts as parent material, but also to the tool face. In addition, the epoxy resin composition may also exist in holes or notches in the metal foil or spaces in the mesh.

A variety of methods are available to produce the sheet shaped intermediate material according to the present invention. For example, a sheet shaped intermediate material can be produced by the wet method in which an epoxy resin composition is dissolved in an organic solvent selected from the group consisting of acetone, methyl ethyl ketone, and methanol to reduce its viscosity and used to impregnate a metal foil or a metal mesh or by the hot melt method in which an epoxy resin composition is heated to reduce its viscosity without using an organic solvent and used to impregnate a metal foil or metal mesh.

To carry out the wet method, a metal foil or a metal mesh may be immersed in a liquid containing an epoxy resin composition and after pulling it out, the organic solvent is evaporated using an apparatus such as oven to provide a sheet shaped intermediate material.

To carry out the hot melt method, an epoxy resin composition may be heated to reduce its viscosity and used to directly impregnate a metal foil or a metal mesh, or a resin film-coated release paper sheet, which is composed of release paper or the like coated with an epoxy resin composition (for the present invention, a material prepared by coating release paper with an epoxy resin composition is referred to as release paper-carrying resin film while an isolated epoxy resin composition in the form of a sheet is referred to as resin film) is prepared first and then such release paper-carrying resin film is attached to either surface or both surfaces of a metal foil or a metal mesh, followed by heating and pressing them to allow the metal foil or the metal mesh to be impregnated with the epoxy resin composition.

For the production of the sheet shaped intermediate material according to the present invention, it is preferable to use the hot melt method to impregnate a metal foil or a metal mesh with an epoxy resin composition because the resulting sheet shaped intermediate material will be free of organic solvent residues. There are no particular limitations on the width of the sheet shaped intermediate material according to the present invention. Thus, a wide sheet with a width of more than 1 m may be attached manually, or it may be cut into tapes with a width of 1 inch or less and attached using an automatic lamination machine.

A sheet shaped intermediate material can be prepared from a preliminarily cured resin film. Preliminary curing can be performed by heating, light irradiation, etc. Heating may be performed by using an oven, IR heater, etc. or bringing the release paper side of the resin film into contact with a heated plate. For the preliminary curing, the oven, furnace, IR heater, heated plate, etc. preferably has a temperature of 40°C to 200°C. If their temperature is 40°C or more, the preliminary curing period can be short whereas if it is 200°C or less, the resin film can be preliminarily cured uniformly. When preliminary curing of a resin film is performed by light irradiation, there are no particular limitations on the wavelength of the light to be used, but it is preferable to adopt an ultraviolet light beam of 100 to 400 nm where common light curing agents absorb ultraviolet light. Depending on the curing temperature and illuminance of the ultraviolet light or visible light in use, it is preferable for preliminary curing to be performed over a period of 0.005 to 24 hours from the viewpoint of ensuring film uniformity. When light or heat is used for curing, the resin film may be cured to such an extent that the surface layer becomes no longer flowable, or the degree of cure may be controlled appropriately so that the surface layer has some flowability.

A support may be first impregnated with a resin film elsewhere, followed by impregnating a metal foil or a mesh with the resin film carried on the support to prepare a sheet shaped intermediate material.

For the sheet shaped intermediate material according to the present invention, it is preferable for the metal foil or the metal mesh to have a weight per unit area of 5 to 300 $g/m^2$. If the metal foil or metal mesh has a weight of 5 $g/m^2$ or more, it will not be broken easily when used as support for an epoxy resin composition, and accordingly, it leads to high handleability to ensure easy operations. On the other hand, if the metal foil or metal mesh has a weight of 300 $g/m^2$ or less, it will be easy to produce a sheet shaped intermediate material with increased drapability.

In the sheet shaped intermediate material according to the present invention, the metal foil or the metal mesh preferably accounts for 1 to 80 mass%, more preferably 3 to 60 mass%, and still more preferably 5 to 30 mass%. The content of the metal foil or the metal mesh is preferably 1 mass% or more because the quantity of the resin will not be excessively large, and accordingly, it will be easy to produce a sheet shaped intermediate material that is so high in specific strength and specific elastic modulus that it can exhibits its advantage of high handleability. In addition, a good balance between heat generation in the resin curing step and heat release from the metal support can be realized when it is molded with a fiber reinforced composite material. On the other hand, if the content of the metal foil or metal mesh is 80 mass% or less, poor impregnation with the resin is less likely to occur and void generation in the sheet shaped intermediate material during the molding step is reduced.

The areal weight of the epoxy resin composition is preferably 30 to 300 $g/m^2$. If the areal weight of the epoxy resin composition is 30 $g/m^2$ or more, pinholes will not be formed and it will be possible for the epoxy resin composition to cover the support uniformly, making it difficult to break. On the other hand, if the areal weight of the epoxy resin composition is 300 $g/m^2$ or less, it will be easy to produce a sheet shaped intermediate material with increased drapability.

As a molding method for the sheet shaped intermediate material according to the present invention, it is good to attach it to the outermost surface of the fiber reinforced composite material base precursor and cure them together. The sheet shaped intermediate material according to the present invention may be attached, in an appropriate form, to the outermost surface of a fiber reinforced composite material base precursor, and they are pressed and heated to cure the resin, thereby producing a fiber reinforced composite material. Here, the application of heat and pressure is carried out by using an appropriate method such as the press molding method, autoclave molding method, vacuum bagging molding method, wrapping tape molding method, and internal pressure molding method.

The epoxy resin composition according to the present invention may be applied over the outermost surface of a prepreg, RTM material, or resin film infusion (RFI) material designed for production of fiber reinforced composite material (for the present invention, referred to as fiber reinforced composite material base precursor) and a semi-cured (significantly cured) or completely cured composite material (for the present invention, referred to as fiber reinforced composite material base), followed by photo-curing the resin applied over the outermost surface using an appropriate light source. Subsequently, as required, an epoxy resin layer formed on the outermost surface may be heated for post-curing, or the uncured resin contained in the fiber reinforced composite material base precursor may be further cured (for the present invention, a body formed by applying an epoxy resin composition over the surface of a fiber reinforced composite material base and then photo-curing the epoxy resin composition is referred to as fiber reinforced composite intermediate, and a body formed by further curing the fiber reinforced composite intermediate is referred to as fiber reinforced composite material). Here, the prepreg is a fiber reinforced composite material base precursor prepared by impregnating reinforcing fibers with a thermosetting resin such as epoxy resin; the RTM material is a fiber reinforced composite material base precursor prepared by laying a reinforcing fiber base material on a mold and injecting a liquid thermosetting resin thereon to impregnate the reinforcing fiber base material therewith; and the RFI material is a fiber reinforced composite material base precursor prepared by laying a thermosetting resin film on a reinforcing fiber base material and then heating and pressing the layered body to impregnate the reinforcing fiber base material with the thermosetting resin. The degree of cure of the fiber reinforced composite material base is preferably more than 0% and 70% or less because the resin contained in the reinforced composite material base is not in a completely cured state and it can be expected to form chemical bonds with the coating agent that includes the epoxy resin composition according to the present invention. Accordingly, it leads to improved adhesiveness between the coating agent and the fiber reinforced composite material base in the fiber reinforced composite material. In the case of a fiber reinforced composite material base with a degree of cure of more than 70%, it is preferable that the surface be roughened by polishing or plasma treatment to physically achieve improved adhesiveness between the coating agent and the fiber reinforced composite material base in the resulting fiber reinforced composite material. The degree of cure is preferably 20% to 100% because it serves to reduce the amount of the resin contained in the fiber reinforced composite material base to be mixed with the coating agent that contains the epoxy resin composition according to the present invention in the molding step. Accordingly, the degree of cure is more preferably 20% to 70% in order to achieve a good balance between the adhesiveness between the coating agent and the fiber reinforced composite material base in the fiber reinforced composite material and the effect of reducing the amount of the resin contained in the fiber reinforced composite material base to be mixed with the coating agent that contains the epoxy resin composition according to the present invention in the molding step.

The epoxy resin composition according to the present invention can form a fiber reinforced composite material having a highly UV resistant surface when it is applied to a fiber reinforced composite material base, photo-cured, and then heat-cured. Here, the epoxy resin composition may be applied by spraying or it may be applied manually using a brush, bar coater, or the like. In addition, if vacuum drawing is performed using a mold releasing film etc. after manual application, it will serve to develop increased stickiness of the epoxy resin composition according to the present invention to the fiber reinforced composite material base.

There are various methods useful to coat a surface with the epoxy resin composition according to the present invention. For example, the epoxy resin composition may be dissolved in an organic solvent selected from the group consisting of acetone, methyl ethyl ketone, and methanol to reduce its viscosity or the epoxy resin composition may be used as it is in order to perform spraying to coat a fiber reinforced composite material base. As another method, a roller, brush, or the like immersed in the epoxy resin composition according to the present invention may be used to coat a fiber reinforced composite material base. Furthermore, a bar coater, spatula, or the like may also be used to apply the epoxy resin composition according to the present invention to a fiber reinforced composite material base. Any of the coating methods may be used while heating the epoxy resin composition as required to reduce the viscosity.

As described above, there are a variety of methods useful to coat a surface with the epoxy resin composition according to the present invention, but the practicality of these coating methods depends on the viscosity of the epoxy resin composition at room temperature. Spray coating is preferable for an epoxy resin composition having a viscosity of 100 to 500 mPa•s at room temperature. In the case of performing spraying coating, the resin flow is prevented at room temperature to allow the coating agent to have a uniform thickness if the viscosity at room temperature is 100 mPa•s or more, whereas the epoxy resin composition can be applied without causing clogging to ensure high workability if the viscosity at room temperature is 500 m•Pa or less.

Manual application with a roller, brush, or the like is preferable when the epoxy resin composition according to the present invention has a viscosity of 0.5 to 30 Pa•s at room temperature. When coating is performed with a brush, roller, or the like, the viscosity at room temperature of the epoxy resin composition is preferably 0.5 Pa•s or more because its dripping can be prevented in the coating step, whereas the immersion of a brush, roller, or the like in the epoxy resin composition can be performed easily to ensure high workability if it is 30 Pa•s or less.

If the viscosity at room temperature of the epoxy resin composition according to the present invention is more than 30 Pa•s and 30,000 Pa•s or less, manual application with a spatula, bar coater, or the like is preferable. In the case of performing manual application for coating, the viscosity at room temperature of the epoxy resin composition is preferably more than 30 Pa•s because it has the effect of strongly reducing the resin flow in the epoxy resin composition during the molding step. Furthermore, it is preferable for the viscosity at room temperature of the epoxy resin composition to be 30,000 Pa•s or less because it ensures strong stickiness between the epoxy resin composition and the fiber reinforced composite material base and high adhesiveness between the coating agent and the fiber reinforced composite material base in the fiber reinforced composite material.

In the case where the epoxy resin composition according to the present invention is applied to a fiber reinforced composite material base, it preferably has an areal weight in the range of 30 to 300 g/m$^2$. If the areal weight of the epoxy resin composition is 30 g/m$^2$ or more, the surface of the fiber reinforced composite material can be covered so that it cannot be seen through, thereby ensuring sufficient UV resistance. On the other hand, the areal weight of the epoxy resin composition is preferably 300 g/m$^2$ or less because heat generation caused by the curing of the epoxy resin composition is suppressed when molded together with a fiber reinforced composite material base.

The production method according to the present invention includes a step for applying the epoxy resin composition according to the present invention over the surface of a fiber reinforced composite material base such as prepreg, RTM material, and RFI material and a step for photo-curing the applied epoxy resin composition. Preferred examples of the reinforcing fiber to use in the fiber reinforced composite material base precursor or the fiber reinforced composite material base include various carbon fibers, graphite fiber, glass fiber, and aramid fiber. The use of this method to produce a fiber reinforced composite material is preferable because it serves to reduce the amount of the resin contained in the fiber reinforced composite material base to be mixed with the coating agent that includes the epoxy resin composition according to the present invention during the molding step. In addition, a fiber reinforced composite material base prepared by this method can be processed into a fiber reinforced composite material with a UV resistant surface by pressing and heating it to achieve complete curing.

There are various methods useful to adjust the degree of cure of the fiber reinforced composite material base, but when adopting prepregs in particular, it may be molded by heating and pressing using a method such as the press molding method, autoclave molding method, vacuum bagging molding method, wrapping tape molding method, internal pressure molding method, and pultrusion molding method. There are also various known methods that serve to adjust the degree of cure of RTM materials. Depending on the characteristics of the thermosetting resin used in the RTM material, good methods include VaRTM in which resin is injected by means of a vacuum pressure and HP-RTM in which resin is injected after being compressed under a high pressure, and the degree of cure is adjusted by controlling the temperature and time of the pre-treatment step. To perform the adjustment, it is preferable to adopt a multiple stage treatment technique in which the curing temperature is changed in stages because it ensures stable adjustment of the degree of cure and also serves to provide a fiber reinforced composite material suffering from less void formation. In addition, the degree of cure of a demolded RTM material can also be adjusted by heating in an oven. For a fiber reinforced composite material base, a degree of cure of 30% to 70% is preferable in order to produce a fiber reinforced composite material in which high adhesiveness is achieved between the coating agent and the fiber reinforced composite material base, and a degree of 80% to 100% is preferable in order to prevent a significant strain from occurring after the post-curing step.

There are also various known methods to perform post-curing, and those that can be used suitably include, for example, heating in an autoclave, oven, press, or the like, in combination with compression as required. Post-curing may be performed on a mold made of metal, FRP, gypsum, or wood or may be performed in a free standing state without using a mold. The optimum curing temperature depends on the curing agent and curing catalyst used with the resin in the reinforced composite material base, but it is preferably performed at a temperature of 100°C to 200°C from the viewpoint of preventing strain and creases from being caused by thermal stress and maintaining stickiness between the resin layer formed on the outermost surface and the fiber reinforced composite material base.

If after applying the coating agent, excess coating agent that is dripping off is scraped off using a spatula or the like, it will have a favorable effect on the surface quality of the molded product. In addition, if the surface of a fiber reinforced composite material base having a degree of cure appropriately adjusted in pre-treatment prior to the UV curing step is roughened by polishing or plasma treatment, it serves to ensure stronger stickiness between the coating agent and the fiber reinforced composite material base and higher adhesiveness between the coating agent and the fiber reinforced composite material base in the fiber reinforced composite material. Furthermore, if the surface of the coating agent is roughened after the photo-curing step by polishing or plasma treatment, it serves to ensure a higher adhesiveness between the coating agent and the paint agent or primer used to cover the coating agent.

The epoxy resin composition according to the present invention is, for example, applied over release paper in a sheet-like form to prepare a resin film, and then this release paper-carrying resin film is attached to a mold, followed by removing the release paper and photo-curing the resin film covering the surface using an appropriate light source (for the present invention, a material prepared by coating release paper with an epoxy resin composition is referred to as release paper-carrying resin film while an isolated epoxy resin composition in the form of a sheet is referred to as resin film. Hereinafter, photo-curing may also be referred to as curing with UV or UV curing). When light is used for curing, the resin film may be cured to such an extent that the surface layer becomes no longer flowable, or the degree of cure may be controlled appropriately so that the surface layer has some flowability. Curing of the resin film to such an extent that the surface layer becomes no longer flowable is preferable because it serves to reduce the amount of the resin contained in the fiber reinforced composite material base to be mixed with the resin film, and controlling the degree of cure appropriately so that the surface layer has some flowability is preferable because it serves to ensure stronger stickiness between the coating agent and the fiber reinforced composite material base in the fiber reinforced composite intermediate and higher adhesiveness between the resin film and the fiber reinforced composite material base in the fiber reinforced composite material. Here, the degree of cure of the resin film in the photo-curing step can be determined by recording DSC heating curves before and after the photo-curing step and calculating the ratio between the residual exothermic reaction peak measured after the photo-curing step and the exothermic reaction peak measured before the photo-curing step. A sheet-like support can be used to improve the handleability of the resin film. The support to use is not particularly limited as long as it can hold the resin film, and for example, a release paper such as described above may be adopted. If the areal weight of the support is 5 to 50 $g/m^2$, it serves to allow the resin film to have a high handleability. The support will not be broken easily during handling if the areal weight of the support is 5 $g/m^2$ or more whereas the resin film will have a high shapeability if it is 50 $g/m^2$ or less. The mold to use may have any appropriate shape, and it may be made of such material as metal, FRP, plaster, and wood. A prepreg, RTM material, or resin film infusion (RFI) material designed for production of fiber reinforced composite material (for the present invention, referred to as fiber reinforced composite material base precursor) and a semi-cured (significantly cured) or completely cured composite material (for the present invention, referred as fiber reinforced composite material base) are laid on a resin film photo-cured on a mold and subsequently the layered body is then post-cured by heating and/or pressing as required, thereby providing a fiber reinforced composite material with a surface having high UV resistance and UV shielding property (for the present invention, a body formed by laying a fiber reinforced composite material base on a photo-cured resin film is referred as fiber reinforced composite intermediate, and a body formed by further curing the fiber reinforced composite intermediate is referred to as fiber reinforced composite material). Here, of the various fiber reinforced composite material bases, the prepreg is a sheet-like fiber reinforced composite material base precursor prepared by impregnating a fiber (for the present invention, a fiber used to form a fiber reinforced composite material base precursor or a fiber reinforced composite material base is referred to as reinforcing fiber) with a thermosetting resin such as epoxy resin; the RTM material is a fiber reinforced composite material base precursor prepared by laying a reinforcing fiber base material on a mold and injecting a liquid thermosetting resin thereon to impregnate the reinforcing fiber base material therewith; and the RFI material is a fiber reinforced composite material base precursor prepared by laying a thermosetting resin film on a reinforcing fiber base material and then heating and/or pressing the layered body to impregnate the reinforcing fiber base material with the thermosetting resin.

Such a resin film may be preliminarily cured by heating. Heating may be performed by using an oven, IR heater, etc. or bringing the release paper side of a release paper-carrying resin film into contact with a heated plate. For the preliminary curing, the oven, furnace, IR heater, heated plate, etc. preferably has a temperature of 40°C to 200°C. Their temperature is preferably 40°C or more because the preliminary curing period can be short whereas if a temperature of 200°C or less is preferable because the resin film can be preliminarily cured uniformly.

The degree of cure of the fiber reinforced composite material base is preferably in the range of 0% to 60% because the resin contained in the reinforced composite material base is not in a completely cured state to ensure high shapeability and it can be expected to form chemical bonds with the resin film that includes the epoxy resin composition according to the present invention. Accordingly, it leads to improved adhesiveness between the resin film and the fiber reinforced composite material base in the fiber reinforced composite material. In the case of a fiber reinforced composite material base with a degree of cure of more than 60%, it is preferable that the surface be roughened by polishing treatment and/or plasma treatment to physically achieve improved adhesiveness between the resin film and the fiber reinforced composite material base in the fiber reinforced composite material. The degree of cure is preferably 20% to 100% because it serves to reduce the amount of the resin contained in the fiber reinforced composite material base to be mixed with a resin film that includes the epoxy resin composition according to the present invention in the molding step. Accordingly, the degree of cure is more preferably 20% to 60% in order to achieve a good balance between the adhesiveness between the resin film and the fiber reinforced composite material base in the fiber reinforced composite material and the effect of reducing the amount of the resin contained in the fiber reinforced composite material base to be mixed with a resin film that includes the epoxy resin composition according to the present invention in the molding step.

There are various methods useful to process the epoxy resin composition according to the present invention into a sheet to provide a photo-curable resin film. In the wet process, for example, an epoxy resin composition is dissolved in an organic solvent selected from the group consisting of acetone, methyl ethyl ketone, and methanol to reduce its viscosity and applied to a sheet of release paper, followed by evaporating the organic solvent to produce a film, and in the hot-melt process, the viscosity is reduced by heating instead of using an organic solvent and applied to a sheet of release paper to produce a film.

The resin film according to the present invention preferably has an areal weight of 30 to 300 g/m$^2$. If the areal weight of the resin film is 30 g/m$^2$ or more, the surface of the fiber reinforced composite material can be covered so that it cannot be seen through, thereby ensuring sufficient UV resistance. On the other hand, the areal weight of the resin film is preferably 300 g/m$^2$ or less because heat generation caused by the curing of the epoxy resin composition is suppressed when molded together with a fiber reinforced composite material base.

In the production method according to the present invention, a resin film including the epoxy resin composition is attached to a mold and photo-cured, and then a fiber reinforced composite material base such as a prepreg, RTM material, and RFI material is laid on the photo-cured resin film to produce a fiber reinforced composite intermediate. There are various methods useful to mold the fiber reinforced composite intermediate.

In the case where an untreated prepreg or RFI material is used as fiber reinforced composite material base, it is molded by heating and/or pressing using the press molding method, autoclave molding method, vacuum bagging molding method, wrapping tape molding method, internal pressure molding method, pultrusion molding method, or the like to produce a cured fiber reinforced composite intermediate. In the case of a RFI material, a thermosetting resin film is laid on a photo-cured resin film, and a reinforcing fiber base material is laid on top thereof to prepare a fiber reinforced composite intermediate, which is then molded by heating and pressing to provide a cured fiber reinforced composite intermediate. For a RTM material, reinforcing fibers are laid on a photo-cured resin film (preform) and then a resin is injected by means of a vacuum pressure in the case of the VaRTM method, or a resin is injected after compressing it by means of high pressure in the case of the HP-RTM method, followed by molding it by heating and pressing to produce a cured fiber reinforced composite intermediate.

It is preferable for the surface of the photo-cured resin film to be roughened by polishing treatment and/or plasma treatment because it can ensure stronger stickiness to the fiber reinforced composite material base that will be laid thereon subsequently and higher adhesiveness between the resin film and the fiber reinforced composite material base after the molding step.

The degree of cure of the fiber reinforced composite material base can be adjusted beforehand, and there are various methods useful to adjust the degree of cure, but when adopting prepregs in particular, it may be molded by heating and/or pressing using a method such as the press molding method, autoclave molding method, vacuum bagging molding method, wrapping tape molding method, internal pressure molding method, and pultrusion molding method. There are also various known methods that serve to adjust the degree of cure of RTM materials. Depending on the characteristics of the thermosetting resin used in the RTM material, good methods include VaRTM in which resin is injected by means of a vacuum pressure and HP-RTM in which resin is injected after being compressed under a high pressure, and the degree of cure is adjusted by controlling the temperature and time of the pre-treatment step. To perform the adjustment, it is preferable to adopt a multiple stage treatment technique in which the curing temperature is changed in stages because it ensures stable adjustment of the degree of cure and also serves to provide a fiber reinforced composite material suffering from less void formation. In addition, the degree of cure of a demolded RTM material can also be adjusted by heating in an oven.

Preferred examples of the reinforcing fiber to use in the fiber reinforced composite material base precursor or the fiber reinforced composite material base include various carbon fibers, graphite fiber, glass fiber, and aramid fiber. The use of the method according to the present invention to produce a fiber reinforced composite material is preferable because it serves to reduce the amount of the resin contained in the fiber reinforced composite material base to be mixed with a resin film that includes the epoxy resin composition according to the present invention during the molding step. In addition, a fiber reinforced composite material base prepared by the method according to the present invention can be processed into a fiber reinforced composite material with a surface having UV resistance and UV shielding property by pressing and heating it to achieve complete curing.

There are also various known methods to perform post-curing, and those that can be used suitably include, for example, heating in an autoclave, oven, press, or the like, in combination with compression as required. Post-curing may be performed on a mold or may be performed in a free standing state without using a mold. The optimum curing temperature depends on the curing agent and curing catalyst used with the resin in the reinforced composite material base, but it is preferably performed at a temperature of 100°C to 200°C from the viewpoint of preventing strain and creases from being caused by thermal stress and maintaining stickiness between the resin layer formed on the outermost surface and the fiber reinforced composite material base.

Thus, for the fiber reinforced composite material produced by molding a fiber reinforced composite intermediate, roughening its resin film surface by polishing treatment and/or plasma treatment ensures increased adhesiveness between the surface of the fiber reinforced composite material and the paint agent, primer, etc. used to cover it.

EXAMPLES

The invention is described in more detail below with reference to examples. However, it is noted that the scope of the present invention is not limited to these examples. Determination of various characteristics was performed in an environment at a temperature of 23°C and a relative humidity of 50% unless otherwise specified.

<Materials used in examples and comparative examples>

(1) Aromatic epoxy resin

- bisphenol A type epoxy resin (jER (registered trademark) 828, manufactured by Mitsubishi Chemical Corporation), epoxy equivalent 175 (g/eq)

(2) Component [A] non-aromatic epoxy resin

- (3',4'-epoxycyclohexane)methyl 3,4-epoxycyclohexane carboxylate (CELLOXIDE (registered trademark) 2021P, manufactured by Daicel Corporation), epoxy equivalent weight 136 (g/eq)

- 1,2-epoxy-4-(2-oxiranyl)cyclohexane addition product of 2,2-bis(hydroxymethyl)-1-butanol (EHPE3150, manufactured by Daicel Corporation)
- epsilon-caprolactone modified tetra(3,4-epoxycyclohexylmethyl) butanetetracarboxylate (EPOLEAD (registered trademark) GT401, manufactured by Daicel Corporation)
- diglycidyl ether of 2,2-bis(4-hydroxycyclohexyl) propane (YX8000, manufactured by Mitsubishi Chemical Corporation)

(3) Component [B] pigment

- titanium oxide (rutile type) (Ti-Pure (registered trademark) R-960, manufactured by Chemours Kabushiki Kaisha, average particle size 0.5 $\mu$m)

(4) Component [C] non-aromatic thermoplastic resin

- polyvinyl formal (Vinylec (registered trademark) K, manufactured by JNC, calculated molecular weight 40,000 to 54,000 g/mol)
- polyvinyl formal (Vinylec (registered trademark) E, manufactured by JNC, calculated molecular weight 95,000 to 134,000 g/mol)
- polyvinyl acetoacetal (S-Lec (registered trademark) KS-10, manufactured by Sekisui Chemical Co., Ltd., calculated molecular weight 17,000 g/mol)
- polyvinyl butyral (S-Lec (registered trademark) BX-L, manufactured by Sekisui Chemical Co., Ltd., calculated molecular weight 18,000 g/mol)

(5) Component (D) cationic curing agent

- dimethyl-p-acetoxyphenylsulfonium hexafluoroantimonate (SAN-AID (registered trademark) SI-150, manufactured by Sanshin Chemical Industry Co., Ltd.)
- benzylmethyl p-hydroxyphenylsulfonium hexafluoroantimonate (SAN-AID (registered trademark) SI-100, manufactured by Sanshin Chemical Industry Co., Ltd.)

(6) Component [E] thixotropic agent

- fumed silica (AEROSIL (registered trademark) RY200S, manufactured by Nippon Aerosil Co., Ltd.)
- alkyl ammonium clay (GARAMITE (registered trademark) 1958, manufactured by BYK)

(7) Component (F) cure stabilizer

- 4-hydroxyphenyldimethyl sulfonium=methyl sulfate (SAN-AID (registered trademark) SI-S, manufactured by Sanshin Chemical Industry Co., Ltd.)
- 4-(methylthio)phenol (SAN-AID (registered trademark) S-ME, manufactured by Sanshin Chemical Industry Co., Ltd.)

(8) Component (G) rubber

- silicone rubber powder (KPM-601, manufactured by Shin-Etsu Chemical Co., Ltd.)

(9) Metal foil

- pure copper (C1020, manufactured by Takeuchi Metal Foil & Powder Co., Ltd.)

(10) Uncured prepreg and preform material

- T800S/3900-2B (continuous fiber) prepreg (manufactured by Toray Industries, Inc.)
- T300/3631-2 woven fabric (plain weave) prepreg (manufactured by Toray Industries, Inc.)
- T300 woven fabric (plain weave) (manufactured by Toray Industries, Inc.)

<Preparation method and evaluation method for epoxy resin composition, resin film, sheet shaped intermediate material, fiber reinforced composite material base, fiber reinforced composite intermediate, and fiber reinforced composite material>

The epoxy resin composition, resin film, sheet shaped intermediate material, fiber reinforced composite material base, fiber reinforced composite intermediate, and fiber reinforced composite material prepared in each example and comparative example were evaluated by the methods described below.

(1) Preparation of epoxy resin composition

An epoxy resin for the component [A], an aromatic epoxy resin if required, a pigment for the component [B], a thixotropic agent for the component [E] if required, and a rubber for the component [G] if required as listed in Tables 1 to 28 were fed to a triple roll mill and mixed at an appropriate roll rotating speed to prepare a powdery mixture precursor. The powdery mixed precursor and a non-aromatic thermoplastic resin for the component [C] were fed into a mixer and heated while mixing to dissolve the non-aromatic thermoplastic resin. Then, while continuing the kneading, the temperature was lowered down to 60°C or less, and then a cationic curing agent for the component [D] and a cure stabilizer for the component [F] if required were added and stirred to provide an epoxy resin composition.

(2) Measurement of viscosity at room temperature of epoxy resin composition

The viscosity at room temperature of the epoxy resin composition prepared in the above section (1) was measured by using a dynamic viscoelasticity measuring machine (ARES-2KFRTN1-FCO-STD, manufactured by TA Instruments) equipped with flat parallel plates with a diameter of 40 mm installed on the upper and lower measuring jigs. The epoxy resin composition was set between the upper and lower measuring jigs that were separated with a jig distance of 1 mm, and measurements were taken in the torsion mode (measuring frequency 0.5 Hz) for 10 minutes at a constant measuring temperature of 23°C. Viscosity measurements taken in the period starting 2 minutes and ending 10 minutes after the start were averaged to determine the viscosity at room temperature of the epoxy resin composition.

(3) Measurement of pot life of epoxy resin composition

The viscosity of the epoxy resin composition prepared in the above section (1) was measured by using a dynamic viscoelasticity measuring machine (ARES-2 KFRTN1-FCO-STD, manufactured by TA Instruments) equipped with flat parallel plates with a diameter of 40 mm installed on the upper and lower measuring jigs. The epoxy resin composition was set between the upper and lower measuring jigs that were separated with a jig distance of 1 mm, and measurements were taken in the torsion mode (measuring frequency 0.5 Hz). The viscosity $\eta^*_2$ was measured after maintaining the specimen at 65°C for 2 minutes. It was maintained at 65°C for 2 hours while measuring the viscosity $\eta^*_x$ at appropriate points, followed by calculating the viscosity increase ratio of $\eta^*_x/\eta^*_2$. The time required for the viscosity increase ratio to reach 3 was adopted as the pot life.

(4) Measurement of volatilization percentage of epoxy resin composition

As close as possible to 3 g (mass W2) of the epoxy resin composition prepared in the above section (1) was weighed on a sheet of release paper (mass W1), and the epoxy resin composition and the release paper were left together for 1 hour in an oven at 180°C. Then, the epoxy resin composition and the release paper were taken out of the oven and left in a desiccator for 30 minutes, and the total mass of the epoxy resin and the release paper was measured (mass W3). Then, the volatilization percentage [%], which is defined by the following calculation formula for the present invention, was calculated.

$$\{(W2-(W3-W1)\} / W2 \times 100\ [\%]$$

A test piece was rated as good if the calculated volatilization percentage was 5% or less, whereas it was rated as poor if the percentage was 5% or more.

(5) Measurement of resin flow percentage of epoxy resin composition

As close as possible to 3 g (mass W4) of the epoxy resin composition prepared in the above section (1) was weighed on a mold releasing film cut to 15 cm square. Another 15 cm square of the mold releasing film was used to sandwich the epoxy resin composition, and they were further sandwiched between two 10 cm square metal plates (400 g each), followed by molding them in an autoclave (6 atm., 180°C, 2 hours, a heating rate of 1.7°C/min). After the molding step, the squeezed-out portion of the cured epoxy resin composition getting out of the 10 cm square metal plates was removed and the mass of the remaining portion of the cured epoxy resin composition was measured (mass W5). The resin flow percentage [%] of the epoxy resin composition, defined by the following calculation formula for the present invention, was then calculated.

$$(W4-W5) / W4 \times 100\ [\%]$$

A test piece was rated as A if the resin flow percentage was 5% or less, rated as B if it was more than 5% and 10% or less, rated as C if it was more than 10% and 15% or less, and rated as D if it was more than 15%.

(6) Stickiness of epoxy resin composition

The epoxy resin composition prepared in the above section (1) was applied to an aluminum plate of an appropriate size (larger than 10 cm square) in such a manner that the epoxy resin composition had a thickness of 80 $\mu$m and then the top surface was covered with a 10 cm square stainless steel plate (400 g) that had been treated for easy release by spraying Daifree GA-3000 (manufactured by Daikin Industries, Ltd.), followed by leaving them to stand for 30 seconds. After that, the stainless steel plate was lifted and the aluminum plate was placed at angle of 90° to the ground with the epoxy resin composition closely stuck to the aluminum plate. A test piece was rated as good if the epoxy resin composition was closely stuck to the aluminum plate after 24 hours and rated as poor if it was peeled off even partly.

(7) UV irradiation test of epoxy resin composition

The epoxy resin composition prepared in the above section (1) was applied to a mold releasing film in such a manner that the epoxy resin composition had a thickness of 80 $\mu$m and molded in an oven under the conditions of 180°C, 2 hours, and a heating rate of 1.7°C/min. The cured epoxy resin composition thus prepared was exposed to UV light with a half of its surface covered with aluminum foil using a metering weather meter (M6T, manufactured by Suga Test Instruments Co., Ltd.) under the conditions of an irradiation wavelength of 300 to 400 nm and an integrated illuminance of 1.55 kW/m$^2$. Since the cured epoxy resin composition according to the present invention is supposed to be exposed to sunlight outdoors for multiple years, the test adopted an integrated intensity of 1,000 kJ/m$^2$, which is based on a rough calculation of monthly exposure to UV in Japan (summer). After the irradiation, the aluminum foil was removed, and the part covered and the part not covered with the aluminum foil in the test were compared visually to determine whether the cured epoxy resin underwent a change in color during the UV irradiation. The difference in color of the cured epoxy resin composition between before and after the irradiation was determined using a polyilluminant spectrophotometer (MSC-P, manufactured by Suga Test Instruments Co., Ltd.). The epoxy resin composition was set in the polyilluminant spectrocolorimeter and the reflectance was measured in the wavelength range of 380 to 780 nm under the measuring conditions of reflection mode, C light source, 2° field, and 8° incident. Furthermore, the colorimetric value $(L*1a*1b*1)$ according to the $L*a*b*$ color system that the test piece had before the UV irradiation was determined using the program attached to the instrument. Then, the $(L*2a*2b*2)$ value after the UV irradiation was determined. Then, the difference in color $\Delta E*ab$ of the cured epoxy resin composition between before and after the UV irradiation was calculated by the following formula: $\Delta E*ab = [(L*1-L*2)^2 + (a*1-a*2)^2 + (b*1-b*2)^2]^{1/2}$. A test piece was rated as good in terms of UV resistance if the value of $\Delta E*ab$ is 4 or less and rated as poor in terms of UV resistance if the value of $\Delta E*ab$ is more than 4.

(8) Quantity of resin getting into epoxy resin composition from prepreg during molding step

The epoxy resin composition prepared in the above section (1) was applied to the outermost surface of a stack of eight plies of continuous fiber type prepreg (T800S/3900-2B, manufactured by Toray Industries, Inc.) stacked in a pseudoisotropic manner (lamination structure [+45°/0°/-45°/90°]$_s$) in such a manner that the epoxy resin composition had a thickness of 80 $\mu$m, and the stack thus prepared was molded in an autoclave under the conditions of 6 atm., 180°C, 2 hours, and a heating rate of 1.7°C/min to produce a composite material. The surface thereof that had the cured epoxy resin composition was subjected to IR measurement by the ATR method (FT/IR-4000, manufactured by JASCO Corporation, diamond prism, measuring wavelength 400 to 4,000 cm$^{-1}$, total number of measuring runs 16). Then, normalization was performed using the peak at 1,715 cm$^{-1}$, which represents the ester, and the value of the peak at 1,592 cm$^{-1}$, which represents the benzene ring attributed to the cured resin contained in the prepreg, was determined. This makes it possible to determine the quantity of the resin originally contained in the prepreg and then mixed with the coating agent containing an epoxy resin composition in the molding step and exposed from the surface of the fiber reinforced composite material. The fiber reinforced composite material was rated as good in terms of surface UV resistance if the peak value at 1,592 cm$^{-1}$, which represents the benzene ring attributed to the cured resin contained in the prepreg, was 0.6 or less. In Examples 35 to 56 and Comparative examples 9 to 11, IR measurement was performed by the ATR method in the same way as above, but normalization by the peak at 1,715 cm$^{-1}$, which represents the ester, was not performed in determining the peak value at 1,592 cm$^{-1}$, which represents the benzene ring attributed to the cured resin contained in the prepreg. In this case, the fiber reinforced composite material was rated as good in terms of surface UV resistance if the peak value at 1,592 cm$^{-1}$, which represents the benzene ring attributed to the cured resin contained in the prepreg, was 1.0 or less.

(9) Method for applying epoxy resin composition to prepreg surface

When the epoxy resin composition was applied by spraying, a spray gun (W-2001-2, manufactured by ANEST IWATA Corporation) was used to spray the epoxy resin composition to coat the prepreg surface.
When the epoxy resin composition was applied manually by using a brush, the epoxy resin composition was put in a container and a brush immersed therein was used to apply it directly to the surface.
When the epoxy resin composition was applied manually by using a bar coater, the epoxy resin composition was put on the surface to be coated and spread by a bar coater to coat the object.
(10) Measuring method for exothermic reaction peak temperature of epoxy resin composition An exothermic curve of the epoxy resin composition was obtained by performing analysis using a differential scanning calorimeter (DSC Q2500, manufactured by TA Instrument) in a nitrogen atmosphere at a temperature ramp rate of 5°C/min. In the resulting exothermic curve, the temperature at the top of the exothermic reaction peak showing a heat flow of 100 mW/g or more is calculated to represent the exothermic reaction peak temperature. When there were two or more exothermic reaction peaks showing a heat flow of 100 mW/g or more, the temperature of the lower temperature peak was adopted as the DSC exothermic reaction peak temperature for the present invention. For the fast curability evaluation, a test piece was rated as A if its exothermic reaction peak temperature was 100°C or less, rated as B if it was more than 100°C and 120°C or less, rated as C if it was more than 120°C and 140°C or less, and rated as D if it was more than 140°C, as shown in Tables 1 to 4.

(11) Bending test of cured epoxy resin composition

An uncured epoxy resin composition was defoamed in a vacuum and cured at a temperature of 180°C for 2 hours in a mold that contained a 2 mm thick spacer of Teflon (registered trademark) set to produce a product with a thickness of 2 mm. The resulting cured epoxy resin with a thickness of 2 mm was cut to a width of 10$\pm$0.1 mm and a length of 60$\pm$1 mm to prepare a test piece. Three point bending test with a span distance of 32 mm was conducted according to JIS-K7171 (1994) by using an Instron type universal tester (manufactured by Instron Corporation) to measure the elastic modulus and bending strain (elongation percentage). Six measurements were taken (N = 6) and their average was calculated.

(12) Preparation method for sheet shaped intermediate material

The epoxy resin composition prepared in the above section (1) was spread over a sheet of release paper to prepare a resin film with a predetermined areal resin weight. This resin film was set on a sheet shaped intermediate material production machine, and a metal foil was put on the resin film. Then, heat and pressure was applied to impregnate the metal foil with the epoxy composition (one-side impregnation) to prepare a sheet shaped intermediate material having an areal metal foil weight of 89.4 g/m$^2$ and an areal resin weight of 100 g/m$^2$. The metal foil used was of brass (C2680R-EH, Takeuchi Metal Foil & Powder Co., Ltd.).

(13) Evaluation method for tackiness of sheet shaped intermediate material

The sheet shaped intermediate material prepared in the above section (12) was cut to 10 cm square, and then the 10 cm square of the sheet shaped intermediate material was put on an underlying 15 cm square of a prepreg for fiber composite material production (T800S/3900-2B, manufactured by Toray Industries, Inc.). A 10 cm square stainless steel plate (400 g) that carried an adhesiveness tape attached thereon was put on the sheet shaped intermediate material and left to stand for 30 seconds. Then, the stainless steel plate was lifted so that the sheet shaped intermediate material was peeled off from the prepreg, resulting in two separate sheets. A test piece was rated as poor in terms of tackiness if some of the epoxy resin composition used in the sheet shaped intermediate material was left on the prepreg and rated as good in terms of tackiness if none of the epoxy resin composition used in the sheet shaped intermediate material was left thereon.

(14) Bonding property of sheet shaped intermediate material

The sheet shaped intermediate material prepared in the above section (12) was cut to 10 cm square and attached to an aluminum plate of an appropriate size (larger than 10 cm square) and then the top surface was covered with a 10 cm square stainless steel plate (400 g) that had been treated for easy release by spraying Daifree GA-3000 (manufactured by Daikin Industries, Ltd.), followed by leaving them to stand for 30 seconds. After that, the stainless steel plate was lifted and the aluminum plate was placed at angle of 90° to the ground with the sheet shaped intermediate material attached to the aluminum plate. A test piece was rated as good in terms of bonding property if the sheet shaped intermediate material remained attached to the aluminum plate after 24 hours and rated as poor if it was peeled off even partly.

(15) Measuring method for exothermic reaction peak temperature of sheet shaped intermediate material

An exothermic curve of a sheet shaped intermediate material was observed by performing analysis using a differential scanning calorimeter (DSC Q2500, manufactured by TA Instrument) in a nitrogen atmosphere at a temperature ramp rate of 5°C/min. In the resulting exothermic curve, the temperature at the top of the exothermic reaction peak showing a heat flow of 100 mW/g or more is calculated to represent the exothermic reaction peak temperature. When there were two or more exothermic reaction peaks showing a heat flow of 100 mW/g or more, the temperature of the lower temperature peak was adopted as the DSC exothermic reaction peak temperature for the present invention. For the fast curability evaluation, a test piece was rated as A if its exothermic reaction peak temperature was 100°C or less, rated as B if it was more than 100°C and 120°C or less, rated as C if it was more than 120°C and 140°C or less, and rated as C if it was more than 140°C, as shown in Tables 1 to 4.

(16) Measurement of volatilization percentage of sheet shaped intermediate material

The sheet shaped intermediate material prepared in the above section (11) was cut to 8 cm square, and the mass of the 8 cm square sheet shaped intermediate material was measured (mass W6). Then, it was put on a sheet of release paper and placed in an oven controlled at 180°C for 1 hour. Subsequently, the sheet shaped intermediate material and the release paper were taken out of the oven and left in a desiccator for 30 minutes, and the mass of the sheet shaped intermediate material was measured (mass W7). The volatilization percentage [%] used for the present invention was calculated by the following calculation formula, wherein W8 is the mass of the 8 cm square sheet of metal foil or mesh contained in the sheet shaped intermediate material.

$$\{(W6-W8) - (W7-W8)\} / (W6-W8) \times 100 \ [\%]$$

A test piece was rated as good if the calculated volatilization percentage was 5% or less and rated as poor if it was 5% or more.

(17) Measurement of resin flow percentage of sheet shaped intermediate material

The sheet shaped intermediate material prepared in the above section (12) was cut to 10 cm square. Four 10 cm square sheets of the shaped intermediate material were put one on top of another, and the mass of the stack was measured (W9). It was sandwiched between two 15 cm square sheets of mold releasing film and further sandwiched between two 10 cm square metal plates (400 g each), followed by molding it in an autoclave (6 atm., 180°C, 2 hours, heating rate of 1.7°C/min). After the molding step, the squeezed-out portion of the cured sheet shaped intermediate material getting out of the 10 cm square metal plates was removed and the mass of the 10 cm square stack of the cured sheet shaped intermediate material was measured (mass W10). The resin flow percentage [%] used for the present invention was calculated by the following calculation formula, wherein W11 is the mass of the four 10 cm square sheets of metal foil or mesh contained in the sheet shaped intermediate material.

$$\{(W9\text{-}W11) - (W10\text{-}W11)\} / (W9\text{-}W11) \times 100 \ [\%]$$

A test piece was rated as A if the resin flow percentage was 5% or less, rated as B if it was more than 5% and 10% or less, rated as C if it was more than 10% and 15% or less, and rated as D if it was more than 15%.

(18) UV irradiation test of sheet shaped intermediate material

The sheet shaped intermediate material prepared in the above section (12) was cut to 5 cm square, and the sheet shaped intermediate material cut to 5 cm square was cured in an oven under the conditions of 180°C, 2 hours, and a heating rate of 1.7°C/min. The surface of the cured sheet shaped intermediate material thus prepared was exposed to UV light using a metering weather meter (M6T, manufactured by Suga Test Instruments Co., Ltd.) under the conditions of an irradiation wavelength of 300 to 400 nm, an integrated illuminance of 1.55 kW/m$^2$, and an integrated intensity of 1,000 kJ/m$^2$ (a rough calculation of monthly exposure to UV in Japan (summer)). A test piece of the sheet shaped intermediate material was rated as good in terms of UV resistance if a color difference was not detected visually between before and after the irradiation and rated as poor in terms of UV resistance if a color difference was detected.

(19) Quantity of resin getting into sheet shaped intermediate material from prepreg during molding step

The sheet shaped intermediate material prepared in the above section (12) was cut to 5 cm square, and the 5 cm square sheet shaped intermediate material was attached to the outermost surface of a stack of eight plies of continuous fiber type prepreg stacked in a pseudoisotropic manner (lamination structure [+45°/0°/-45°/90°]$_s$), and the stack thus prepared was molded in an autoclave under the conditions of 6 atm., 180°C, 2 hours, and a heating rate of 1.7°C/min to produce a composite material. The surface thereof that had the sheet shaped intermediate material was subjected to IR measurement by the ATR method (FT/IR-4000, manufactured by JASCO Corporation, diamond prism, measuring wavelength 400 to 4,000 cm$^{-1}$, total number of measuring runs 16). Then, the peak at 1,715 cm$^{-1}$, which represents the ester, was normalized and the value of the peak at 1,592 cm$^{-1}$, which represents the benzene ring attributed to the cured resin contained in the prepreg, was determined. This makes it possible to determine the quantity of the resin originally contained in the prepreg and then mixed with the sheet shaped intermediate material during the molding step and exposed from the surface of the fiber reinforced composite material. The fiber reinforced composite material was rated as good in terms of surface UV resistance if the peak value at 1,592 cm$^{-1}$, which represents the benzene ring attributed to the cured resin contained in the prepreg, was 0.6 or less. In Examples 87 to 97 and Comparative examples 21 and 22, IR measurement was performed by the ATR method in the same way as above, but normalization by the peak at 1,715 cm$^{-1}$, which represents the ester, was not performed in determining the peak value at 1,592 cm$^{-1}$, which represents the benzene ring attributed to the cured resin contained in the prepreg. In this case, the fiber reinforced composite material was rated as good in terms of surface UV resistance if the peak value at 1,592 cm$^{-1}$, which represents the benzene ring attributed to the cured resin contained in the prepreg, was 1.0 or less.

(20) Adjustment of the degree of cure of fiber reinforced composite material base

As a fiber reinforced composite material base precursor, a stack of six plies of T300/3631-2 woven fabric (plain weave) prepreg was prepared and placed in an oven at 180°C for a certain period to adjust the degree of cure of the prepreg. In addition, as a RTM material, T300 woven fabric (plain weave) was preformed in a mold to prepare a six ply stack (referred to as preform for the present invention). A preform was shaped in a mold, and a resin composition (for the present invention, referred to as the resin A) prepared by mixing 100 parts by mass of triglycidyl-m-aminophenol (Araldite (registered trademark) MY0600, manufactured by Huntsman, epoxy equivalent weight 118) with diethyl toluene diamine (jER (registered trademark) Cure W, manufactured by Mitsubishi Chemical Corporation, amine equivalent weight 68) in such a manner that the ratio between their epoxy equivalent weight and amine equivalent weight was 1.0 was injected into the mold so that, followed by the resin composition was injected in the preform at 60°C to provide a RTM material. The resulting RTM material was placed in an oven at 180°C for a certain period to adjust the degree of cure of the RTM material.

(21) Measurement of the degree of cure of fiber reinforced composite material base

The degree of cure of a fiber reinforced composite material base was calculated from the heat flow determined from the heat flow shown in an exothermic curve recorded by a differential scanning calorimeter (DSC Q2500, manufactured by TA Instrument) in a nitrogen atmosphere at a temperature ramp rate of 5°C/min. In the above section (20), the heat flow H1 (mW/g) of the fiber reinforced composite material base precursor was measured before putting it in the oven controlled at 180°C and the heat flow H2 (mW/g) of the fiber reinforced composite material base was measured after taking it out of the 180°C oven, followed by calculating the degree of cure by the formula given below.

$$H2 / H1 \times 100 \ [\%]$$

(22) Surface treatment of fiber reinforced composite material base

The surface of a fiber reinforced composite material base was treated (polished) appropriately. Here, surface treatment was performed by manually pressing C34P #400 water resistant abrasive paper (manufactured by Riken Corundum Co., Ltd.) against the surface of a fiber reinforced composite material base and rubbing it 5 times.

(23) Method for applying epoxy resin composition to fiber reinforced composite material base To apply an epoxy resin composition by spraying, a spray gun (W-2001-2, manufactured by ANEST IWATA Corporation) was used to spray the epoxy resin composition to coat the surface of the fiber reinforced composite material base so that the thickness of the coating agent reached 80 $\mu$m.

To apply an epoxy resin composition manually with a brush, the epoxy resin composition was put in a container and a brush immersed therein was used to apply it directly to a surface to a thickness of 80 $\mu$m.

To apply an epoxy resin composition manually with a bar coater, the epoxy resin composition was put on the surface to be coated and spread by a bar coater to coat the surface to a thickness of 80 $\mu$m.

(24) Curing of coating agent by UV irradiation

Using Toscure 401 (manufactured by Toshiba Lighting & Technology Corporation), the coating agent was irradiated with UV light with an energy density of 70 mW/cm$^2$ for 1 minute so that the coating agent applied to the surface of a fiber reinforced composite material base precursor in the above section (23) was cured with the UV light, thereby providing a fiber reinforced composite intermediate.

(25) Heat-curing of fiber reinforced composite intermediate

The fiber reinforced composite intermediate prepared in the above section (24) was heat-cured. A fiber reinforced composite intermediate prepared from a fiber reinforced composite material base formed of stacked prepreg layers was heat-cured in an autoclave under the conditions of 6 atm., 180°C, 2 hours, and heating rate of 1.7°C/min while a fiber reinforced composite intermediate prepared from a fiber reinforced composite material base formed of RTM material was heat-cured in an oven under the conditions of 180°C, 2 hours, and heating rate of 1.7°C/min.

(26) Adhesiveness between coating agent and fiber reinforced composite material base after heat-curing

Mending tape (Scotch (registered trademark) DUCT-TP18, manufactured by 3M Company) was pasted to a 48 mm × 80 mm area of the surface of the coating agent in the fiber reinforced composite material produced by heat-curing in the above section (25) and left to stand for 5 minutes after putting a 10 cm square aluminum plate on the top of the pasted tape, and then the tape was peeled off. The fiber reinforced composite material 3 was rated as poor in terms of the adhesiveness between the coating agent and the fiber reinforced composite material base precursor if the coating agent was found pasted, even partly, on the adhesive face of the tape, and it was rated as good if such pasted material was not found.

(27) Quantity of resin getting into epoxy resin composition from fiber reinforced composite material base during molding step

The coating agent-coated surface of the fiber reinforced composite material prepared in the section (25) was subjected to IR measurement by the ATR method (FT/IR-4000, manufactured by JASCO Corporation, diamond prism, measuring wavelength 400 to 4,000 cm$^{-1}$, total number of measuring runs 16). Normalization was performed using the peak at 1,715 cm$^{-1}$, which represents the ester, and the value of the peak at 1,592 cm$^{-1}$, which represents the benzene ring attributed to the cured resin contained in the fiber reinforced composite material base, was determined. This makes it possible to determine the quantity of the resin originally contained in the fiber reinforced composite material base and then mixed with the coating agent in the molding step and exposed from the surface of the fiber reinforced composite material. The fiber reinforced composite material was rated as good in terms of surface UV resistance if the peak value at 1,592 cm$^{-1}$, which represents the benzene ring attributed to the cured resin contained in the fiber reinforced composite material base, was 0.6 or less. In Examples 158 to 161, IR measurement was performed by the ATR method in the same way as above, but normalization by the peak at 1,715 cm$^{-1}$, which represents the ester, was not performed in determining the peak value at 1,592 cm$^{-1}$, which represents the benzene ring attributed to the cured resin contained in the fiber reinforced composite material base. In this case, the fiber reinforced composite material was rated as good in terms of surface UV resistance if the peak value at 1,592 cm$^{-1}$, which represents the benzene ring attributed to the cured resin contained in the fiber reinforced composite material base, was 1.0 or less.

(28) Preparation of resin film for epoxy resin composition

The resin composition prepared in the above section (1) was applied with a reverse roll coater to a sheet of release paper with a width of 30 cm so that the epoxy resin composition had an areal weight of 200 g/m$^2$, thereby preparing a release paper-carrying resin film.

(29) Preparation of fiber reinforced composite intermediate containing resin film

A release paper-carrying resin film was attached to a mold in such a manner that the resin film-coated surface came in contact with the mold, and only the release paper was peeled off. Here, an aluminum plate coated with a mold releasing agent was used as the mold.
Using Toscure 401 (manufactured by Toshiba Lighting & Technology Corporation), the resin film was photo-cured by irradiation with UV light with an energy density of 70 mW/cm$^2$ continued for 1 minute, and a fiber reinforced composite material base as described in the sections (20) to (22) was laid on top thereof to prepared a fiber reinforced composite intermediate.

(30) Heat-curing of fiber reinforced composite intermediate

The fiber reinforced composite intermediate prepared in the above section (29) was heat-cured. A fiber reinforced composite intermediate prepared from a fiber reinforced composite material base formed of stacked prepreg layers was heat-cured in an autoclave under the conditions of 6 atm., 180°C, 2 hours, and heating rate of 1.7°C/min while a fiber reinforced composite intermediate prepared from a fiber reinforced composite material base with an adjusted degree of cure formed of RTM material was heat-cured in an oven under the conditions of 180°C, 2 hours, and heating rate of 1.7°C/min. In the case where an unpretreated RTM material was adopted, a preform was laid on a photo-cured resin film and the resulting layered body was put in an oven. Then, the resin A was injected at 60°C in the oven and heat-cured in the oven under the conditions of 180°C, 2 hours, and heating rate of 1.7°C/min.

(31) Adhesiveness between resin film and fiber reinforced composite material base after heat curing

Mending tape (Scotch (registered trademark) DUCT-TP18, manufactured by 3M Company) was pasted to a 48 mm × 80 mm area of the surface of the resin film of the fiber reinforced composite material produced by heat-curing in the above section (30) and left to stand for 5 minutes after putting a 10 cm square aluminum plate on top thereof, and then the tape was peeled off. The fiber reinforced composite material was rated as poor in terms of the adhesiveness between the resin film and the reinforced composite material base if the reinforced composite material base was found pasted, even partly, on the adhesive face of the tape, and it was rated as good if such pasted material was not found.

(32) Quantity of resin mixed getting into resin film from fiber reinforced composite material base during molding step

The resin film-coated surface of the fiber reinforced composite material prepared in the section (30) was subjected to IR measurement by the ATR method (FT/IR-4000, manufactured by JASCO Corporation, diamond prism, measuring wavelength 400 to 4,000 cm$^{-1}$, total number of measuring runs 16). Normalization was performed using the peak at 1,715 cm$^{-1}$, which represents the ester, and the value of the peak at 1,592 cm$^{-1}$, which represents the benzene ring attributed to the cured resin contained in the fiber reinforced composite material base, was determined. This makes it possible to determine the quantity of the resin originally contained in the fiber reinforced composite material base and then mixed with the resin film in the molding step and exposed from the surface of the fiber reinforced composite material. The fiber reinforced composite material was rated as good in terms of surface UV resistance if the peak value at 1,592

cm$^{-1}$, which represents the benzene ring attributed to the cured resin contained in the fiber reinforced composite material base, was 0.6 or less. In Examples 212 to 215, IR measurement was performed by the ATR method in the same way as above, but normalization by the peak at 1,715 cm$^{-1}$, which represents the ester, was not performed in determining the peak value at 1,592 cm$^{-1}$, which represents the benzene ring attributed to the cured resin contained in the fiber reinforced composite material base. In this case, the fiber reinforced composite material was rated as good in terms of surface UV resistance if the peak value at 1,592 cm$^{-1}$, which represents the benzene ring attributed to the cured resin contained in the fiber reinforced composite material base, was 1.0 or less.

<Examples 1 to 32 and Comparative example 1>

In Examples 1 to 32, when the component [A] was used in the epoxy resin, no change in color was detected even after curing in the UV resistance test, and good results were obtained. Compared to this, in Comparative example 1, in which any non-aromatic epoxy resin of the component [A] was not added, but only an aromatic epoxy resin was contained, a low rating was given in the UV resistance test and was found to be low in UV resistance.

<Examples 1 and 2>

In Examples 1 and 2, different compounds were added as the component [D] for comparison, and it was shown that as compared with the case where an iodonium salt was used as cationic curing agent, the use of benzylmethyl p-hydroxyphenylsulfonium hexafluoroantimonate as cationic curing agent served to achieve a higher curability and tended to act to decrease all the volatility, resin flow, and quantity of the resin getting into the coating agent containing an epoxy resin composition from the prepreg during the molding step.

<Examples 2 to 6, 21 to 23, 26 to 28, and 34 and Comparative examples 4 and 5>

In Examples 2 and 3, in which spraying was used as coating method, different compounds were added as the component [C] for comparison, and it was shown that as compared with the case where polyvinyl formal was adopted, the use of polyvinyl acetoacetal served more effectively to decrease the resin flow percentage. In Examples 4 to 6, in which spraying was used as above as coating method, polyvinyl acetoacetal was added in different quantities, and it was shown that a larger quantity acted to achieve a larger decrease in the resin flow percentage.
As compared with these, in Comparative example 4, which did not use the component [C], the resin flow percentage was high and an excessive quantity of the resin got into the coating agent containing an epoxy resin composition from the prepreg during the molding step, leading to a rating of "poor".
In Examples 21 and 22, manual coating was performed with a brush, and in Example 23, and 26 to 28, manual coating was performed with a bar coater. Here, different quantities of polyvinyl formal were used as component [C] and it was shown as above that a larger quantity of the component [C] served to achieve a larger decrease in the resin flow percentage.
In Example 28, it was shown that the stickiness was good, whereas in Comparative example 5, it was shown that the use of 80 parts by mass of polyvinyl formal led to a high viscosity at room temperature, giving a rating of "poor" for stickiness.
In Example 34, furthermore, it was shown that the use of a compound with a large calculated molecular weight as the component [C] served to achieve a large decrease in the resin flow, leading to a large decrease in the quantity of resin getting into the cured resin from the prepreg during the molding step. On the other hand, the viscosity at room temperature was excessively large, leading to a rating of "poor" for stickiness.

<Examples 23 to 25, and 33 and Comparative examples 1 and 8>

In Examples 23 to 25, it was shown that an epoxy resin composition with good physical properties was obtained when a non-aromatic epoxy resin component was used regardless of whether the component contained one epoxy resin or two or more epoxy resins.
In Example 33, furthermore, it was shown that the use of an epoxy resin composition in which an aromatic epoxy resin accounted for 10 mass% of the total quantity of epoxy resins led to a high UV resistance.
In Comparative example 8, on the other hand, it was shown that the use of an epoxy resin composition in which an aromatic epoxy resin accounted for 20 mass% of the total quantity of epoxy resins led to a poor level of UV resistance.

<Examples 1, 2, and 7 to 10 and Comparative examples 6 and 7>

In Example 7 and Example 8, the quantities of the iodonium salt and benzylmethyl p-hydroxyphenylsulfonium hexafluoroantimonate, respectively, that were used as the cationic curing agent of the component [D] were increased as compared with Example 1. In Examples 7 and 8, it was shown that each epoxy resin composition had a higher curability than in Example 1, but on the other hand, it had a shorter pot life. However, they were shown to serve to achieve a large decrease in the volatilization percentage, resin flow percentage, and the quantity of resin getting into the coating agent containing an epoxy resin composition according to the present invention from the prepreg during the molding step.

In Examples 9 and 10, the component (D) consists of two cationic curing agents. In Examples 9, the curability was lower, but the pot life was longer than in Example 8. In Example 10, the quantity of methyl-p-acetoxyphenylsulfonium hexafluoroantimonate was larger than in Example 9. In Examples 10, the curability was higher, but the pot life was shorter than in Example 9. These results indicate therefore that the balance between the curability and pot life of an epoxy resin composition can be adjusted properly by optimizing the content of the cationic curing agent of the component [D], or in the case where the component [D] contains two cationic curing agents, by optimizing the content ratio between them.

In Comparative example 6, the curability was low, and a low rating was given in terms of the volatilization percentage and the quantity of resin getting into the epoxy resin composition from the prepreg during the molding step.

In Comparative example 7, on the other hand, the curability was high, but the pot life shortened significantly. In addition, a low rating was given in terms of the quantity of resin getting into the coating agent including the epoxy resin composition from the prepreg during the molding step and also rated as poor in the UV resistance test, indicating that it was low in UV resistance.

<Examples 11 and 12, Examples 29 and 30, and Comparative examples 2 and 3>

In Example 11 and 12, different quantities of titanium oxide were contained in the component [B] for comparison, and it was shown that the curability decreased and the pot life improved with an increasing quantity of titanium oxide. This indicates that the reactivity of an epoxy resin composition can be controlled by changing the quantity of titanium oxide. It was shown that an increase in the quantity of titanium oxide effectively ensures a decrease in the quantity of resin getting into the epoxy resin composition from the prepreg during the molding step.

In Example 29 and 30, the titanium oxide of the component [B] accounted for 15 parts by mass and 75 parts by mass, respectively. It was shown that in Example 30, as compared with Example 29, the curability was lower and a decrease in the volatilization percentage was achieved effectively. In both of them, furthermore, high ratings were given in terms of UV resistance and the quantity of resin getting into the epoxy resin composition from the prepreg during the molding step.

On the other hand, in Comparative example 2, in which the titanium oxide of the component [B] accounted for 10 parts by mass, a large quantity of resin got into the epoxy resin composition from the prepreg during the molding step, and a low rating was given. Furthermore, in Comparative example 3, in which the titanium oxide of the component [B] (II) accounted for 100 parts by mass, the curability was low and a low rating was given in terms of the volatilization percentage after heating at 180°C for 1 hour.

<Examples 8, 13 to 15, 23, and 31>

In Examples 13 to 15, coating was performed by spraying and the component [F], i.e. cure stabilizer, was added. In Example 13, 0.2 part by mass of 4-hydroxyphenyldimethyl sulfonium=methyl sulfate was added as the cure stabilizer of the component [F], and it was found that the pot life improved as compared with Example 8. Furthermore, in Example 15, 1.0 part by mass of 4-hydroxyphenyldimethyl sulfonium=methyl sulfate was added, and it was found that the pot life further improved as compared with Example 13. Similarly, in Example 14, 0.2 part by mass of 4-(methylthio)phenol was added as the cure stabilizer of the component [F], and it was found that the pot life improved as compared with Example 8. In addition, in Examples 13 to 15, high ratings were given in terms of volatility, UV resistance, and the quantity of resin getting into the coating agent containing an epoxy resin composition from the prepreg during the molding step.

In Example 31, in which coating was performed manually using a bar coater, 0.2 part by mass of 4-hydroxyphenyldimethyl sulfonium=methyl sulfate was added as the component [F], and it was found that the pot life improved as compared with Example 23, in which coating was performed also manually using a bar coater.

<Examples 8, 16 to 18, 23, and 32>

In Examples 16 to 18, in which coating was performed by spraying, the component [E], i.e. thixotropic agent, was added. In Examples 16 and 17, as compared with Example 8 in which coating was performed by spraying as well, 4 parts of fumed silica or 4 parts of alkyl ammonium clay was added, and it was shown that they served effectively to achieve a larger decrease in the resin flow percentage and in the quantity of resin getting into the epoxy resin composition from the prepreg during the molding step without suffering a deterioration in curability or UV resistance. Furthermore, in Example 18, as compared with Example 8, 4 parts each of fumed silica and alkyl ammonium clay were added, and it was shown that they served effectively to achieve a larger decrease in the resin flow percentage and in the quantity of resin getting into the epoxy resin composition from the prepreg during the molding step than in Examples 16 and 17.

Furthermore, in Example 32, in which coating was performed manually using a bar coater, both fumed silica and alkyl ammonium clay were added as the component [E], and it was shown that, they served to achieve a larger decrease in the resin flow percentage and the quantity of resin getting into the epoxy resin composition from the prepreg during the molding step than in Example 23, in which coating was performed also manually using a bar coater.

<Examples 8, 19, and 20>

In Examples 19 and 20, in which coating was performed by spraying, both the component [E], i.e. thixotropic agent, and the component [F], i.e. cure stabilizer, were added, it was shown that they served to achieve a larger decrease in the resin flow percentage and the quantity of resin getting into the epoxy resin composition from the prepreg during the molding step and improve the pot life as compared with Example 8, in which coating was also performed by spraying. Thus, it was shown that the component [E] and the component [F] can achieve a synergetic effect if used together.

Furthermore, in Example 32, in which coating was performed manually using a bar coater, it was shown that when both the component [E], i.e. thixotropic agent, and the component [F], i.e. cure stabilizer, were added, it was shown that they served to achieve a larger decrease in the resin flow percentage and the quantity of resin getting into the epoxy resin composition from the prepreg during the molding step and improve the pot life as compared with Example 23, in which coating was performed also manually using a bar coater.

<Examples 8, and 35 to 45 and Comparative examples 9 and 10>

In Examples 35 to 37, diglycidyl ether of 2,2-bis(4-hydroxycyclohexyl) propane was used as the component [A], i.e. non-aromatic epoxy resin, and one of polyvinyl formal, polyvinyl acetoacetal, and polyvinyl butyral was used as the component [C], i.e. non-aromatic thermoplastic resin. The elastic modulus of the cured epoxy resin composition decreased and the strain improved in the order of Example 35, 36, and 37. Furthermore, when Example 35 and Example 8 were compared, the exothermic reaction peak temperature was lower, but a longer pot life was achieved in Example 35, and it was shown that the reactivity was able to be controlled by changing the type of the component [A]. Thus, it was shown possible to control the reactivity by changing the type of the component [A] and adjust properly the balance between the curability and the pot life, or more specifically between the processability and the effect of decreasing the resin flow percentage or decreasing the quantity of resin getting into the cured resin from the prepreg during the molding step.

In Examples 38 and 39, the component [G], i.e. rubber, was used. It was shown that an increase in the content of the component [G] resulted in a decrease in the elastic modulus of the cured epoxy resin composition, an improved bending strain, and a decrease in the resin flow percentage. On the other hand, in Comparative example 9, in which the quantity of the component [G] was excessively small, the resin flow percentage was not decreased sufficiently, and an excessive quantity of resin got into the cured resin from the prepreg during the molding step, resulting in a rating of "poor". Furthermore, in Comparative example 10, in which the component [G] was added excessively, the nozzle was clogged with the epoxy resin composition, making it impossible to perform coating.

In Examples 40 and 41, two compounds, namely, (3',4'-epoxycyclohexane)methyl 3,4-epoxycyclohexane carboxylate and diglycidyl ether of 2,2-bis(4-hydroxycyclohexyl) propane, were used as the component [A], i.e. non-aromatic epoxy resin. When Examples 35, 40, and 41 were compared, it was shown that a larger content of (3',4'-epoxycyclohexane)methyl 3,4-epoxycyclohexane carboxylate led to a lower exothermic reaction peak temperature and a larger decrease in the resin flow percentage and the quantity of resin getting into the cured resin from the prepreg during the molding step. It was shown that the curability was high in Example 8, in which (3',4'-epoxycyclohexane)methyl 3,4-epoxycyclohexane carboxylate alone was used as the component [A], whereas the pot life was favorable in Example 35, in which diglycidyl ether of 2,2-bis(4-hydroxycyclohexyl) propane alone was used. In Examples 40 and 41, the use of both of the above compounds served to achieve both a high curability and a favorable pot life. Thus, it was shown that the use of the two non-aromatic epoxy resin compounds as the component [A] served to control the reactivity of the epoxy resin composition and adjust properly the balance between the curability and the pot life, or more specifically between the processability and the effect of decreasing the resin flow percentage or the quantity of resin getting into the cured resin from the prepreg molding step. Here, when Examples 8 and 35 were compared, it was shown that as compared with Example 8, in which (3',4'-epoxycyclohexane)methyl 3,4-epoxycyclohexane carboxylate was used as the non-aromatic epoxy resin of the component [A], the cured epoxy resin had a larger bending strain in Example 35, in which diglycidyl ether of 2,2-bis(4-hydroxycyclohexyl) propane was used. When Examples 40 and 41 were compared, it was shown that a higher proportion of diglycidyl ether of 2,2-bis(4-hydroxycyclohexyl) propane used as the non-aromatic epoxy resin of the component [A] allowed the cured epoxy resin to have a larger bending strain.

As the non-aromatic epoxy resin of the component [A], (3',4'-epoxycyclohexane)methyl 3,4-epoxycyclohexane carboxylate was used in Example 42 whereas (3',4'-epoxycyclohexane)methyl 3,4-epoxycyclohexane carboxylate and diglycidyl ether of 2,2-bis(4-hydroxycyclohexyl) propane were used in Example 43. The component [F], i.e. cure stabilizer, was used in both Examples. When comparing Example 42 with Example 35 and comparing Example 43 with Example 41, the exothermic reaction peak temperature was higher in Examples 42 and 43, and it was shown that the incorporation of the component [F] served to control the reactivity of the epoxy resin composition.

As the non-aromatic epoxy resin of the component [A], (3',4'-epoxycyclohexane)methyl 3,4-epoxycyclohexane carboxylate was used in Example 44 whereas (3',4'-epoxycyclohexane)methyl 3,4-epoxycyclohexane carboxylate and diglycidyl ether of 2,2-bis(4-hydroxycyclohexyl) propane were used in Example 45. The component [E], i.e. thixotropic agent, the component [F], i.e. cure stabilizer, and the component [G], i.e. rubber, were used in both Examples. When comparing Example 44 with Example 35 and comparing Example 45 with Example 41, it was shown that the incorporation of the component [F] served to control the reactivity of the epoxy resin composition in Examples 44 and 45. Furthermore, when comparing Example 44 with Example 42 and comparing Example 45 with Example 43, it was shown that the incorporation of the component [E] and the component [G] served to decrease the resin flow percentage and also decrease the quantity of resin getting into the cured resin from the prepreg during the molding step in Examples 44 and 45. When comparing Example 44 with Example 35 and comparing Example 45 with Example 41, it was shown that the incorporation of the component [F] served to further improve the pot life of the epoxy resin composition in both Examples 44 and 45.

<Examples 23, and 46 to 56 and Comparative 11>

In Examples 46 to 48, diglycidyl ether of 2,2-bis(4-hydroxycyclohexyl) propane was used as the component [A], i.e. non-aromatic epoxy resin, and one of polyvinyl formal, polyvinyl acetoacetal, and polyvinyl butyral was used as the component [C], i.e. non-aromatic thermoplastic resin. The viscosity at room temperature improved, the elastic modulus of the cured epoxy resin composition decreased, and the bending strain improved in the order of Example 46, 47, and 48. Furthermore, when Example 46 and Example 23 were compared, the exothermic reaction peak temperature was lower, but a longer pot life was achieved in Example 46. Thus, it was shown possible to control the reactivity by changing the type of the component [A] and adjust properly the balance between the curability and the pot life, or more specifically between the processability and the effect of decreasing the resin flow percentage or decreasing the quantity of resin getting into the cured resin from the prepreg during the molding step.

In Examples 49 and 50, the component [G], i.e. rubber, was used. It was shown that an increase in the content of the component [G] resulted in an increase in the viscosity at room temperature, a decrease in the elastic modulus of the cured epoxy resin composition, an increase in the bending strain, and a decrease in the resin flow percentage. On the other hand, in Comparative example 11, the use of an excessive quantity of the component [G] caused an excessive increase in the viscosity at room temperature, and a low rating was given in terms of bonding property.

In Examples 51 and 52, two compounds, namely, (3',4'-epoxycyclohexane)methyl 3,4-epoxycyclohexane carboxylate and diglycidyl ether of 2,2-bis(4-hydroxycyclohexyl) propane, were used as the component [A], i.e. non-aromatic epoxy resin. When Examples 46, 51, and 52 were compared, it was shown that a larger content of (3',4'-epoxycyclohexane)methyl 3,4-epoxycyclohexane carboxylate led to a lower exothermic reaction peak temperature and a larger decrease in the resin flow percentage and the quantity of resin getting into the cured resin from the prepreg during the molding step. It was shown that the curability was high in Example 23, in which (3',4'-epoxycyclohexane)methyl 3,4-epoxycyclohexane carboxylate alone was used as the component [A], whereas the pot life was favorable in Example 46, in which diglycidyl ether of 2,2-bis(4-hydroxycyclohexyl) propane alone was used. In Examples 51 and 52, the use of both of the above compounds served to achieve both a high curability and a favorable pot life. Thus, it was shown that the use of the two non-aromatic epoxy resin compounds as the component [A] served to control the reactivity of the epoxy resin composition and adjust properly the balance between the curability and the pot life, or more specifically between the processability and the effect of decreasing the resin flow percentage or the quantity of resin getting into the cured resin from the prepreg molding step. Here, when Examples 23 and 46 were compared, it was shown that as compared with Example 23, in which (3',4'-epoxycyclohexane)methyl 3,4-epoxycyclohexane carboxylate was used as the non-aromatic epoxy resin of the component [A], the cured epoxy resin had a larger bending strain in Example 46, in which diglycidyl ether of 2,2-bis(4-hydroxycyclohexyl) propane was used. When Examples 51 and 52 were compared, it was shown that a higher proportion of diglycidyl ether of 2,2-bis(4-hydroxycyclohexyl) propane used as the non-aromatic epoxy resin of the component [A] allowed the cured epoxy resin to have a larger bending strain.

As the non-aromatic epoxy resin of the component [A], (3',4'-epoxycyclohexane)methyl 3,4-epoxycyclohexane carboxylate was used in Example 53 whereas (3',4'-epoxycyclohexane)methyl 3,4-epoxycyclohexane carboxylate and diglycidyl ether of 2,2-bis(4-hydroxycyclohexyl) propane were used in Example 54. The component [F], i.e. cure stabilizer, was used in both Examples. When comparing Example 53 with Example 46 and comparing Example 54 with Example 52, the exothermic reaction peak temperature was higher in Examples 53 and 54, and it was shown that the incorporation of the component [F] served to control the reactivity of the epoxy resin composition.

As the non-aromatic epoxy resin of the component [A], (3',4'-epoxycyclohexane)methyl 3,4-epoxycyclohexane carboxylate was used in Example 55 whereas (3',4'-epoxycyclohexane)methyl 3,4-epoxycyclohexane carboxylate and diglycidyl ether of 2,2-bis(4-hydroxycyclohexyl) propane were used in Example 56. The component [E], i.e. thixotropic agent, the component [F], i.e. cure stabilizer, and the component [G], i.e. rubber, were used in both Examples. When comparing Example 55 with Example 46 and comparing Example 56 with Example 52, it was shown that the incorporation of the component [F] served to further improve the pot life of the epoxy resin composition in both Examples 55 and 56.

<Examples 57 to 85 and Comparative example 12>

In Examples 57 to 85, the component [A] was used as the main epoxy resin to form a sheet shaped intermediate material and a high rating was given in the UV resistance test. Compared to this, in Comparative example 12, an aromatic epoxy resin was contained, and a low rating was given in the UV resistance test.

<Examples 57 and 58>

In Examples 57 and 58, different compounds were added as the component [D] for comparison, and it was shown that as compared with the case where an iodonium salt was used as cationic curing agent, the use of benzylmethyl p-hydroxyphenylsulfonium hexafluoroantimonate as cationic curing agent served to achieve a higher curability and tended to act to decrease all the volatility, resin flow, and quantity of the resin getting into the sheet shaped intermediate material from the prepreg during the molding step, whereas the pot life deteriorated.

Furthermore, in Example 57 and 58, in which a non-aromatic epoxy resin alone was used, it was shown that a high UV resistance was achieved, whereas in Comparative example 12, an aromatic epoxy alone was used as epoxy resin, resulting in a poor UV resistance.

<Examples 58, 59, 62, 77, 82, and 83 and Comparative examples 15 and 16>

In Examples 58 and 59, different compounds were added as the component [C] for comparison, and it was shown that as compared with the case where polyvinyl formal was adopted, the use of polyvinyl acetoacetal served more effectively to decrease the resin flow percentage. In Examples 58 and 77 and Examples 59 and 62, it was shown that a larger quantity of the component [C] served to achieve a larger decrease in the resin flow percentage.

In Examples 82 and 83, in which the polyvinyl formal used as the non-aromatic thermoplastic resin of the component [C] accounted for 20 parts by mass and 75 parts by mass, respectively, it was shown that sheet shaped intermediate material was high in tackiness and bonding property in both Examples.

As compared with this, in Comparative example 15, in which the non-aromatic epoxy resin added as the component [C] accounted for as small as 10 parts by mass, some resin was found to remain on the prepreg after peeling off the sheet shaped intermediate material from the prepreg, and a low rating was given in terms of tackiness. Furthermore, in Comparative example 5, in which the non-aromatic epoxy resin added as the component [C] accounted for as large as 80 parts by mass, the test piece failed to have sufficient bonding property and was rated as poor in terms of bonding property.

<Examples 59 to 61, and 86 and Comparative example 19>

In Examples 59 to 61, it was shown that a sheet shaped intermediate material with good physical properties were produced when using a non-aromatic epoxy component regardless of whether the component contained only one compound or a plurality of compounds.

Furthermore, in Example 86, UV resistance evaluation test gave a high rating, and it was shown that the use of an epoxy resin composition in which an aromatic epoxy resin accounted for 10 mass parts of the total quantity of epoxy resins contained in the epoxy resin composition led to a high UV resistance.

In Comparative example 19, on the other hand, UV resistance evaluation test gave a low rating and it was shown that the use of an epoxy resin composition in which an aromatic epoxy resin accounted for 20 parts of the total quantity of epoxy resins contained in the epoxy resin composition led to a low UV resistance.

<Examples 57, 58, and 63 to 66 and Comparative examples 17 and 18>

In Example 63, the quantity of the iodonium salt used as the cationic curing agent of the component [D] was larger than in Example 57. In Example 63, it was shown that the epoxy resin composition had a higher curability than in Example 57, but on the other hand, it had a shorter pot life. However, it was shown to serve effectively to achieve a larger decrease in the volatilization percentage and resin flow percentage.

Similarly, in Example 64, the quantity of benzylmethyl p-hydroxyphenylsulfonium hexafluoroantimonate, which was used as the cationic curing agent of the component [D], was increased as compared with Example 58. In Example 64, it was shown that the epoxy resin composition had a higher curability than in Example 58, but on the other hand, it had a shorter pot life. However, it was shown to serve effectively to achieve a large decrease in the volatilization percentage and resin flow percentage.

In Examples 65 and 66, two compounds, namely, dimethyl-p-acetoxyphenylsulfonium hexafluoroantimonate and benzylmethyl p-hydroxyphenylsulfonium hexafluoroantimonate, were used as the cationic curing agent of the component [D]. In Examples 65, the curability was lower, but the pot life was longer than in Example 64. In Examples 66, the curability was higher, but the pot life was shorter than in Example 65. These results indicate therefore that the balance between the curability and pot life of an epoxy resin composition can be adjusted properly by optimizing the content of the cationic curing agent of the component [D], or in the case where the component [D] contains two cationic curing agents, by optimizing the content ratio between them.

In Example 17, 0.05 part of dimethyl-p-acetoxyphenylsulfonium hexafluoroantimonate was added as the cationic curing agent of the component [D]. In Comparative example 17, the curability was low, and a low rating was given in terms of the volatilization percentage and the quantity of resin getting into the sheet shaped intermediate material from the prepreg during the molding step.

On the other hand, in Example 18, 15 parts by mass of benzylmethyl p-hydroxyphenylsulfonium hexafluoroantimonate was added. The curability was high, but the pot life shortened significantly. In addition, a low rating was given in terms of the quantity of resin getting into the sheet shaped intermediate material from the prepreg during the molding step. In Comparative example 18, furthermore, it was shown that the sheet shaped intermediate material had a low UV resistance.

<Examples 67 and 68, Examples 84 and 85, and Comparative examples 13 and 14>

In Example 67 and 68, it was shown that the curability decreased and the pot life improved with an increasing quantity of titanium oxide. This indicates that the reactivity of an epoxy resin composition can be controlled by changing the quantity of titanium oxide. Furthermore, it was shown that an increase in the quantity of titanium oxide served effectively to decrease the quantity of resin getting into the sheet shaped intermediate material from the prepreg during the molding step.

In Example 84 and 85, the titanium oxide of the component [B] accounted for 15 parts by mass and 75 parts by mass, respectively. It was shown that in Example 85, as compared with Example 84, the curability was lower and a decrease in the volatilization percentage was achieved effectively. In both of them, furthermore, high ratings were given in terms of UV resistance and the quantity of resin getting into the sheet shaped intermediate material from the prepreg during the molding step.

In Comparative example 13, in which 10 parts by mass of the titanium oxide of the component [B] was added, a larger quantity of resin got into the sheet shaped intermediate material from the prepreg during the molding, and a low rating was given. Furthermore, in Comparative example 14, in which the titanium oxide of the component [B] accounted for 100 parts by mass, the curability was low and a low rating was given in terms of the volatilization percentage after heating at 180°C for 1 hour.

<Examples 64, 69, and 71>

In Examples 69 to 71, the component [F], i.e. cure stabilizer, was added. In Examples 69, the pot life was longer than in Example 64. Furthermore, in Examples 71, the pot life was still longer than in Example 69. Similarly, the pot life in Example 70 was longer than in Example 64. In addition, in Examples 69 to 71, high ratings were given in terms of all volatility, UV resistance, and the quantity of resin getting into the sheet shaped intermediate material from the prepreg during the molding step.

<Examples 64, 72 to 74>

In Examples 72 to 74, the component [E], i.e. thixotropic agent, was added. In Examples 72 and 73, as compared with Example 8, 4 parts of fumed silica or 4 parts of alkyl ammonium clay was added, and it was shown that they served effectively to achieve a larger decrease in the resin flow percentage and in the quantity of resin getting into the sheet shaped intermediate material from the prepreg during the molding step without suffering a deterioration in tackiness, bonding property, curability, and UV resistance. Furthermore, in Example 74, as compared with Example 64, 4 parts each of fumed silica and alkyl ammonium clay were added, and it was shown that they served effectively to achieve a larger decrease in the resin flow percentage and in the quantity of resin getting into the sheet shaped intermediate material from the prepreg during the molding step than in Example 73.

<Examples 64, 75, and 76>

In Examples 75 and 76, in which both the component [E], i.e. thixotropic agent, and the component [F], i.e. cure stabilizer, were added, it was shown that they served to achieve a larger decrease in the resin flow percentage and the quantity of resin getting into the sheet shaped intermediate material from the prepreg during the molding step and improve the pot life as compared with Example 64.

<Examples 77 to 81>

In Examples 77 to 81, all the components [A] to [F] were added. In Examples 77 to 88, the component [B], i.e. titanium oxide, and the component [C], i.e. non-aromatic thermoplastic resin, were used in different quantities, and different compounds were used as the component [F], i.e. cure stabilizer. In Example 78, it was shown that they served effectively to achieve a larger decrease in the resin flow percentage and the quantity of resin getting into the sheet shaped intermediate material from the prepreg during the molding step than in Example 77. In Examples 79 to 81, it was shown that a larger content of polyvinyl formal and the use of two thixotropic agents served more effectively to decrease the resin flow percentage and the quantity of resin getting into the sheet shaped intermediate material from the prepreg during the molding step.

<Comparative example 20>

In Comparative example 20, an anhydride was used as the non-aromatic epoxy resin curing agent. However, such an anhydride is low in viscosity and, furthermore, has to be added in a large quantity as compared with the component [D], and therefore, the epoxy resin composition was so low in viscosity that when the epoxy resin composition was applied to a release paper support, the resin fell from the release paper under its own weight, accordingly failing to produce a resin film as intended.

<Examples 64, and 87 to 97 and Comparative examples 21 and 22>

In Examples 87 to 89, diglycidyl ether of 2,2-bis(4-hydroxycyclohexyl) propane was used as the component [A], i.e. non-aromatic epoxy resin, and one of polyvinyl formal, polyvinyl acetoacetal, and polyvinyl butyral was used as the component [C], i.e. non-aromatic thermoplastic resin. The elastic modulus of the cured epoxy resin composition decreased and the bending strain improved in the order of Example 87, 88, and 89. Furthermore, when Example 87 and Example 64 were compared, the exothermic reaction peak temperature was lower, but a longer pot life was achieved in Example 87. Thus, it was shown possible to control the reactivity by changing the type of the component [A] and adjust properly the balance between the curability and the pot life, or more specifically between the processability and the effect of decreasing the resin flow percentage or decreasing the quantity of resin getting into like intermediate base material from the prepreg during the molding step.

In Examples 90 and 91, the component [G], i.e. rubber, was used. It was shown that an increase in the content of the component [G] resulted in a decrease in the elastic modulus of the cured epoxy resin composition, an improved bending strain, and a decrease in the resin flow percentage. On the other hand, in Comparative example 21, the use of an excessive quantity of the component [G] resulted in a low rating in terms of bonding property. In Comparative example 21, in which the quantity of the component [G] was excessively small, it failed to achieve a sufficient decrease in the resin flow percentage and an excessive quantity of resin got into the sheet shaped intermediate material from the prepreg during the molding step, resulting in a rating of "poor".

In Examples 92 and 93, two compounds, namely, (3',4'-epoxycyclohexane)methyl 3,4-epoxycyclohexane carboxylate and diglycidyl ether of 2,2-bis(4-hydroxycyclohexyl) propane, were used as the component [A], i.e. non-aromatic epoxy resin. When Examples 87, 92, and 93 were compared, it was shown that a larger content of (3',4'-epoxycyclohexane)methyl 3,4-epoxycyclohexane carboxylate led to a lower exothermic reaction peak temperature and a larger decrease in the resin flow percentage and the quantity of resin getting into sheet shaped intermediate material from the prepreg during the molding step. It was shown that the curability was high in Example 64, whereas the pot life was favorable in Example 87, in which diglycidyl ether of 2,2-bis(4-hydroxycyclohexyl) propane alone was used. In Examples 92 and 93, the use of both of the above compounds served to achieve both a high curability and a favorable pot life. Thus, it was shown that the use of the two non-aromatic epoxy resin compounds as the component [A] served to control the reactivity of the epoxy resin composition and adjust properly the balance between the curability and the pot life, or more specifically between the processability and the effect of decreasing the resin flow percentage or the quantity of resin getting into the sheet shaped intermediate material from the prepreg molding step. Here, when Examples 64 and 87 were compared, it was shown that as compared with Example 64, in which (3',4'-epoxycyclohexane)methyl 3,4-epoxycyclohexane carboxylate was used as the non-aromatic epoxy resin of the component [A], the cured epoxy resin had a larger bending strain in Example 87, in which diglycidyl ether of 2,2-bis(4-hydroxycyclohexyl) propane was used. When Examples 92 and 93 were compared, it was shown that a higher proportion of diglycidyl ether of 2,2-bis(4-hydroxycyclohexyl) propane used as the non-aromatic epoxy resin of the component [A] allowed the cured epoxy resin to have a larger bending strain.

As the non-aromatic epoxy resin of the component [A], (3',4'-epoxycyclohexane)methyl 3,4-epoxycyclohexane carboxylate was used in Example 94 whereas (3',4'-epoxycyclohexane)methyl 3,4-epoxycyclohexane carboxylate and diglycidyl ether of 2,2-bis(4-hydroxycyclohexyl) propane were used in Example 95. The component [F], i.e. cure stabilizer, was used in both Examples. When comparing Example 94 with Example 87 and comparing Example 95 with Example 93, the exothermic reaction peak temperature was higher in Examples 94 and 95, and it was shown that the incorporation of the component [F] served to control the reactivity of the epoxy resin composition.

As the non-aromatic epoxy resin of the component [A], (3',4'-epoxycyclohexane)methyl 3,4-epoxycyclohexane carboxylate was used in Example 96 whereas (3',4'-epoxycyclohexane)methyl 3,4-epoxycyclohexane carboxylate and diglycidyl ether of 2,2-bis(4-hydroxycyclohexyl) propane were used in Example 97. The component [E], i.e. thixotropic agent, the component [F], i.e. cure stabilizer, and the component [G], i.e. rubber, were used in both Examples. When comparing Example 96 with Example 87 and comparing Example 97 with Example 93, it was shown that the incorporation of the component [F] served to further improve the pot life of the epoxy resin composition in both Examples 96 and 97. Furthermore, when comparing Example 96 with Example 94 and comparing Example 97 with Example 95, it was shown that in Examples 96 and 97, the incorporation of the component [F] and the component [G] served to decrease the resin flow percentage and also decrease the quantity of resin getting into the sheet shaped intermediate material from the prepreg during the molding step while maintaining the effect of improving the pot life.

<Examples 98 to 119>

In Example 98 to 119, the surface of a prepreg having an adjusted degree of cure was left untreated or polished, and it was coated with a coating agent that contained an epoxy resin composition with UV resistance. Then, the coating agent was cured by UV irradiation, followed by final heat-curing in an autoclave. In Examples 98 to 119, a high rating was given in terms of the quantity of resin getting into the coating agent from the prepreg during the heat-molding step. In addition, it was shown that an increase in the degree of cure of the prepreg before coating led to a larger decrease in the quantity of resin getting into the coating agent from the prepreg during the heat-molding step, and in particular, this effect was noticeable in Examples 102 to 119.

In Examples 97 to 111, a high rating was given in terms of the adhesiveness between the coating agent and the fiber reinforced composite material base after the heat-curing step. Among Examples 112 to 119, a low rating was given in terms of the adhesiveness between the coating agent and the fiber reinforced composite material base in the fiber reinforced composite material in Example 112, 114, 116, and 118, in which surface polishing of the prepreg was not performed before coating it with a coating agent, whereas a high rating was given in terms of the adhesiveness between the coating agent and the fiber reinforced composite material base in the fiber reinforced composite material in Example 113, 115, 117, and 119, in which the surface of the fiber reinforced composite material base was polished.

<Examples 120 to 141>

In Example 120 to 141, the surface of a RTM material having an adjusted degree of cure was left untreated or polished, and it was coated with a coating agent that contained an epoxy resin composition with UV resistance. Then, the coating agent was cured by UV irradiation, followed by final heat-curing in an oven. In Examples 120 to 141, a high rating was given in terms of the quantity of resin getting into the coating agent from the RTM material during the heat-molding step. In addition, it was shown that an increase in the degree of cure of the RTM material before coating led to a larger decrease in the quantity of resin getting into the coating agent from the RTM material during the heat-molding step, and in particular, this effect was noticeable in Examples 124 to 141.

In Examples 120 to 141, a high rating was given in terms of the adhesiveness between the coating agent and the fiber reinforced composite material after the heat-curing step. Among Examples 134 to 141, a low rating was given in terms of the adhesiveness between the coating agent and the fiber reinforced composite material base in the fiber reinforced composite material in Example 134, 136, 138, and 140, in which surface polishing of the RTM material was not performed before coating it with a coating agent, whereas a high rating was given in terms of the adhesiveness between the coating agent and the fiber reinforced composite material base in the fiber reinforced composite material in Example 135, 137, 139, and 141, in which the surface of the fiber reinforced composite material base was polished.

<Comparative examples 23 and 24)

In Comparative examples 23 and 24, a coating agent containing an epoxy resin composition with UV resistance was applied first to the surface of an untreated prepreg or a RTM material and, without curing the coating agent by UV irradiation, the prepreg was heat-cured in an autoclave while the RTM material was heat-cured in an oven. In Comparative examples 23 and 24, a high rating was given in terms of the adhesiveness between the coating agent and the fiber reinforced composite material base in the fiber reinforced composite material, but a large quantity of resin got into the coating agent from the prepreg or the RTM material during the heat-molding step, resulting in a low rating.

<Examples 142 to 151>

In Example 142 to 151, a coating agent containing an epoxy resin composition with UV resistance was applied with a brush or a bar coater to the surface of a prepreg having an adjusted degree of cure, and then the coating agent was cured by UV irradiation, followed by final heat-curing in an autoclave. In Examples 142 to 151, a high rating was given in terms of the quantity of resin getting into the coating agent from the prepreg during the heat-molding step. In addition, it was shown that an increase in the degree of cure of the prepreg before coating led to a larger decrease in the quantity of resin getting into the coating agent from the prepreg during the heat-molding step.

<Examples 147, 149, and 152 to 161>

In Example 152 to 161, a coating agent containing an epoxy resin composition with UV resistance was applied with a bar coater to the surface of a prepreg having an adjusted degree of cure, and then the coating agent was cured by UV irradiation, followed by final heat-curing in an autoclave. In Examples 152 to 161, a high rating was given in terms of the quantity of resin getting into the coating agent from the prepreg during the heat-molding step. In addition, it was shown that an increase in the degree of cure of the prepreg before coating led to a larger decrease in the quantity of resin getting into the coating agent from the prepreg during the heat-molding step.

In Examples 152 and 153, the component [E], i.e. thixotropic agent, was added to the epoxy resin compositions described in Examples 147 and 149, which correspond thereto. When Examples 152 and 153 were compared with Example 147 and 149, it was seen that the quantity of resin getting into the coating agent from the prepreg during the heat-molding step was smaller in Example 152 and 153.

In Examples 154 and 155, the component [F], i.e. cure stabilizer, was added to the epoxy resin compositions described in Examples 147 and 149, which correspond thereto. When Examples 154 and 155 were compared with Example 147 and 149, it was seen that the addition of a cure stabilizer led to an increase in the quantity of resin getting into the coating agent from the prepreg during the heat-molding step, but a high rating was given. The component [F], i.e. cure stabilizer, acts to suppress the curing reaction and enhance the processability in the epoxy resin composition preparation step, and therefore, it was shown that this makes it possible to control them so as to realize both an increased processability in that step and a decreased quantity of resin getting into the coating agent from the prepreg during the heat-molding step.

In Examples 156 and 157, the component [G], i.e. rubber, was added to the epoxy resin compositions described in Examples 147 and 149, which correspond thereto. When Examples 156 and 157 were compared with Example 147 and 149, it was seen that the quantity of resin getting into the coating agent from the prepreg during the heat-molding step was smaller in Example 156 and 157.

In Examples 158 and 159, the component [A] contained two non-aromatic epoxy resin compounds. As compared with Examples 147 and 149, which correspond thereto, it was seen that the addition of the two compounds as the component [A] led to an increase in the quantity of resin getting into the coating agent from the prepreg during the heat-molding step, but a high rating was given.

In Examples 160 and 161, the component [A] contained two non-aromatic epoxy resin compounds, and the component [E], i.e. thixotropic agent, component [F], i.e. cure stabilizer, and component [G], i.e. rubber, were added. In Examples 154, 155, 158, and 159, the addition of two compounds as the component [A] and the component [F], i.e. cure stabilizer was seen to act to increase the quantity of resin getting into the coating agent from the prepreg during the heat-molding step, whereas in Examples 152, 153, 156, and 157, the addition of the component [E], i.e. thixotropic agent, and the component [G], i.e. rubber, was seen to act more strongly to decrease the quantity of resin getting into the coating agent from the prepreg during the heat-molding step. Thus, it was shown possible to control the quantity of resin getting into the coating agent from the prepreg during the heat-molding step.

<Comparative examples 25 and 26)

In Comparative examples 25 and 26, a coating agent containing an epoxy resin composition with UV resistance was applied first to the surface of an untreated prepreg and, without curing the coating agent by UV irradiation, the prepreg was heat-cured in an oven. In Comparative examples 25 and 26, a high rating was given in terms of the adhesiveness between the coating agent and the fiber reinforced composite material base in the fiber reinforced composite material, but a large quantity of resin got into the coating agent from the prepreg during the heat-molding step, resulting in a low rating.

<Examples 163 to 184>

In Examples 163 to 184, a resin film including an epoxy resin composition with UV resistance and UV shielding property was attached to a mold and the resin film was cured by UV irradiation. Then, a fiber reinforced composite material base formed of a prepreg untreated or with an adjusted degree of cure having an untreated or polished surface was laid on top thereof to provide a fiber reinforced composite intermediate, which was finally molded in an autoclave.
In Examples 163 to 184, a high rating was given in terms of the quantity of resin getting into the resin film from the prepreg during the molding step. In addition, it was shown that an increase in the degree of cure of the prepreg led to a larger decrease in the quantity of resin getting into the resin film from the prepreg during the heat-molding step, and in particular, this effect was noticeable in Examples 167 to 184.
In Examples 163 to 176, a high rating was given in terms of the adhesiveness between the resin film and the fiber reinforced composite material base after the molding step. Among Examples 177 to 184, a low rating was given in terms of the adhesiveness between the resin film and the fiber reinforced composite material base in the fiber reinforced composite material in Example 177, 179, 181, and 183, in which surface polishing of the prepreg with an adjusted degree of cure was not performed, whereas a high rating was given in terms of the adhesiveness between the resin film and the fiber reinforced composite material base in the fiber reinforced composite material in Example 178, 180, 182, and 184, in which the surface of the fiber reinforced composite material base was polished.

<Examples 185 to 205>

In Examples 185 to 205, a resin film including an epoxy resin composition with UV resistance and UV shielding property was attached to a mold and the resin film was cured by UV irradiation. Then, a fiber reinforced composite material base formed of a RTM material with an adjusted degree of cure having an untreated or polished surface was laid on top thereof to provide a fiber reinforced composite intermediate, which was finally heat-cured in an oven. In the case where pretreatment was omitted, a preform was laid on a photo-cured resin film and, while maintaining them as they were, the resin A was injected at 60°C, followed by heat-curing in an oven.
In Examples 185 to 205, a high rating was given in terms of the quantity of resin getting into the resin film from the RTM material during the heat-curing step. In addition, it was shown that an increase in the degree of cure of the RTM material led to a larger decrease in the quantity of resin getting into the resin film from the RTM material during the heat-molding step, and in particular, this effect was noticeable in Examples 188 to 205.
In Examples 185 to 197, a high rating was given in terms of the adhesiveness between the resin film and the fiber reinforced composite material after the heat-molding step. Among Examples 198 to 205, a low rating was given in terms of the adhesiveness between the resin film and the fiber reinforced composite material base in the fiber reinforced composite material in Example 198, 200, 202, and 204, in which surface polishing of the reinforced composite material base with an adjusted degree of cure was not performed, whereas a high rating was given in terms of the adhesiveness between the resin film and the fiber reinforced composite material base in the fiber reinforced composite material in Example 199, 201, 203, and 205, in which the surface of the fiber reinforced composite material base was polished.

<Comparative examples 27 and 28)

In Example 27, a resin film including an epoxy resin composition with UV resistance and UV shielding property was attached to a mold and then, without performing UV irradiation of the resin film, the untreated prepreg was laid on top of them and heat-cured in an autoclave. In Example 28, a resin film including an epoxy resin composition with UV resistance and UV shielding property was attached to a mold and then, without performing UV irradiation of the resin film, a preform was laid on top of them. While maintaining them as they were, the resin A was injected at 60°C and heat-curing was performed in an oven to provide a fiber composite material containing a RTM material.
In Comparative examples 27 and 28, a high rating was given in terms of the adhesiveness between the resin film and the fiber reinforced composite material base in the fiber reinforced composite material, but a large quantity of resin got into the resin film from the prepreg or the RTM material during the heat-molding step, resulting in a low rating.

<Examples 163, 167, and 206 to 215>

In Examples 206 to 215, a resin film including an epoxy resin composition with UV resistance and UV shielding property was attached to a mold and the resin film was cured by UV irradiation. Then, a fiber reinforced composite material base formed of a prepreg untreated or with an adjusted degree of cure having an untreated or polished surface was laid on top thereof to provide a fiber reinforced composite intermediate, which was finally molded in an autoclave. In Examples 206 to 215, a high rating was given in terms of the quantity of resin getting into the coating agent from the prepreg during the heat-molding step. In addition, it was shown that an increase in the degree of cure of the prepreg before coating led to a larger decrease in the quantity of resin getting into the coating agent from the prepreg during the heat-molding step.

In Examples 206 to 217, the component [E], i.e. thixotropic agent, was added to the epoxy resin compositions described in Examples 163 and 167, which correspond thereto. When Examples 206 and 207 were compared with Example 163 and 167, it was seen that the quantity of resin getting into the coating agent from the prepreg during the heat-molding step was smaller in Example 206 and 207.

In Examples 208 and 209, the component [F], i.e. cure stabilizer, was added to the epoxy resin compositions described in Examples 163 and 167, which correspond thereto. When Examples 208 and 209 were compared with Example 163 and 167, it was seen that the addition of a cure stabilizer led to an increase in the quantity of resin getting into the coating agent from the prepreg during the heat-molding step, but a high rating was given. The component [F], i.e. cure stabilizer, acts to suppress the curing reaction and enhance the processability in the epoxy resin composition preparation step, and therefore, it was shown that this makes it possible to control them so as to realize both an increased processability in that step and a decreased quantity of resin getting into the coating agent from the prepreg during the heat-molding step.

In Examples 210 and 211, the component [G], i.e. rubber, was added to the epoxy resin compositions described in Examples 163 and 167, which correspond thereto. When Examples 210 and 211 were compared with Example 163 and 167, it was seen that the quantity of resin getting into the coating agent from the prepreg during the heat-molding step was smaller in Example 210 and 211.

In Examples 212 and 213, the component [A] contained two non-aromatic epoxy resin compounds. As compared with Examples 163 and 167, which correspond thereto, it was seen that the addition of the two compounds as the component [A] led to an increase in the quantity of resin getting into the coating agent from the prepreg during the heat-molding step, but a high rating was given.

In Examples 214 and 215, the component [A] contained two non-aromatic epoxy resin compounds, and the component [E], i.e. thixotropic agent, component [F], i.e. cure stabilizer, and component [G], i.e. rubber, were added. In Examples 208, 209, 212, and 213, the addition of two compounds as the component [A] and a cure stabilizer as the component [F] was seen to act to increase the quantity of resin getting into the coating agent from the prepreg during the heat-molding step, whereas in Examples 206, 207, 210, and 211, the addition of the component [E], i.e. thixotropic agent, and the component [G], i.e. rubber, was seen to act more strongly to decrease the quantity of resin getting into the coating agent from the prepreg during the heat-molding step. Thus, it was shown possible to control the quantity of resin getting into the coating agent from the prepreg during the heat-molding step.

[Table 1]

[Table 1]

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| epoxy resin composition | component [A] non-aromatic epoxy resin | | | | | | | | | | |
| | (3',4'-epoxycyclohexane)methyl 3,4-epoxycyclohexane carboxylate (CELLOXIDE 2021P) | 100 | 100 | 100 | 100 | 100 | 100 | 100 | 100 | 100 | 100 |
| | component [B] pigment with average particle size 0.1 to 10 $\mu$m | | | | | | | | | | |
| | titanium oxide (rutile type) (R-960) | 20 | 20 | 20 | 20 | 20 | 20 | 15 | 20 | 20 | 20 |
| | component [C] non-aromatic thermoplastic resin | | | | | | | | | | |
| | polyvinyl formal (Vinylec K) | 0.2 | 0.2 | | | | | 0.2 | 0.2 | 0.2 | 0.2 |
| | polyvinyl acetoacetal (S-Lec KS-10) | | | 0.2 | 0.05 | 0.5 | 1 | | | | |
| | component [D] cationic curing agent | | | | | | | | | | |
| | iodonium salt (IK-1 PC (80)) | 2 | | | | | | 4 | | | |
| | dimethyl-p-acetoxyphenylsulfonium hexafluoroantimonate (SAN-AID SI-150) | | | | | | | | | 2 | 4 |
| | benzylmethyl p-hydroxyphenylsulfonium hexafluoroantimonate (SAN-AID SI-100) | | 1 | 1 | 1 | 1 | 1 | | 2 | 2 | 2 |
| coating method | | spray | | | | | | | | | |

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| physical properties of epoxy resin composition | viscosity at room temperature (Pa•s) | 0.2 | 0.2 | 0.2 | 0.1 | 0.3 | 0.4 | 0.1 | 0.2 | 0.2 | 0.2 |
| | fast curability — exothermic reaction peak temperature (°C) | 173 | 99 | 98 | 97 | 98 | 98 | 155 | 88 | 129 | 122 |
| | fast curability — rating | D | A | A | A | A | A | D | A | C | C |
| | volatility — volatilization percentage after heating at 180°C for 1 hour (%) | 4.9 | 3.1 | 3.2 | 3.0 | 3.3 | 3.2 | 4.7 | 1.2 | 3.8 | 3.9 |
| | volatility — rating | good | good | good | good | good | good | good | good | good | good |
| | pot life — time required for viscosity increase ratio to reach 3 at 65°C (min) | 120 | 52 | 56 | 54 | 53 | 58 | 120 | 36 | 65 | 51 |
| resin flow percentage | resin flow percentage after molding in autoclave (%) | 19.3 | 9.2 | 8.2 | 8.3 | 8.2 | 5.5 | 14.5 | 7.5 | 11.6 | 11.0 |
| | rating | D | B | B | B | B | B | C | B | C | C |
| UV resistance | change in color of (cured) epoxy resin composition due to 1,000 kJ/m$^2$ UV irradiation | none | none | none | none | none | none | none | none | none | none |

EP 4 082 677 A1

(continued)

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| quantity of resin getting into cured resin from prepreg during molding step | peak value at 1,592 cm$^{-1}$ in IR measurement (-) | 0.60 | 0.38 | 0.35 | 0.36 | 0.38 | 0.33 | 0.59 | 0.34 | 0.46 | 0.44 |
| | rating | good | good | good | good | good | good | good | good | good | good |
| bending test of cured epoxy resin | elastic modulus (GPa) | - | - | - | - | - | - | - | 4.8 | - | - |
| | bending strain (%) | - | - | - | - | - | - | - | 2.5 | - | - |

[Table 2]

[Table 2]

| | | Example 11 | Example 12 | Example 13 | Example 14 | Example 15 | Example 16 | Example 17 | Example 18 | Example 19 | Example 20 |
|---|---|---|---|---|---|---|---|---|---|---|---|
| epoxy resin composition | component [A] non-aromatic epoxy resin | | | | | | | | | | |
| | (3',4'-epoxycyclohexane)methyl 3,4-epoxycyclohexane carboxylate (CELLOXIDE 2021P) | 100 | 100 | 100 | 100 | 100 | 100 | 100 | 100 | 100 | 100 |
| | component [B] pigment with average particle size 0.1 to 10 μm | | | | | | | | | | |
| | titanium oxide (rutile type) (R-960) | 30 | 40 | 20 | 20 | 20 | 20 | 20 | 20 | 20 | 20 |
| | component [C] non-aromatic thermoplastic resin | | | | | | | | | | |
| | polyvinyl formal (Vinylec K) | 0.2 | 0.2 | 0.2 | 0.2 | 0.2 | 0.2 | 0.2 | 0.2 | 0.2 | 0.2 |
| | polyvinyl acetoacetal (S-Lec KS-10) | | | | | | | | | | |
| | component [D] cationic curing agent | | | | | | | | | | |
| | dimethyl-p-acetoxyphenylsulfonium hexafluoroantimonate (SAN-AID SI-150) | | | | | | | | | | |
| | benzylmethyl p-hydroxyphenylsulfonium hexafluoroantimonate (SAN-AID SI-100) | 2 | 2 | 2 | 2 | 2 | 2 | 2 | 2 | 2 | 2 |
| | component [E] thixotropic agent | | | | | | | | | | |
| | fumed silica (RY200 S) | | | | | | 4 | | 4 | 4 | 4 |

(continued)

| | | | Example 11 | Example 12 | Example 13 | Example 14 | Example 15 | Example 16 | Example 17 | Example 18 | Example 19 | Example 20 |
|---|---|---|---|---|---|---|---|---|---|---|---|---|
| | alkyl ammonium clay (GARAMITE 1958) | | | | | | | | 4 | 4 | 4 | 4 |
| | component [F] cure stabilizer | | | | | | | | | | | |
| | bonding property (only for manual coating with bar coater) | | | | 0.2 | | 1 | | | | 0.2 | |
| | 4-(methylthio)phenol (SAN-AID S-ME) | | | | | 0.2 | | | | | | 0.2 |
| | coating method | | spray | | | | | | | | | |
| physical properties of epoxy resin | | viscosity at room temperature (Pa•s) | 0.3 | 0.5 | 0.2 | 0.2 | 0.2 | 0.2 | 0.2 | 0.2 | 0.2 | 0.2 |
| | fast curability | exothermic reaction peak temperature (°C) | 87 | 88 | 109 | 106 | 115 | 91 | 93 | 96 | 110 | 105 |
| | | rating | A | A | B | B | B | A | A | A | B | B |
| composition | volatility | volatilization percentage after heating at 180°C for 1 hour (%) | 1.3 | 1.4 | 2.1 | 1.9 | 1.7 | 1.5 | 1.6 | 1.8 | 2.0 | 1.9 |
| | | rating | good | good | good | good | good | good | good | good | good | good |
| | pot life | time required for viscosity increase ratio to reach 3 at 65°C (min) | 40 | 46 | 95 | 92 | 120 | 35 | 38 | 38 | 98 | 90 |
| | resin flow percentage | resin flow percentage after molding in autoclave (%) | 8.0 | 7.8 | 8.6 | 8.7 | 8.5 | 5.6 | 6.2 | 5.1 | 5.8 | 5.9 |
| | | rating | B | B | B | B | B | B | B | B | B | B |

| | | | Example 11 | Example 12 | Example 13 | Example 14 | Example 15 | Example 16 | Example 17 | Example 18 | Example 19 | Example 20 |
|---|---|---|---|---|---|---|---|---|---|---|---|---|
| UV resistance | | change in color of (cured) epoxy resin composition due to 1,000 kJ/m$^2$ UV irradiation | none | none | none | none | none | none | none | none | none | none |
| quantity of resin getting into cured resin from prepreg during molding step | peak value at 1,592 cm$^{-1}$ in IR measurement (-) | | 0.35 | 0.31 | 0.41 | 0.39 | 0.42 | 0.24 | 0.26 | 0.21 | 0.24 | 0.23 |
| | rating | | good | good | good | good | good | good | good | good | good | good |

EP 4 082 677 A1

[Table 3]

[Table 3]

| | | | Example 21 | Example 22 | Example 23 | Example 24 | Example 25 | Example 26 | Example 27 | Example 28 | Example 29 | Example 30 |
|---|---|---|---|---|---|---|---|---|---|---|---|---|---|
| epoxy resin composition | component [A] non-aromatic epoxy resin | | | | | | | | | | | |
| | (3',4'-epoxycyclohexane)methyl 3,4-epoxycyclohexane carboxylate (CELLOXIDE 2021P) | | 100 | 100 | 100 | 70 | 70 | 100 | 100 | 100 | 100 | 100 |
| | 1,2-epoxy-4-(2-oxiranyl)cyclohexane addition product of 2,2-bis(hydroxymethyl)-1-butanol (EHPE-3150) | | | | | 30 | | | | | | |
| | epsilon-caprolactone modified tetra(3,4-epoxycyclohexylmethyl) butanetetracarboxylate (EPOLEAD GT401) | | | | | | 30 | | | | | |

| | | | Example 21 | Example 22 | Example 23 | Example 24 | Example 25 | Example 26 | Example 27 | Example 28 | Example 29 | Example 30 |
|---|---|---|---|---|---|---|---|---|---|---|---|---|---|
| | component [B] pigment with average particle size 0.1 to 10 μm | | | | | | | | | | | |
| | titanium oxide (rutile type) (R-960) | | 30 | 30 | 30 | 30 | 30 | 30 | 30 | 30 | 15 | 75 |
| | component [C] non-aromatic thermoplastic resin | | | | | | | | | | | |
| | polyvinyl formal (Vinylec K) | | 1 | 5 | 30 | 30 | 30 | 40 | 50 | 75 | 30 | 30 |
| | polyvinyl acetoacetal (S-Lec KS-10) | | | | | | | | | | | |
| | component [D] cationic curing agent | | | | | | | | | | | |
| | benzylmethyl p-hydroxyphenylsulfonium hexafluoroantimonate (SAN-AID SI-100) | | 2 | 2 | 2 | 2 | 2 | 2 | 2 | 2 | 2 | 2 |
| coating method | | | manual coating with brush | | manual coating with bar coater | | | | | | | |
| physical properties of epoxy resin composition | viscosity at room temperature (Pa·s) | | 0.6 | 30 | 15,220 | 18,320 | 17,340 | 19,990 | 25,670 | 28,980 | 17,894 | 24,320 |
| | bonding property (only for manual coating with bar coater) | | - | - | good | good | good | good | good | good | good | good |
| | fast curability | exothermic reaction peak temperature (°C) | 89 | 91 | 91 | 89 | 92 | 91 | 93 | 92 | 86 | 100 |
| | | rating | A | A | A | A | A | A | A | A | A | A |
| | volatility | volatilization percentage after heating at 180°C for 1 hour (%) | 2.9 | 3.1 | 3.2 | 3.2 | 3.3 | 3.2 | 2.8 | 2.6 | 3.8 | 3.9 |
| | | rating | good | good | good | good | good | good | good | good | good | good |
| | pot life | time required for viscosity increase ratio to reach 3 at 65°C (min) | 38 | 39 | 39 | 35 | 37 | 37 | 38 | 36 | 28 | 37 |
| | resin flow percentage | resin flow percentage after molding in autoclave (%) | 7.3 | 6.9 | 6.2 | 6.3 | 6.2 | 5.5 | 5.2 | 4.7 | 5.9 | 5.8 |
| | | rating | B | B | B | B | B | B | B | A | B | B |
| | UV resistance | change in color of (cured) epoxy resin composition due to 1,000 kJ/m² UV irradiation | none | none | none | none | none | none | none | none | none | none |
| | quantity of resin getting into cured resin from prepreg during molding step | peak value at 1,592 cm⁻¹ in IR measurement (-) | 0.34 | 0.30 | 0.33 | 0.34 | 0.36 | 0.32 | 0.30 | 0.27 | 0.46 | 0.25 |
| | | rating | good | good | good | good | good | good | good | good | good | good |

| | | Example 21 | Example 22 | Example 23 | Example 24 | Example 25 | Example 26 | Example 27 | Example 28 | Example 29 | Example 30 |
|---|---|---|---|---|---|---|---|---|---|---|---|---|
| bending test of cured epoxy resin | elastic modulus (GPa) | - | - | 4.6 | - | - | - | - | - | - | - |
| | bending strain (%) | - | - | 2.9 | - | - | - | - | - | - | - |

[Table 4]

[Table 4]

| | | Example 31 | Example 32 | Example 33 | Example 34 |
|---|---|---|---|---|---|
| epoxy resin composition | aromatic epoxy resin | | | | |
| | bisphenol A type epoxy resin (jER 828) | | | 10 | |
| | component [A] non-aromatic epoxy resin | | | | |
| | (3',4'-epoxycyclohexane)methyl 3,4-epoxycyclohexane carboxylate (CELLOXIDE 2021P) | 100 | 100 | 90 | 100 |
| | component [B] pigment with average particle size 0.1 to 10 $\mu$m | | | | |
| | titanium oxide (rutile type) (R-960) | 30 | 30 | 30 | 30 |
| | component [C] non-aromatic thermoplastic resin | | | | |
| | polyvinyl formal (Vinylec K) | 30 | 30 | 30 | |
| | polyvinyl formal (Vinylec E) | | | | 30 |
| | component [D] cationic curing agent | | | | |
| | dimethyl-p-acetoxyphenylsulfonium hexafluoroantimonate (SAN-AID SI-150) | | | | |
| | benzylmethyl p-hydroxyphenylsulfonium hexafluoroantimonate (SAN-AID SI-100) | 2 | 2 | 2 | 2 |
| | component [E] thixotropic agent | | | | |
| | fumed silica (RY200 S) | | 4 | | |
| | bonding property (only for manual coating with bar coater) | | 4 | | |
| | component [F] cure stabilizer | | | | |
| | 4-hydroxyphenyldimethyl sulfonium=methyl sulfate (SAN-AID SI-S) | 0.2 | 0.2 | | |
| | 4-(methylthio)phenol (SAN-AID S-ME) | | | | |
| coating method | | manual coating with bar coater | | | |

(continued)

|  |  |  | Example 31 | Example 32 | Example 33 | Example 34 |
|---|---|---|---|---|---|---|
| physical properties of epoxy resin composition | viscosity at room temperature (Pa•s) | | 16,780 | 19,850 | 18,210 | 32,000 |
| | bonding property (only for manual coating with bar coater) | | good | good | good | poor |
| | fast curability | exothermic reaction peak temperature (°C) | 107 | 107 | 100 | 98 |
| | | rating | B | B | A | A |
| | volatility | volatilization percentage after heating at 180°C for 1 hour (%) | 1.2 | 1.4 | 1.5 | 1.2 |
| | | rating | good | good | good | good |
| | pot life | time required for viscosity increase ratio to reach 3 at 65°C (min) | 99 | 98 | 34 | 32 |
| | resin flow percentage | resin flow percentage after molding in autoclave (%) | 6.5 | 3.7 | 3.0 | 1.5 |
| | | rating | B | A | A | A |
| | UV resistance | change in color of (cured) epoxy resin composition due to 1,000 kJ/m$^2$ UV irradiation | none | none | none | none |
| | quantity of resin getting into cured resin from prepreg during molding step | peak value at 1,592 cm$^{-1}$ in IR measurement (-) | 0.28 | 0.25 | 0.58 | 0.13 |
| | | rating | good | good | good | good |

[Table 5]

[Table 5]

| | | Comparative example 1 | Comparative example 2 | Comparative example 3 | Comparative example 4 | Comparative example 5 | Comparative example 6 | Comparative example 7 | Comparative example 8 |
|---|---|---|---|---|---|---|---|---|---|
| epoxy resin composition | aromatic epoxy resin | | | | | | | | |
| | bisphenol A type epoxy resin (jER 828) | 100 | | | | | | | 20 |
| | component [A] non-aromatic epoxy resin | | | | | | | | |
| | (3',4'-epoxycyclohexane) methyl 3,4-epoxycyclohexane carboxylate (CELLOXIDE 2021P) | | 100 | 100 | 100 | 100 | 100 | 100 | 80 |
| | epsilon-caprolactone modified tetra(3,4-epoxycyclohexylm ethyl) butan etetracarboxylate (EPOLEAD GT401) | | | | | | | | |
| | component [B] pigment with average particle size 0.1 to 10 $\mu$m | | | | | | | | |
| | titanium oxide (rutile type) (R-960) | 20 | 10 | 100 | 30 | 30 | 30 | 30 | 30 |
| | component [C] non-aromatic thermoplastic resin | | | | | | | | |
| | polyvinyl formal (Vinylec K) | 0.1 | 0.1 | 30 | | 80 | 0.1 | 0.1 | 0.1 |
| | polyvinyl acetoacetal (S-Lec KS-10) | | | | | | | | |
| | component [D] cationic curing agent | | | | | | | | |
| | dimethyl-p-acetoxyphenylsulfonium hexafluoroantimonate (SAN-AID SI-150) | 4 | | | | | | | |

| | | | Comparative example 1 | Comparative example 2 | Comparative example 3 | Comparative example 4 | Comparative example 5 | Comparative example 6 | Comparative example 7 | Comparative example 8 |
|---|---|---|---|---|---|---|---|---|---|---|
| | benzylmethyl p-hydroxyphenylsulfonium hexafluoroantimonate (SAN-AID SI-100) | | | 3 | 3 | 1 | 3 | | 15 | 2 |
| | coating method | | with brush | spray | manual coating with bar coater | spray | manual coating with bar coater | spray | | |
| physical properties of epoxy resin composition | viscosity at room temperature (Pa•s) | | 5 | 0.1 | 32,160 | 0.05 | 33,450 | 0.2 | 0.2 | 0.5 |
| | bonding property (only for manual coating with bar coater) | | - | - | poor | - | poor | - | - | - |
| | fast curability | exothermic reaction peak temperature (°C) | 153 | 85 | 175 | 88 | 92 | 210 | 65 | 98 |
| | | rating | D | A | D | A | A | D | A | A |

| | | | Comparative example 1 | Comparative example 2 | Comparative example 3 | Comparative example 4 | Comparative example 5 | Comparative example 6 | Comparative example 7 | Comparative example 8 |
|---|---|---|---|---|---|---|---|---|---|---|
| | volatility | volatilization percentage after heating at 180°C for 1 hour (%) | 1.5 | 1.6 | 6.4 | 1.8 | 1.5 | 6.8 | 0.9 | 1.7 |
| | | rating | good | good | poor | good | good | poor | good | good |
| | pot life | time required for viscosity increase ratio to reach 3 at 65°C (min) | 108 | 22 | 25 | 20 | 33 | 120 | 5 | 37 |
| | resin flow percentage | resin flow percentage after molding in autoclave (%) | 12.5 | 6.5 | 25.2 | 32.8 | 3.3 | 34.0 | 4.5 | 3.5 |
| | | rating | C | B | D | D | A | D | A | A |
| | UV resistance | change in color of (cured) epoxy resin composition due to 1,000 kJ/m$^2$ UV irradiation | detected | none | none | none | none | none | detected | detected |
| | quantity of resin getting into cured resin from prepreg during molding step | peak value at 1,592 cm$^{-1}$ in IR measurement (-) | | 1.35 | 0.90 | 0.62 | 0.25 | 1.43 | 1.23 | 0.97 |
| | | rating | | poor | poor | poor | good | poor | poor | poor |

EP 4 082 677 A1

[Table 6]

[Table 6]

| | | Example 35 | Example 36 | Example 37 | Example 38 | Example 39 | Example 40 | Example 41 | Example 42 | Example 43 | Example 44 | Example 45 |
|---|---|---|---|---|---|---|---|---|---|---|---|---|
| epoxy resin composition | component [A] non-aromatic epoxy resin | | | | | | | | | | | |
| | (3',4'-epoxycyclohexane) methyl 3,4-epoxycyclohexane carboxylate (CELLOXIDE 2021P) | | | | | | 10 | 30 | | 30 | | 30 |
| | diglycidyl ether of 2,2-bis(4-hydroxycyclohexyl) propane (YX8000) | 100 | 100 | 100 | 100 | 100 | 90 | 70 | 100 | 70 | 100 | 70 |
| | component [B] pigment with average particle size 0.1 to 10 μm | | | | | | | | | | | |
| | titanium oxide (rutile type) (R-960) | 30 | 30 | 30 | 30 | 30 | 30 | 30 | 30 | 30 | 30 | 30 |
| | component [C] non-aromatic thermoplastic resin | | | | | | | | | | | |
| | polyvinyl formal (Vinylec K) | 0.1 | | | 0.1 | 0.1 | 0.1 | 0.1 | 0.1 | 0.1 | 0.1 | 0.1 |
| | polyvinyl acetoacetal (S-Lec KS-10) | | 0.1 | | | | | | | | | |
| | polyvinyl butyral (S-Lec BX-L) | | | | 0.1 | | | | | | | |

| | | Example 35 | Example 36 | Example 37 | Example 38 | Example 39 | Example 40 | Example 41 | Example 42 | Example 43 | Example 44 | Example 45 |
|---|---|---|---|---|---|---|---|---|---|---|---|---|
| | component [D] cationic curing agent | | | | | | | | | | | |
| | benzylmethyl p-hydroxyphenylsulfonium hexafluoroantimonate (SAN-AID SI-100) | 2 | 2 | 2 | 2 | 2 | 2 | 2 | 2 | 2 | 2 | 2 |
| | component [E] thixotropic agent | | | | | | | | | | | |
| | fumed silica (RY200 S) | | | | | | | | | | 2 | 2 |
| | component [F] cure stabilizer | | | | | | | | | | | |
| | 4-hydroxyphenyldimethyl sulfonium=methyl sulfate (SAN-AID SI-S) | | | | | | | | 0.5 | 0.5 | 0.5 | 0.5 |
| | component [G] rubber | | | | | | | | | | | |
| | silicone rubber powder (KPM-601) | | | | | 0.01 | 1 | | | | 0.5 | 0.5 |
| coating method | | spray | | | | | | | | | | |
| | viscosity at room temperature (Pa•s) | 0.2 | 0.3 | 0.3 | 0.2 | 0.5 | 0.3 | 0.4 | 0.2 | 0.2 | 0.4 | 0.4 |
| fast curability | exothermic reaction peak temperature (°C) | 123 | 122 | 119 | 125 | 124 | 92 | 89 | 130 | 107 | 135 | 104 |
| | rating | C | C | B | C | C | A | A | C | B | C | B |
| volatility | volatilization percentage after heating at 180°C for 1 hour (%) | 1.1 | 1.0 | 0.9 | 1.2 | 1.2 | 0.8 | 0.9 | 2.0 | 0.8 | 1.8 | 1.7 |
| | rating | good | good | good | good | good | good | good | good | good | good | good |

(continued)

| physical properties of epoxy resin composition | | | Example 35 | Example 36 | Example 37 | Example 38 | Example 39 | Example 40 | Example 41 | Example 42 | Example 43 | Example 44 | Example 45 |
|---|---|---|---|---|---|---|---|---|---|---|---|---|---|
| | pot life | time required for viscosity increase ratio to reach 3 at 65°C (min) | 120 | 120 | 120 | 120 | 120 | 120 | 111 | 103 | 120 | 109 | 120 | 120 |
| | resin flow percentage | resin flow percentage after molding in autoclave (%) | 13.2 | 12.3 | 11.3 | 12.8 | 11.6 | 9.3 | 8.9 | 16.1 | 10.2 | 14.8 | 9.2 |
| | | rating | C | C | C | C | C | B | B | D | C | C | B |
| | UV resistance | change in color of (cured) epoxy resin composition due to 1,000 kJ/m$^2$ UV irradiation | none | none | none | none | none | none | none | none | none | none | none |
| | quantity of resin getting into cured resin from prepreg during molding step | peak value at 1,592 cm$^{-1}$ in IR measurement (-) | 0.72 | 0.69 | 0.68 | 0.78 | 0.77 | 0.37 | 0.33 | 0.89 | 0.54 | 0.78 | 0.47 |
| | | rating | good | good | good | good | good | good | good | good | good | good | good |
| | bending test of cured epoxy resin | elastic modulus (GPa) | 4.0 | 3.9 | 3.8 | 3.9 | 3.7 | 4.1 | 4.2 | 4.1 | 4.2 | 3.8 | 4.0 |
| | | bending strain (%) | 2.8 | 2.9 | 3.0 | 2.9 | 3.1 | 2.7 | 2.9 | 2.7 | 2.8 | 3.0 | 2.9 |

[Table 7]

[Table 7]

| | | Example 46 | Example 47 | Example 48 | Example 49 | Example 50 | Example 51 | Example 52 | Example 53 | Example 54 | Example 55 | Example 56 |
|---|---|---|---|---|---|---|---|---|---|---|---|---|
| epoxy resin composition | component [A] non-aromatic epoxy resin | | | | | | | | | | | |
| | (3',4'-epoxycyclohexane) methyl 3,4-epoxycyclohexane carboxylate (CELLOXIDE 2021P) | | | | | | 10 | 30 | | 30 | | 30 |
| | diglycidyl ether of 2,2-bis(4-hydroxycyclohexyl) propane (YX8000) | 100 | 100 | 100 | 100 | 100 | 90 | 70 | 100 | 70 | 100 | 70 |
| | component [B] pigment with average particle size 0.1 to 10 μm | | | | | | | | | | | |
| | titanium oxide (rutile type) (R-960) | 30 | 30 | 30 | 30 | 30 | 30 | 30 | 30 | 30 | 30 | 30 |
| | component [C] non-aromatic thermoplastic resin | | | | | | | | | | | |
| | polyvinyl formal (Vinylec K) | 30 | | | 30 | 30 | 30 | 30 | 30 | 30 | 30 | 30 |
| | polyvinyl acetoacetal (S-Lec KS-10) | | 30 | | | | | | | | | |
| | polyvinyl butyral (S-Lec BX-L) | | | 30 | | | | | | | | |
| | component [D] cationic curing agent | | | | | | | | | | | |
| | benzylmethyl p-hydroxyphenylsulfonium hexafluoroantimonate (SAN-AID SI-100) | 2 | 2 | 2 | 2 | 2 | 2 | 2 | 2 | 2 | 2 | 2 |
| | component [E] thixotropic agent | | | | | | | | | | | |

(continued)

| | | Example 46 | Example 47 | Example 48 | Example 49 | Example 50 | Example 51 | Example 52 | Example 53 | Example 54 | Example 55 | Example 56 |
|---|---|---|---|---|---|---|---|---|---|---|---|---|
| | fumed silica (RY200 S) | | | | | | | | | | 8 | 8 |
| | component [F] cure stabilizer | | | | | | | | | | | |
| | 4-hydroxyphenyldimethyl sulfonium=methyl sulfate (SAN-AID SI-S) | | | | | | | | 0.5 | 0.5 | 0.5 | 0.5 |
| | component [G] rubber | | | | | | | | | | | |
| | silicone rubber powder (KPM-601) | | | | 5 | 50 | | | | | 30 | 30 |
| | coating method | manual coating with bar coater | | | | | | | | | | |
| physical properties of epoxy resin composition | bonding property (only for manual coating with bar coater) | good | good | good | good | good | good | good | good | good | good | good |
| | viscosity at room temperature (Pa•s) | 20,155 | 21,234 | 23,456 | 21,876 | 25,679 | 20,267 | 20,987 | 20,347 | 20,947 | 25,490 | 25,306 |
| | fast curability : exothermic reaction peak temperature (°C) | 125 | 124 | 125 | 122 | 123 | 90 | 84 | 134 | 103 | 132 | 105 |
| | fast curability : rating | C | C | C | C | C | A | A | C | B | C | B |
| | volatility : volatilization percentage after heating at 180°C for 1 hour (%) | 0.9 | 0.8 | 0.9 | 0.7 | 0.8 | 0.6 | 0.5 | 1.0 | 0.8 | 1.0 | 0.7 |
| | volatility : rating | good | good | good | good | good | good | good | good | good | good | good |

(continued)

| | | | Example 46 | Example 47 | Example 48 | Example 49 | Example 50 | Example 51 | Example 52 | Example 53 | Example 54 | Example 55 | Example 56 |
|---|---|---|---|---|---|---|---|---|---|---|---|---|---|
| | pot life | time required for viscosity increase ratio to reach 3 at 65°C (min) | 120 | 120 | 120 | 120 | 120 | 109 | 100 | 120 | 101 | 120 | 120 |
| | resin flow percentage | resin flow percentage after molding in autoclave (%) | 9.8 | 8.9 | 8.3 | 8.7 | 6.8 | 5.7 | 4.8 | 11.5 | 6.4 | 8.7 | 4.3 |
| | | rating | B | B | B | B | B | B | A | C | B | B | A |
| | UV resistance | change in color of (cured) epoxy resin composition due to 1,000 kJ/m$^2$ UV irradiation | none | none | none | none | none | none | none | none | none | none | none |
| | quantity of resin getting into cured resin from prepreg during molding step | peak value at 1,592 cm$^{-1}$ in IR measurement (-) | 0.48 | 0.45 | 0.42 | 0.44 | 0.32 | 0.22 | 0.18 | 0.57 | 0.30 | 0.43 | 0.12 |
| | | rating | good | good | good | good | good | good | good | good | good | good | good |
| | bending test of cured epoxy resin | elastic modulus (GPa) | 3.7 | 3.5 | 3.3 | 3.4 | 2.6 | 3.8 | 4.0 | 3.8 | 4.0 | 2.8 | 3.2 |
| | | bending strain (%) | 3.2 | 3.4 | 3.6 | 3.8 | 5.4 | 3.0 | 2.8 | 3.0 | 2.8 | 5.0 | 3.8 |

[Table 8]

[Table 8]

| | | Comparative example 9 | Comparative example 10 | Comparative example 11 |
|---|---|---|---|---|
| epoxy resin composition | component [A] non-aromatic epoxy resin | | | |
| | (3',4'-epoxycyclohexane)methyl 3,4-epoxycyclohexane carboxylate (CELLOXIDE 2021P) | | | |
| | diglycidyl ether of 2,2-bis(4-hydroxycyclohexyl) propane (YX8000) | 100 | 100 | 100 |
| | component [B] pigment with average particle size 0.1 to 10 μm | | | |
| | titanium oxide (rutile type) (R-960) | 10 | 10 | 10 |
| | component [C] non-aromatic thermoplastic resin | | | |
| | polyvinyl formal (Vinylec K) | 0.1 | 0.1 | 20 |
| | polyvinyl acetoacetal (S-Lec KS-10) | | | |
| | polyvinyl butyral (S-Lec BX-L) | | | |
| | component [D] cationic curing agent | | | |
| | benzylmethyl p-hydroxyphenylsulfonium hexafluoroantimonate (SAN-AID SI-100) | 2 | 2 | 2 |
| | component [G] rubber | | | |
| | silicone rubber powder (KPM-601) | 0.001 | 5 | 70 |
| coating method | | spray | | manual application with bar coater |

(continued)

| | | Comparative example 9 | Comparative example 10 | Comparative example 11 |
|---|---|---|---|---|
| physical properties of epoxy resin composition | bonding property (only for manual coating with bar coater) | - | - | poor |
| | viscosity at room temperature (Pa·s) | 0.05 | 2.3 | 32,987 |
| | fast curability — exothermic reaction peak temperature (°C) | 126 | 124 | 122 |
| | fast curability — rating | C | C | C |
| | volatility — volatilization percentage after heating at 180°C for 1 hour (%) | 1.2 | 1.0 | 0.9 |
| | volatility — rating | good | good | good |
| | pot life — time required for viscosity increase ratio to reach 3 at 65°C (min) | 120 | 120 | 120 |
| | resin flow percentage — resin flow percentage after molding in autoclave (%) | 20.8 | 10.5 | 7.1 |
| | resin flow percentage — rating | D | C | B |
| | UV resistance — change in color of (cured) epoxy resin composition due to 1,000 kJ/m$^2$ UV irradiation | none | none | none |
| | quantity of resin getting into cured resin from prepreg during molding step — peak value at 1,592 cm$^{-1}$ in IR measurement (-) | 1.26 | | 0.76 |
| | quantity of resin getting into cured resin from prepreg during molding step — rating | poor | | good |
| | bending test of cured epoxy resin — elastic modulus (GPa) | 4.1 | 3.5 | 2.2 |
| | bending test of cured epoxy resin — bending strain (%) | 2.5 | 3.4 | 6.3 |

[Table 9]

[Table 9]

| | | Example 57 | Example 58 | Example 59 | Example 60 | Example 61 | Example 62 | Example 63 | Example 64 | Example 65 | Example 66 |
|---|---|---|---|---|---|---|---|---|---|---|---|
| thermosetting resin composition | component [A] non-aromatic epoxy resin | | | | | | | | | | |
| | (3',4'-epoxycyclohexane)methyl 3,4-epoxycyclohexane carboxylate (CELLOXIDE 2021P) | 100 | 100 | 100 | 70 | 70 | 100 | 100 | 100 | 100 | 100 |
| | 1,2-epoxy-4-(2-oxiranyl) cyclohexane addition product of 2,2-bis(hydroxymethyl)-1-butanol (EHPE-3150) | | | | 30 | | | | | | |
| | epsilon-caprolactone modified tetra(3,4-epoxycyclohexylmethyl) butanetetracarboxylate (EPOLEAD GT401) | | | | | 30 | | | | | |
| | component [B] pigment with average particle size 0.1 to 10 $\mu$m | | | | | | | | | | |
| | titanium oxide (rutile type) (R-960) | 30 | 30 | 30 | 30 | 30 | 30 | 30 | 30 | 30 | 30 |
| | component [C] non-aromatic thermoplastic resin | | | | | | | | | | |
| | polyvinyl formal (Vinylec K) | 30 | 30 | | | | | 30 | 30 | 30 | 30 |
| | polyvinyl acetoacetal (S-Lec KS-10) | | | 40 | 40 | 40 | 50 | | | | |
| | component [D] cationic curing agent | | | | | | | | | | |
| | iodonium salt (IK-1 PC (80)) | 1 | | | | | | 4 | | | |

(continued)

|  |  |  | Example 57 | Example 58 | Example 59 | Example 60 | Example 61 | Example 62 | Example 63 | Example 64 | Example 65 | Example 66 |
|---|---|---|---|---|---|---|---|---|---|---|---|---|
|  | dimethyl-p-acetoxyphenylsulfonium hexafluoroantimonate (SAN-AID SI-150) |  |  |  |  |  |  |  |  |  | 2 | 4 |
|  | benzylmethyl p-hydroxyphenylsulfonium hexafluoroantimonate (SAN-AID SI-100) |  |  | 1 | 1 | 1 | 1 | 1 |  | 2 | 2 | 2 |
|  | tackiness characteristics | rating | good | good | good | good | good | good | good | good | good | good |
|  | bonding property | rating | good | good | good | good | good | good | good | good | good | good |
|  | fast curability | exothermic reaction peak temperature (°C) | 180 | 98 | 98 | 97 | 98 | 96 | 165 | 88 | 129 | 122 |
|  |  | rating | D | A | A | A | A | A | D | A | C | C |
|  | volatility | volatilization percentage after heating at 180°C for 1 hour (%) | 4.9 | 3.1 | 3.2 | 3.2 | 3.3 | 3.2 | 4.7 | 1.2 | 3.8 | 3.9 |
|  |  | rating | good | good | good | good | good | good | good | good | good | good |
|  | pot life | time required for viscosity increase ratio to reach 3 at 65°C (min) | 120 | 51 | 55 | 55 | 52 | 58 | 112 | 35 | 64 | 53 |

EP 4 082 677 A1

| | | | Example 57 | Example 58 | Example 59 | Example 60 | Example 61 | Example 62 | Example 63 | Example 64 | Example 65 | Example 66 |
|---|---|---|---|---|---|---|---|---|---|---|---|---|
| characteristics of sheet shaped intermediate material | resin flow percentage | resin flow percentage after molding in autoclave (%) | 18.4 | 7.0 | 6.2 | 6.3 | 6.2 | 5.5 | 11.7 | 5.5 | 9.6 | 9.0 |
| | | rating | D | B | B | B | B | B | C | B | B | B |
| | UV resistance | change in color of cure sheet shaped intermediate material due to 1,000 kJ/m$^2$ UV irradiation | none | none | none | none | none | none | none | none | none | none |
| | quantity of resin getting into sheet shaped intermediate material from prepreg during molding step | peak value at 1,592 cm$^{-1}$ in IR measurement (-) | 0.58 | 0.35 | 0.33 | 0.34 | 0.36 | 0.30 | 0.55 | 0.30 | 0.43 | 0.42 |
| | | rating | good | good | good | good | good | good | good | good | good | good |
| | bending test of cured epoxy resin | elastic modulus (GPa) | - | - | - | - | - | - | - | 4.6 | - | - |
| | | bending strain (%) | - | - | - | - | - | - | - | 2.9 | - | - |

EP 4 082 677 A1

[Table 10]

[Table 10]

| | | Example 67 | Example 68 | Example 69 | Example 70 | Example 71 | Example 72 | Example 73 | Example 74 | Example 75 | Example 76 |
|---|---|---|---|---|---|---|---|---|---|---|---|
| thermosetting resin composition | component [A] non-aromatic epoxy resin | | | | | | | | | | |
| | (3',4'-epoxycyclohexane)methyl 3,4-epoxycyclohexane carboxylate (CELLOXIDE 2021P) | 100 | 100 | 100 | 100 | 100 | 100 | 100 | 100 | 100 | 100 |
| | 1,2-epoxy-4-(2-oxiranyl) cyclohexane addition product of 2,2-bis(hydroxymethyl)-1-butanol (EHPE-3150) | | | | | | | | | | |
| | epsilon-caprolactone modified tetra(3,4-epoxycyclohexylmethyl) butanetetracarboxylate (EPOLEAD GT401) | | | | | | | | | | |
| | component [B] pigment with average particle size 0.1 to 10 $\mu$m | | | | | | | | | | |
| | titanium oxide (rutile type) (R-960) | 40 | 50 | 30 | 30 | 30 | 30 | 30 | 30 | 30 | 30 |
| | component [C] non-aromatic thermoplastic resin | | | | | | | | | | |
| | polyvinyl formal (Vinylec K) | 30 | 30 | 30 | 30 | 30 | 30 | 30 | 30 | 30 | 30 |
| | polyvinyl acetoacetal (S-Lec KS-10) | | | | | | | | | | |
| | component [D] cationic curing agent | | | | | | | | | | |
| | dimethyl-p-acetoxyphenylsulfonium hexafluoroantimonate (SAN-AID SI-150) | | | | | | | | | | |

EP 4 082 677 A1

63

(continued)

| | | | Example 67 | Example 68 | Example 69 | Example 70 | Example 71 | Example 72 | Example 73 | Example 74 | Example 75 | Example 76 |
|---|---|---|---|---|---|---|---|---|---|---|---|---|
| | benzylmethyl p-hydroxyphenylsulfonium hexafluoroantimonate (SAN-AID SI-100) | | 2 | 2 | 2 | 2 | 2 | 2 | 2 | 2 | 2 | 2 |
| | component [E] thixotropic agent | | | | | | | | | | | |
| | fumed silica (RY200 S) | | | | | | | 4 | | 4 | 4 | 4 |
| | alkyl ammonium clay (GARAMITE 1958) | | | | | | | | 4 | 4 | 4 | 4 |
| | component [F] cure stabilizer | | | | | | | | | | | |
| | 4-hydroxyphenyldimethyl sulfonium=methyl sulfate (SAN-AID SI-S) | | | | 0.2 | | 1 | | | | 0.2 | |
| | 4-(methylthio)phenol (SAN-AID S-ME) | | | | | 0.2 | | | | | | 0.2 |
| | tackiness characteristics | rating | good | good | good | good | good | good | good | good | good | good |
| | bonding property | rating | good | good | good | good | good | good | good | good | good | good |
| | fast curability | exothermic reaction peak temperature (°C) | 92 | 97 | 105 | 103 | 110 | 95 | 93 | 96 | 104 | 106 |
| | | rating | A | A | B | B | B | A | A | A | B | B |
| | volatility | volatilization percentage after heating at 180°C for 1 hour (%) | 1.2 | 1.4 | 1.8 | 1.9 | 1.7 | 1.4 | 1.2 | 1.4 | 1.4 | 1.3 |
| | | rating | good | good | good | good | good | good | good | good | good | good |

(continued)

| | | | Example 67 | Example 68 | Example 69 | Example 70 | Example 71 | Example 72 | Example 73 | Example 74 | Example 75 | Example 76 |
|---|---|---|---|---|---|---|---|---|---|---|---|---|
| characteristics of sheet shaped intermediate material | pot life | time required for viscosity increase ratio to reach 3 at 65°C (min) | 40 | 46 | 95 | 92 | 120 | 35 | 38 | 38 | 98 | 90 |
| | resin flow percentage | resin flow percentage after molding in autoclave (%) | 6.5 | 6.0 | 6.5 | 6.8 | 6.4 | 3.5 | 4.1 | 3.1 | 3.7 | 3.9 |
| | | rating | B | B | B | B | B | A | A | A | A | A |
| | resin flow percentage | resin flow percentage after molding in autoclave (%) | 6.5 | 6.0 | 6.5 | 6.8 | 6.4 | 3.5 | 4.1 | 3.1 | 3.7 | 3.9 |
| | | rating | B | B | B | B | B | A | A | A | A | A |
| | UV resistance | change in color of cured sheet shaped intermediate material due to 1,000 kJ/m$^2$ UV irradiation | none | none | none | none | none | none | none | none | none | none |
| | quantity of resin getting into sheet shaped intermediate material from prepreg during molding step | peak value at 1,592 cm$^{-1}$ in IR measurement (-) | 0.28 | 0.25 | 0.36 | 0.37 | 0.35 | 0.18 | 0.30 | 0.25 | 0.30 | 0.31 |
| | | rating | good | good | good | good | good | good | good | good | good | good |

[Table 11]

[Table 11]

| | | Example 77 | Example 78 | Example 79 | Example 80 | Example 81 | Example 82 | Example 83 | Example 84 | Example 85 | Example 86 |
|---|---|---|---|---|---|---|---|---|---|---|---|
| thermosetting resin composition | aromatic epoxy resin | | | | | | | | | | |
| | bisphenol A type epoxy resin (jER 825) | | | | | | | | | | 10 |
| | component [A] non-aromatic epoxy resin | | | | | | | | | | |
| | (3',4'-epoxycyclohexane) methyl 3,4-epoxycyclohexane carboxylate (CELLOXIDE 2021P) | 100 | 100 | 100 | 100 | 100 | 100 | 100 | 100 | 100 | 90 |
| | 1,2-epoxy-4-(2-oxiranyl) cyclohexane addition product of 2,2-bis (hydroxymethyl)-1-butanol (EHPE-3150) | | | | | | | | | | |
| | epsilon-caprolactone modified tetra(3,4-epoxycyclohexylmethyl) | | | | | | | | | | |
| | butanetetracarboxylate (EPOLEAD GT401) | | | | | | | | | | |
| | component [B] pigment with average particle size 0.1 to 10 μm | | | | | | | | | | |
| | titanium oxide (rutile type) (R-960) | 30 | 50 | 30 | 30 | 30 | 30 | 30 | 15 | 75 | 30 |
| | component [C] non-aromatic thermoplastic resin | | | | | | | | | | |

67

(continued)

| | | Example 77 | Example 78 | Example 79 | Example 80 | Example 81 | Example 82 | Example 83 | Example 84 | Example 85 | Example 86 |
|---|---|---|---|---|---|---|---|---|---|---|---|
| | polyvinyl formal (Vinylec K) | 40 | 50 | | | | 20 | 75 | 30 | 30 | 30 |
| | polyvinyl acetoacetal (S-Lec KS-10) | | | 30 | 40 | 50 | | | | | |
| | component [D] cationic curing agent | | | | | | | | | | |
| | benzylmethyl p-hydroxyphenylsulfonium hexafluoroantimonate (SAN-AID SI-100) | 2 | 2 | 2 | 2 | 2 | 2 | 2 | 2 | 2 | 2 |
| | component [E] thixotropic agent | | | | | | | | | | |
| | fumed silica (RY200 S) | 2 | | 2 | | 2 | | | | | |
| | alkyl ammonium clay (GARAMITE 1958) | | 2 | | 2 | 2 | | | | | |
| | component [F] cure stabilizer | | | | | | | | | | |
| | 4-hydroxyphenyldimethyl sulfonium=methyl sulfate (SAN-AID SI-S) | 0.5 | | 0.5 | | 0.5 | | | | | |
| | 4-(methylthio)phenol (SAN-AID S-ME) | | 0.5 | | 0.5 | 0.5 | | | | | |
| tackiness characteristics | rating | good | good | good | good | good | good | good | good | good | good |
| bonding property | rating | good | good | good | good | good | good | good | good | good | good |
| fast curability | exothermic reaction peak temperature (°C) | 104 | 102 | 105 | 105 | 112 | 91 | 93 | 87 | 100 | 98 |
| | rating | B | B | B | B | B | A | A | A | A | A |

| | | | Example 77 | Example 78 | Example 79 | Example 80 | Example 81 | Example 82 | Example 83 | Example 84 | Example 85 | Example 86 |
|---|---|---|---|---|---|---|---|---|---|---|---|---|
| characteristics of sheet shaped intermediate material | volatility | volatilization percentage after heating at 180°C for 1 hour (%) | 1.8 | 2.0 | 1.7 | 2.1 | 1.5 | 1.6 | 1.1 | 1.5 | 1.2 | 1.3 |
| | | rating | good | good | good | good | good | good | good | good | good | good |
| | pot life | time required for viscosity increase ratio to reach 3 at 65°C (min) | 97 | 88 | 94 | 91 | 105 | 41 | 42 | 38 | 48 | 46 |
| | | resin flow percentage after molding in autoclave (%) | 3.3 | 2.5 | 3.2 | 3.6 | 3.7 | 7.0 | 5.8 | 6.1 | 6.5 | 6.2 |
| | pot life | time required for viscosity increase ratio to reach 3 at 65°C (min) | 97 | 88 | 94 | 91 | 105 | 41 | 42 | 38 | 48 | 46 |
| | resin flow percentage | resin flow percentage after molding in autoclave (%) | 3.3 | 2.5 | 3.2 | 3.6 | 3.7 | 7.0 | 5.8 | 6.1 | 6.5 | 6.2 |
| | | rating | A | A | A | A | A | B | B | B | B | B |
| | UV resistance | change in color of cured sheet shaped intermediate material due to 1,000 kJ/m2 UV irradiation | none | none | none | none | none | none | none | none | none | none |

EP 4 082 677 A1

69

(continued)

| | | Example 77 | Example 78 | Example 79 | Example 80 | Example 81 | Example 82 | Example 83 | Example 84 | Example 85 | Example 86 |
|---|---|---|---|---|---|---|---|---|---|---|---|
| quantity of resin getting into sheet shaped intermediate material from prepreg during molding step | peak value at 1,592 cm$^{-1}$ in IR measurement (-) | 0.32 | 0.25 | 0.36 | 0.34 | 0.37 | 0.38 | 0.24 | 0.36 | 0.20 | 0.60 |
| | rating | good | good | good | good | good | good | good | good | good | good |

[Table 12]

[Table 12]

| | | Comparative example 12 | Comparative example 13 | Comparative example 14 | Comparative example 15 | Comparative example 16 | Comparative example 17 | Comparative example 18 | Comparative example 19 | Comparative example 20 |
|---|---|---|---|---|---|---|---|---|---|---|
| thermosetting resin composition | aromatic epoxy resin — bisphenol A type epoxy resin (jER 825) | 100 | | | | | | | 20 | |
| | component [A] non-aromatic epoxy resin — (3',4'-epoxycyclohexane)methyl 3,4-epoxycyclohexane carboxylate (CELLOXIDE 2021P) | | 100 | 100 | 100 | 100 | 100 | 100 | | 100 |
| | epsilon-caprolactone modified tetra(3,4-epoxycyclohexylmethyl) butanetetracarboxylate (EPOLEAD GT401) | | | | | | | | 80 | |
| | component [B] color pigment — titanium oxide (rutile type) (R-960) | 30 | 10 | 100 | 30 | 30 | 30 | 30 | 20 | 30 |
| | component [C] non-aromatic thermoplastic resin — polyvinyl formal (Vinylec K) | 30 | 30 | 30 | 10 | 80 | 30 | 30 | 20 | 30 |
| | polyvinyl acetoacetal (S-Lec KS-10) | | | | | | | | | |
| | component [D] cationic curing agent — dimethyl-p-acetoxyphenylsulfonium hexafluoroantimonate (SAN-AID SI-150) | 4 | | | | | 0.05 | | | |

(continued)

| | | | Comparative example 12 | Comparative example 13 | Comparative example 14 | Comparative example 15 | Comparative example 16 | Comparative example 17 | Comparative example 18 | Comparative example 19 | Comparative example 20 |
|---|---|---|---|---|---|---|---|---|---|---|---|
| | benzylmethyl p-hydroxyphenylsulfonium hexafluoroantimonate (SAN-AID SI-100) | | | 3 | 3 | 3 | 3 | | 15 | 3 | |
| | anhydride | | | | | | | | | | |
| | mixture of 4-methylhexahydrophthalic anhydride and hexahydrophthalic anhydride (RIKACID MH-700) | | | | | | | | | | 120 |
| characteristics of sheet shaped intermediate material | tackiness characteristics | I rating | good | poor | good | poor | good | good | good | good | resin film |
| | bonding property | rating | good | good | poor | good | poor | good | good | Good | |
| | fast curability | exothermic reaction peak temperature (°C) | 152 | 85 | 175 | 88 | 92 | 209 | 215 | 135 | |
| | | rating | D | A | D | A | A | D | D | C | |
| | volatility | volatilization percentage after heating at 180°C for 1 hour (%) | 1.2 | 1.6 | 6.4 | 1.8 | 1.5 | 5.9 | 0.9 | 0.8 | |
| | | rating | good | good | poor | good | poor | poor | good | good | |
| | pot life | time required for viscosity increase ratio to reach 3 at 65°C (min) | 108 | 22 | 25 | 20 | 33 | 120 | 5 | 26 | |

EP 4 082 677 A1

73

(continued)

| | | Comparative example 12 | Comparative example 13 | Comparative example 14 | Comparative example 15 | Comparative example 16 | Comparative example 17 | Comparative example 18 | Comparative example 19 | Comparative example 20 |
|---|---|---|---|---|---|---|---|---|---|---|
| resin flow percentage | resin flow percentage after molding in autoclave (%) | 10.9 | 6.5 | 25.2 | 6.8 | 3.3 | 19.2 | 2.3 | 8.7 | |
| | rating | C | B | D | B | A | D | A | B | |
| UV resistance | change in color of cured sheet shaped intermediate material due to 1,000 kJ/m2 UV irradiation | detected | none | none | none | none | none | detected | detected | |
| quantity of resin getting into sheet shaped intermediate material from prepreg during molding step | peak value at 1,592 cm-1 in IR measurement (-) | | 1.50 | 1.20 | 0.31 | 0.25 | 1.79 | 1.80 | 0.82 | |
| | rating | | poor | poor | good | good | poor | poor | poor | |

74

# EP 4 082 677 A1

[Table 13]

[Table 13]

| | | | Example 87 | Example 88 | Example 89 | Example 90 | Example 91 | Example 92 | Example 93 | Example 94 | Example 95 | Example 96 | Example 97 |
|---|---|---|---|---|---|---|---|---|---|---|---|---|
| thermosetting resin composition | | component [A] non-aromatic epoxy resin | | | | | | | | | | | |
| | | (3',4'-epoxycyclohexane)methyl 3,4-epoxycyclohexane carboxylate (CELLOXIDE 2021P) | | | | | | 10 | 30 | | 30 | | 30 |
| | | diglycidyl ether of 2,2-bis(4-hydroxycyclohexyl) propane (YX8000) | 100 | 100 | 100 | 100 | 100 | 90 | 70 | 100 | 70 | 100 | 70 |
| | | component [B] pigment with average particle size 0.1 to 10 μm | | | | | | | | | | | |
| | | titanium oxide (rutile type) (R-960) | 30 | 30 | 30 | 30 | 30 | 30 | 30 | 30 | 30 | 30 | 30 |
| | | component [C] non-aromatic thermoplastic resin | | | | | | | | | | | |
| | | polyvinyl formal (Vinylec K) | 30 | | | 30 | 30 | 30 | 30 | 30 | 30 | 30 | 30 |
| | | polyvinyl acetoacetal (S-Lec KS-10) | | 30 | | | | | | | | | |
| | | polyvinyl butyral (S-Lec BX-L) | | | 30 | | | | | | | | |
| | | component [D] cationic curing agent | | | | | | | | | | | |
| | | benzylmethyl p-hydroxphenylsulfonium hexafluoroantimonate (SAN-AID SI-100) | 2 | 2 | 2 | 2 | 2 | 2 | 2 | 2 | 2 | 2 | 2 |
| | | component [E] thixotropic agent | | | | | | | | | | | |
| | | fumed silica (RY200 S) | | | | | | | | | | 8 | 8 |
| | | component [F] cure stabilizer | | | | | | | | | | | |
| | | 4-hydroxyphenyldimethyl sulfonium=methyl sulfate (SAN-AID SI-S) | | | | | | | | 0.5 | 0.5 | 0.5 | 0.5 |
| | | component [G] rubber | | | | | | | | | | | |
| | | silicone rubber powder (KPM-601) | | | | 5 | 50 | | | | | 30 | 30 |
| characteristics of sheet shaped intermediate material | tackiness characteristics | rating | good | good | good | good | good | good | good | good | good | good | good |
| | bonding property | rating | good | good | good | good | good | good | good | good | good | good | good |
| | fast curability | exothermic reaction peak temperature (°C) | 125 | 124 | 125 | 122 | 123 | 90 | 84 | 134 | 103 | 132 | 105 |
| | | rating | C | C | C | C | C | A | A | C | B | C | B |
| | volatility | volatilization percentage after heating at 180°C for 1 hour (%) | 0.9 | 0.8 | 0.9 | 0.7 | 0.8 | 0.6 | 0.5 | 1.0 | 0.8 | 1.0 | 0.7 |

| | | | | | | | | | | | | | |
|---|---|---|---|---|---|---|---|---|---|---|---|---|---|
| characteristics of epoxy resin composition | | rating | good | good | good | good | good | good | good | good | good | good | good |
| | pot life | time required for viscosity increase ratio to reach 3 at 65°C (min) | 120 | 120 | 120 | 120 | 120 | 109 | 100 | 120 | 101 | 120 | 120 |
| | resin flow percentage | resin flow percentage after molding in autoclave (%) | 9.8 | 8.9 | 8.3 | 8.7 | 6.8 | 5.7 | 4.8 | 11.5 | 6.4 | 8.7 | 4.3 |
| | | rating | B | B | B | B | B | B | A | C | B | B | A |
| | UV resistance | change in color of cured sheet shaped intermediate material due to 1,000 kJ/m2 UV irradiation | none | none | none | none | none | none | none | none | none | none | none |
| | quantity of resin getting into sheet shaped intermediate material from prepreg during molding step | peak value at 1,592 cm⁻¹ in IR measurement (-) | 0.39 | 0.34 | 0.33 | 0.31 | 0.22 | 0.15 | 0.09 | 0.46 | 0.21 | 0.37 | 0.08 |
| | | rating | good | good | good | good | good | good | good | good | good | good | good |
| | bending test of cured epoxy resin | elastic modulus (GPa) | 3.7 | 3.5 | 3.3 | 3.4 | 2.6 | 3.8 | 4.0 | 3.8 | 4.0 | 2.8 | 3.2 |
| | | bending strain (%) | 3.2 | 3.4 | 3.6 | 3.8 | 5.4 | 3.0 | 2.8 | 3.0 | 2.8 | 5.0 | 3.8 |

[Table 14]

75

[Table 14]

| | | Comparative example 21 | Comparative example 22 |
|---|---|---|---|
| thermosetting resin composition | component [A] non-aromatic epoxy resin | | |
| | (3',4'-epoxycyclohexane) methyl 3,4-epoxycyclohexane carboxylate (CELLOXIDE 2021P) | | |
| | diglycidyl ether of 2,2-bis(4-hydroxycyclohexyl) propane (YX8000) | 100 | 100 |
| | component [B] pigment with average particle size 0.1 to 10 μm | | |
| | titanium oxide (rutile type) (R-960) | 10 | 10 |
| | component [C] non-aromatic thermoplastic resin | | |
| | polyvinyl formal (Vinylec K) | 20 | 20 |
| | component [D] cationic curing agent | | |
| | benzylmethyl p-hydroxyphenylsulfonium hexafluoroantimonate (SAN-AID SI-100) | 2 | 2 |
| | component [G] rubber | | |
| | silicone rubber powder (KPM-601) | 70 | 0.5 |

(continued)

| | | | Comparative example 21 | Comparative example 22 |
|---|---|---|---|---|
| characteristics of sheet shaped intermediate material | tackiness characteristics | rating | good | good |
| | bonding property | rating | poor | good |
| | fast curability | exothermic reaction peak temperature (°C) | 122 | 124 |
| | | rating | C | C |
| | volatility | volatilization percentage after heating at 180°C for 1 hour (%) | 0.9 | 0.8 |
| | | rating | good | good |
| | pot life | time required for viscosity increase ratio to reach 3 at 65°C (min) | 120 | 120 |
| | resin flow percentage | resin flow percentage after molding in autoclave (%) | 7.1 | 18.6 |
| | | rating | B | D |
| | UV resistance | change in color of cured sheet shaped intermediate material due to 1,000 kJ/m2 UV irradiation | none | none |
| | quantity of resin getting into sheet shaped intermediate material from prepreg during molding step | peak value at 1,592 cm$^{-1}$ in IR measurement (-) | 0.76 | 1.76 |
| | | rating | good | poor |
| physical properties of epoxy resin composition | bending test of cured epoxy resin | elastic modulus (GPa) | 2.2 | 3.7 |
| | | bending strain (%) | 6.3 | 3.4 |

[Table 15]

[Table 15]

| | | Example 98 | Example 99 | Example 100 | Example 101 | Example 102 | Example 103 | Example 104 | Example 105 | Example 106 | Example 107 |
|---|---|---|---|---|---|---|---|---|---|---|---|
| epoxy resin composition (coating agent) | component [A] non-aromatic epoxy resin | | | | | | | | | | |
| | (3',4'-epoxycyclohexane) methyl 3,4-epoxycyclohexane carboxylate (CELLOXIDE 2021P) | 100 | 100 | 100 | 100 | 100 | 100 | 100 | 100 | 100 | 100 |
| | component [B] pigment with average particle size 0.1 to 10 $\mu$m | | | | | | | | | | |
| | titanium oxide (rutile type) (R-960) | 20 | 20 | 20 | 20 | 20 | 20 | 20 | 20 | 20 | 20 |
| | component [C] non-aromatic thermoplastic resin | | | | | | | | | | |
| | polyvinyl formal (Vinylec K) | 0.2 | 0.2 | 0.2 | 0.2 | 0.2 | 0.2 | 0.2 | 0.2 | 0.2 | 0.2 |
| | component [D] cationic curing agent | | | | | | | | | | |
| | benzylmethyl p-hydroxyphenylsulfonium hexafluoroantimonate (SAN-AID SI-150) | 0.5 | 0.5 | 0.5 | 0.5 | 0.5 | 0.5 | 0.5 | 0.5 | 0.5 | 0.5 |
| coating method | | spray coating | | | | | | | | | |
| fiber reinforced composite material base precursor to be coated | | T300/3631-2 woven fabric prepreg (6 sheets stacked) | | | | | | | | | |

| | | Example 98 | Example 99 | Example 100 | Example 101 | Example 102 | Example 103 | Example 104 | Example 105 | Example 106 | Example 107 |
|---|---|---|---|---|---|---|---|---|---|---|---|
| treatment before coating | degree of cure of fiber reinforced composite material base (%) | 0 | 0 | 10 | 10 | 20 | 20 | 30 | 30 | 40 | 40 |
| | surface polishing of fiber reinforced composite material base before coating | none | performed | none | performed | none | performed | none | performed | none | performed |
| UV curing of coating agent | | performed | performed | performed | performed | performed | performed | performed | performed | performed | performed |
| physical properties of fiber reinforced composite material | adhesiveness between coating agent and fiber reinforced composite material base in fiber reinforced composite material | good | good | good | good | good | good | good | good | good | good |
| | surface smoothness after UV curing | good | good | good | good | good | good | good | good | good | good |
| | quantity of resin getting into coating agent from fiber reinforced composite material base during heat-molding step — peak value at $1{,}592\ \mathrm{cm}^{-1}$ in IR measurement (-) | 0.52 | 0.51 | 0.42 | 0.38 | 0.32 | 0.33 | 0.22 | 0.25 | 0.18 | 0.15 |
| | rating | good | good | good | good | good | good | good | good | good | good |

EP 4 082 677 A1

79

[Table 16]

[Table 16]

| | | Example 108 | Example 109 | Example 110 | Example 111 | Example 112 | Example 113 | Example 114 | Example 115 | Example 116 | Example 117 | Example 118 | Example 119 |
|---|---|---|---|---|---|---|---|---|---|---|---|---|---|
| epoxy resin composition (coating agent) | component [A] non-aromatic epoxy resin — (3',4'-epoxycyclohexane)methyl 3,4-epoxycyclohexane carboxylate (CELLOXIDE 2021P) | 100 | 100 | 100 | 100 | 100 | 100 | 100 | 100 | 100 | 100 | 100 | 100 |
| | component [B] pigment with average particle size 0.1 to 10 μm — titanium oxide (rutile type) (R-960) | 20 | 20 | 20 | 20 | 20 | 20 | 20 | 20 | 20 | 20 | 20 | 20 |
| | component [C] non-aromatic thermoplastic resin — polyvinyl formal (Vinylec K) | 0.2 | 0.2 | 0.2 | 0.2 | 0.2 | 0.2 | 0.2 | 0.2 | 0.2 | 0.2 | 0.2 | 0.2 |
| | component [D] cationic curing agent — benzylmethyl p-hydroxyphenylsulfonium hexafluoroantimonate (SAN-AID SI-150) | 0.5 | 0.5 | 0.5 | 0.5 | 0.5 | 0.5 | 0.5 | 0.5 | 0.5 | 0.5 | 0.5 | 0.5 |
| coating method | | spray coating | | | | | | | | | | | |
| fiber reinforced composite material base precursor to be coated | | T300/3631-2 woven fabric prepreg (6 sheets stacked) | | | | | | | | | | | |

| | | Example 108 | Example 109 | Example 110 | Example 111 | Example 112 | Example 113 | Example 114 | Example 115 | Example 116 | Example 117 | Example 118 | Example 119 |
|---|---|---|---|---|---|---|---|---|---|---|---|---|---|
| treatment before coating | degree of cure of fiber reinforced composite material base (%) | 50 | 50 | 60 | 60 | 70 | 70 | 80 | 80 | 90 | 90 | 100 | 100 |
| | surface polishing of fiber reinforced composite material base before coating | none | performed | none | performed | none | performed | none | performed | none | performed | none | performed |
| UV curing of coating agent | | performed | performed | performed | performed | performed | performed | performed | performed | performed | performed | performed | performed |
| physical properties of fiber reinforced composite material | adhesiveness between coating agent and fiber reinforced composite material base in fiber reinforced composite material | good | good | good | good | poor | good | poor | good | poor | good | poor | |
| | surface smoothness after UV curing | good | good | good | good | good | good | good | good | good | good | good | good |
| | quantity of resin getting into coating agent from fiber reinforced composite material base during heat-molding step — peak value at 1,592 cm$^{-1}$ in IR measurement (-) | 0.09 | 0.10 | 0.00 | 0.00 | 0.00 | 0.00 | 0.00 | 0.00 | 0.00 | 0.00 | 0.00 | 0.00 |
| | rating | good | good | good | good | good | good | good | good | good | good | good | good |

82

[Table 17]

[Table 17]

| | | Example 120 | Example 121 | Example 122 | Example 123 | Example 124 | Example 125 | Example 126 | Example 127 | Example 128 | Example 129 |
|---|---|---|---|---|---|---|---|---|---|---|---|
| epoxy resin composition (coating agent) | component [A] non-aromatic epoxy resin | | | | | | | | | | |
| | (3',4'-epoxycyclohexane) methyl 3,4-epoxycyclohexane carboxylate (CELLOXIDE 2021P) | 100 | 100 | 100 | 100 | 100 | 100 | 100 | 100 | 100 | 100 |
| | component [B] pigment with average particle size 0.1 to 10 μm | | | | | | | | | | |
| | titanium oxide (rutile type) (R-960) | 20 | 20 | 20 | 20 | 20 | 20 | 20 | 20 | 20 | 20 |
| | component [C] non-aromatic thermoplastic resin | | | | | | | | | | |
| | polyvinyl formal (Vinylec K) | 0.2 | 0.2 | 0.2 | 0.2 | 0.2 | 0.2 | 0.2 | 0.2 | 0.2 | 0.2 |
| | component [D] cationic curing agent | | | | | | | | | | |
| | benzylmethyl p-hydroxyphenylsulfonium hexafluoroantimonate (SAN-AID SI-150) | 0.5 | 0.5 | 0.5 | 0.5 | 0.5 | 0.5 | 0.5 | 0.5 | 0.5 | 0.5 |
| coating method | | spray coating | | | | | | | | | |
| fiber reinforced composite material base precursor to be coated | | RTM material prepared by impregnating preform composed of six T300 woven fabric sheets with resin A by vacuum drawing | | | | | | | | | |

EP 4 082 677 A1

(continued)

| | | Example 120 | Example 121 | Example 122 | Example 123 | Example 124 | Example 125 | Example 126 | Example 127 | Example 128 | Example 129 |
|---|---|---|---|---|---|---|---|---|---|---|---|
| treatment before coating | degree of cure of fiber reinforced composite material base (%) | 0 | 0 | 10 | 10 | 20 | 20 | 30 | 30 | 40 | 40 |
| | surface polishing of fiber reinforced composite material base before coating | none | performed | none | performed | none | performed | none | performed | none | performed |
| UV curing of coating agent | | performed | performed | performed | performed | performed | performed | performed | performed | performed | performed |
| physical properties of fiber reinforced composite material | adhesiveness between coating agent and fiber reinforced composite material base in fiber reinforced composite material | good | good | good | good | good | good | good | good | good | good |
| | surface smoothness after UV curing | good | good | good | good | good | good | good | good | good | good |
| | quantity of resin getting into coating agent from fiber reinforced composite material base during heat-molding step — peak value at 1,592 cm$^{-1}$ in IR measurement (-) | 0.58 | 0.56 | 0.47 | 0.46 | 0.36 | 0.38 | 0.27 | 0.29 | 0.22 | 0.20 |
| | rating | good | good | good | good | good | good | good | good | good | good |

EP 4 082 677 A1

85

[Table 18]

[Table 18]

| | | Example 130 | Example 131 | Example 132 | Example 133 | Example 134 | Example 135 | Example 136 | Example 137 | Example 138 | Example 139 | Example 140 | Example 141 |
|---|---|---|---|---|---|---|---|---|---|---|---|---|---|
| epoxy resin composition (coating agent) | component [A] non-aromatic epoxy resin | | | | | | | | | | | | |
| | (3',4'-epoxycyclohexane) methyl 3,4-epoxycyclohexane carboxylate (CELLOXIDE 2021P) | 100 | 100 | 100 | 100 | 100 | 100 | 100 | 100 | 100 | 100 | 100 | 100 |
| | component [B] pigment with average particle size 0.1 to 10 μm | | | | | | | | | | | | |
| | titanium oxide (rutile type) (R-960) | 20 | 20 | 20 | 20 | 20 | 20 | 20 | 20 | 20 | 20 | 20 | 20 |
| | component [C] non-aromatic thermoplastic resin | | | | | | | | | | | | |
| | polyvinyl formal (Vinylec K) | 0.2 | 0.2 | 0.2 | 0.2 | 0.2 | 0.2 | 0.2 | 0.2 | 0.2 | 0.2 | 0.2 | 0.2 |
| | component [D] cationic curing agent | | | | | | | | | | | | |
| | benzylmethyl p-hydroxyphenylsulfonium hexafluoroantimonate (SAN-AID SI-150) | 0.5 | 0.5 | 0.5 | 0.5 | 0.5 | 0.5 | 0.5 | 0.5 | 0.5 | 0.5 | 0.5 | 0.5 |
| coating method | | spray coating | | | | | | | | | | | |
| fiber reinforced composite material base precursor to be coated | | RTM material prepared by impregnating preform composed of six T300 woven fabric sheets with resin A by vacuum drawing | | | | | | | | | | | |

(continued)

| | | Example 130 | Example 131 | Example 132 | Example 133 | Example 134 | Example 135 | Example 136 | Example 137 | Example 138 | Example 139 | Example 140 | Example 141 |
|---|---|---|---|---|---|---|---|---|---|---|---|---|---|
| treatment before coating | degree of cure of fiber reinforced composite material base (%) | 50 | 50 | 60 | 60 | 70 | 70 | 80 | 80 | 90 | 90 | 100 | 100 |
| | surface polishing of fiber reinforced composite material base before coating | none | performed | none | performed | none | performed | none | performed | none | performed | none | performed |
| UV curing of coating agent | | performed | performed | performed | performed | performed | performed | performed | performed | performed | performed | performed | performed |
| physical properties of fiber reinforced composite material | adhesiveness between coating agent and fiber reinforced composite material base in fiber reinforced composite material | good | good | good | good | poor | good | poor | good | poor | good | poor | good |
| | surface smoothness after UV curing | good | good | good | good | good | good | good | good | good | good | good | good |
| | quantity of resin getting into coating agent from fiber reinforced composite material base during heat-molding step | peak value at 1,592 cm$^{-1}$ in IR measurement (-) | 0.15 | 0.12 | 0.00 | 0.00 | 0.00 | 0.00 | 0.00 | 0.00 | 0.00 | 0.00 | 0.00 | 0.00 |
| | | rating | good | good | good | good | good | good | good | good | good | good | good | good |

[Table 19]

[Table 19]

| | | Comparative example 23 | Comparative example 24 |
|---|---|---|---|
| epoxy resin composition (coating agent) | component [A] non-aromatic epoxy resin | | |
| | (3',4'-epoxycyclohexane)methyl 3,4-epoxycyclohexane carboxylate (CELLOXIDE 2021P) | 100 | 100 |
| | component [B] pigment with average particle size 0.1 to 10 μm | | |
| | titanium oxide (rutile type) (R-960) | 20 | 20 |
| | component [C] non-aromatic thermoplastic resin | | |
| | polyvinyl formal (Vinylec K) | 0.2 | 0.2 |
| | component [D] cationic curing agent | | |
| | benzylmethyl p-hydroxyphenylsulfonium hexafluoroantimonate (SAN-AID SI-150) | 0.5 | 0.5 |
| coating method | | | spray coating |
| fiber reinforced composite material base precursor to be coated | | T300/3631-2 woven fabric prepreg (6 sheets stacked) | RTM material prepared by impregnating preform composed of six T300 woven fabric sheets with resin A by vacuum drawing |
| treatment before coating | degree of cure of fiber reinforced composite material base (%) | 0 | 0 |
| | surface polishing of fiber reinforced composite material base before coating | none | none |
| UV curing of coating agent | | none | none |
| physical properties of fiber reinforced composite material | adhesiveness between coating agent and fiber reinforced composite material base in fiber reinforced composite material | good | good |
| | surface smoothness after UV curing | good | good |
| | quantity of resin getting into coating agent from fiber reinforced composite material base during heat-molding step | peak value at 1,592 cm-1 in IR measurement (-) | 0.85 | |
| | | rating | poor | poor |

[Table 20]

[Table 20]

| | | Example 142 | Example 143 | Example 144 | Example 145 | Example 146 | Example 147 | Example 148 | Example 149 | Example 150 | Example 151 |
|---|---|---|---|---|---|---|---|---|---|---|---|
| epoxy resin composition (coating agent) | component [A] non-aromatic epoxy resin | | | | | | | | | | |
| | (3',4'-epoxycyclohexane) methyl 3,4-epoxycyclohexane carboxylate (CELLOXIDE 2021P) | 100 | 100 | 100 | 100 | 100 | 100 | 100 | 100 | 100 | 100 |
| | component [B] pigment with average particle size 0.1 to 10 μm | | | | | | | | | | |
| | titanium oxide (rutile type) (R-960) | 20 | 20 | 20 | 20 | 20 | 20 | 20 | 20 | 20 | 20 |
| | component [C] non-aromatic thermoplastic resin | | | | | | | | | | |
| | polyvinyl formal (Vinylec K) | 2 | 2 | 2 | 2 | 2 | 20 | 20 | 20 | 20 | 20 |
| | component [D] cationic curing agent | | | | | | | | | | |
| | benzylmethyl p-hydroxyphenylsulfonium hexafluoroantimonate (SAN-AID SI-150) | 0.5 | 0.5 | 0.5 | 0.5 | 0.5 | 0.5 | 0.5 | 0.5 | 0.5 | 0.5 |
| coating method | | manual coating with brush | | | | | manual coating with bar coater | | | | |
| fiber reinforced composite material base precursor to be coated | | T300/3631-2 woven fabric prepreg (6 sheets stacked) | | | | | | | | | |

|  |  | Example 142 | Example 143 | Example 144 | Example 145 | Example 146 | Example 147 | Example 148 | Example 149 | Example 150 | Example 151 |
|---|---|---|---|---|---|---|---|---|---|---|---|
| treatment before coating | degree of cure of fiber reinforced composite material base (%) | 0 | 10 | 20 | 30 | 40 | 0 | 10 | 20 | 30 | 40 |
|  | surface polishing of fiber reinforced composite material base before coating | none | none | none | none | none | none | none | none | none | none |
| UV curing of coating agent | | performed | performed | performed | performed | performed | performed | performed | performed | performed | performed |
| physical properties of fiber reinforced composite material | adhesiveness between coating agent and fiber reinforced composite material base in fiber reinforced composite material | good | good | good | good | good | good | good | good | good | good |
|  | surface smoothness after UV curing | good | good | good | good | good | good | good | good | good | good |
|  | quantity of resin getting into coating agent from fiber reinforced composite material base during heat-molding step — peak value at 1,592 cm$^{-1}$ in IR measurement (-) | 0.48 | 0.46 | 0.39 | 0.28 | 0.17 | 0.43 | 0.38 | 0.24 | 0.14 | 0.09 |
|  | quantity of resin getting into coating agent from fiber reinforced composite material base during heat-molding step — rating | good | good | good | good | good | good | good | good | good | good |

[Table 21]

[Table 21]

| | | Example 152 | Example 153 | Example 154 | Example 155 | Example 156 | Example 157 | Example 158 | Example 159 | Example 160 | Example 161 |
|---|---|---|---|---|---|---|---|---|---|---|---|
| epoxy resin composition (coating agent) | component [A] non-aromatic epoxy resin | | | | | | | | | | |
| | (3',4'-epoxycyclohexane) methyl 3,4-epoxycyclohexane carboxylate (CELLOXIDE 2021P) | 100 | 100 | 100 | 100 | 100 | 100 | 70 | 70 | 70 | 70 |
| | diglycidyl ether of 2,2-bis(4-hydroxycyclohexyl) propane (YX8000) | | | | | | | 30 | 30 | 30 | 30 |
| | component [B] pigment with average particle size 0.1 to 10 μm | | | | | | | | | | |
| | titanium oxide (rutile type) (R-960) | 20 | 20 | 20 | 20 | 20 | 20 | 20 | 20 | 20 | 20 |
| | component [C] non-aromatic thermoplastic resin | | | | | | | | | | |
| | polyvinyl formal (Vinylec K) | 20 | 20 | 20 | 20 | 20 | 20 | 20 | 20 | 20 | 20 |
| | component [D] cationic curing agent | | | | | | | | | | |
| | benzylmethyl p-hydroxyphenylsulfonium hexafluoroantimonate (SAN-AID SI-150) | 0.5 | 0.5 | 0.5 | 0.5 | 0.5 | 0.5 | 0.5 | 0.5 | 0.5 | 0.5 |
| | component [E] thixotropic agent | | | | | | | | | | |
| | fumed silica (RY200 S) | 4.0 | 4.0 | | | | | | | 4.0 | 4.0 |

(continued)

| | | Example 152 | Example 153 | Example 154 | Example 155 | Example 156 | Example 157 | Example 158 | Example 159 | Example 160 | Example 161 |
|---|---|---|---|---|---|---|---|---|---|---|---|
| | component [F] cure stabilizer | | | | | | | | | | |
| | 4-hydroxyphenyldimethyl sulfonium=methyl sulfate (SAN-AID SI-S) | | | 0.1 | 0.1 | | | | | 0.1 | 0.1 |
| | component [G] rubber | | | | | | | | | | |
| | silicon rubber powder (KPM-601) | | | | | 10.0 | 10.0 | | | 10.0 | 10.0 |
| coating method | | manual application with bar coater | | | | | | | | | |
| fiber reinforced composite material base precursor to be coated | | T300/3631-2 woven fabric prepreg (6 sheets stacked) | | | | | | | | | |
| treatment before coating | degree of cure of fiber reinforced composite material base (%) | 0 | 20 | 0 | 20 | 0 | 20 | 0 | 20 | 0 | 20 |
| | surface polishing of fiber reinforced composite material base before coating | none | none | none | none | none | none | none | none | none | none |
| UV curing of coating agent | | performed | performed | performed | performed | performed | performed | performed | performed | performed | performed |

(continued)

| | | Example 152 | Example 153 | Example 154 | Example 155 | Example 156 | Example 157 | Example 158 | Example 159 | Example 160 | Example 161 |
|---|---|---|---|---|---|---|---|---|---|---|---|
| physical properties of fiber reinforced composite material | adhesiveness between coating agent and fiber reinforced composite material base in fiber reinforced composite material | good | good | good | good | good | good | good | good | good | good |
| | surface smoothness after UV curing | good | good | good | good | good | good | good | good | good | good |
| | quantity of resin getting into coating agent from fiber reinforced composite material base during heat-molding step — peak value at 1,592 cm$^{-1}$ in IR measurement (-) | 0.40 | 0.20 | 0.56 | 0.48 | 0.36 | 0.18 | 0.56 | 0.43 | 0.37 | 0.22 |
| | quantity of resin getting into coating agent from fiber reinforced composite material base during heat-molding step — rating | good | good | good | good | good | good | good | good | good | good |

EP 4 082 677 A1

[Table 22]

[Table 22]

|  |  | | Comparative example 25 | Comparative example 26 |
|---|---|---|---|---|
| epoxy resin composition (coating agent) | component [A] non-aromatic epoxy resin | | | |
| | (3',4'-epoxycyclohexane)methyl 3,4-epoxycyclohexane carboxylate (CELLOXIDE 2021P) | | 100 | 100 |
| | component [B] pigment with average particle size 0.1 to 10 μm | | | |
| | titanium oxide (rutile type) (R-960) | | 20 | 20 |
| | component [C] non-aromatic thermoplastic resin | | | |
| | polyvinyl formal (Vinylec K) | | 2 | 20 |
| | component [D] cationic curing agent | | | |
| | benzylmethyl p-hydroxyphenylsulfonium hexafluoroantimonate (SAN-AID SI-150) | | 0.5 | 0.5 |
| coating method | | | manual coating with brush | manual application with bar coater |
| fiber reinforced composite material base precursor to be coated | | | T300/3631-2 woven fabric prepreg (6 sheets stacked) | |
| treatment before coating | degree of cure of fiber reinforced composite material base (%) | | 0 | 0 |
| | surface polishing of fiber reinforced composite material base before coating | | none | none |
| UV curing of coating agent | | | none | none |
| physical properties of fiber reinforced composite material | adhesiveness between coating agent and fiber reinforced composite material base in fiber reinforced composite material | | good | good |
| | surface smoothness after UV curing | | good | good |
| | quantity of resin getting into coating agent from fiber reinforced composite material base during heat-molding step | peak value at 1,592 cm-1 in IR measurement (-) | 0.79 | 0.67 |
| | | rating | poor | poor |

[Table 23]

[Table 23]

| | | Example 162 | Example 163 | Example 164 | Example 165 | Example 166 | Example 167 | Example 168 | Example 169 | Example 170 | Example 171 |
|---|---|---|---|---|---|---|---|---|---|---|---|
| epoxy resin composition (resin film) | component [A] non-aromatic epoxy resin | | | | | | | | | | |
| | (3',4'-epoxycyclohexane) methyl 3,4-epoxycyclohexane carboxylate (CELLOXIDE 2021P) (parts by mass) | 100 | 100 | 100 | 100 | 100 | 100 | 100 | 100 | 100 | 100 |
| | component [B] pigment with volume average particle size 0.1 to 10 $\mu$m | | | | | | | | | | |
| | titanium oxide (rutile type) (R-960) (parts by mass) | 20 | 20 | 20 | 20 | 20 | 20 | 20 | 20 | 20 | 20 |
| | component [C] non-aromatic thermoplastic resin | | | | | | | | | | |
| | polyvinyl formal (Vinylec K) (parts by mass) | 30 | 30 | 30 | 30 | 30 | 30 | 30 | 30 | 30 | 30 |
| | component [D] cationic curing agent or anion curing agent | | | | | | | | | | |
| | benzylmethyl p-hydroxyphenylsulfonium hexafluoroantimonate (SAN-AID SI-150) (parts by mass) | 0.5 | 0.5 | 0.5 | 0.5 | 0.5 | 0.5 | 0.5 | 0.5 | 0.5 | 0.5 |
| fiber reinforced composite material base | | T300/3631-2 woven fabric prepreg (6 sheets stacked) | | | | | | | | | |
| degree of cure of fiber reinforced composite material base (%) | | 0 | 0 | 10 | 10 | 20 | 20 | 30 | 30 | 40 | 40 |
| UV curing of resin film | | performed | performed | performed | performed | performed | performed | performed | performed | performed | performed |
| surface polishing of photo-cured resin film | | none | performed | none | performed | none | performed | none | performed | none | performed |

EP 4 082 677 A1

97

| | | Example 162 | Example 163 | Example 164 | Example 165 | Example 166 | Example 167 | Example 168 | Example 169 | Example 170 | Example 171 |
|---|---|---|---|---|---|---|---|---|---|---|---|
| physical properties of fiber reinforced composite material | adhesiveness between resin film and fiber reinforced composite material base in fiber reinforced composite material | good | good | good | good | good | good | good | good | good | good |
| | surface smoothness after UV curing | good | good | good | good | good | good | good | good | good | good |
| | quantity of resin getting into resin film from fiber reinforced composite material base during heat-molding step — 1,592 cm$^{-1}$ peak value in IR measurement (-) | 0.42 | 0.41 | 0.38 | 0.40 | 0.30 | 0.28 | 0.25 | 0.22 | 0.18 | 0.15 |
| | rating | good | good | good | good | good | good | good | good | good | good |

[Table 24]

[Table 24]

| | | Example 172 | Example 173 | Example 174 | Example 175 | Example 176 | Example 177 | Example 178 | Example 179 | Example 180 | Example 181 | Example 182 | Example 183 |
|---|---|---|---|---|---|---|---|---|---|---|---|---|---|
| epoxy resin composition (resin film) | component [A] non-aromatic epoxy resin | | | | | | | | | | | | |
| | (3',4'-epoxycyclohexane)methyl 3,4-epoxycyclohexane carboxylate (CELLOXIDE 2021P) (parts by mass) | 100 | 100 | 100 | 100 | 100 | 100 | 100 | 100 | 100 | 100 | 100 | 100 |
| | component [B] pigment with volume average particle size 0.1 to 10 $\mu$m | | | | | | | | | | | | |
| | titanium oxide (rutile type) (R-960) (parts by mass) | 20 | 20 | 20 | 20 | 20 | 20 | 20 | 20 | 20 | 20 | 20 | 20 |
| | component [C] non-aromatic thermoplastic resin | | | | | | | | | | | | |
| | polyvinyl formal (Vinylec K) (parts by mass) | 30 | 30 | 30 | 30 | 30 | 30 | 30 | 30 | 30 | 30 | 30 | 30 |
| | component [D] cationic curing agent or anion curing agent | | | | | | | | | | | | |

| | | Example 172 | Example 173 | Example 174 | Example 175 | Example 176 | Example 177 | Example 178 | Example 179 | Example 180 | Example 181 | Example 182 | Example 183 |
|---|---|---|---|---|---|---|---|---|---|---|---|---|---|
| | benzylmethyl p-hy-droxyphenylsulfo-nium hexafluoroanti-monate (SAN-AID SI-150) (parts by mass) | 0.5 | 0.5 | 0.5 | 0.5 | 0.5 | 0.5 | 0.5 | 0.5 | 0.5 | 0.5 | 0.5 | 0.5 |
| fiber reinforced composite material base | | T300/3631-2 woven fabric prepreg (6 sheets stacked) | | | | | | | | | | | |
| degree of cure of fiber reinforced composite material base (%) | | 50 | 50 | 60 | 60 | 70 | 70 | 80 | 80 | 90 | 90 | 100 | 100 |
| UV curing of resin film | | per-formed | per-formed | per-formed | per-formed | per-formed | per-formed | per-formed | per-formed | per-formed | per-formed | per-formed | per-formed |
| surface polishing of photo-cured resin film | | none | per-formed | none | per-formed | none | per-formed | none | per-formed | none | per-formed | none | per-formed |
| physical properties of fiber | adhesiveness between resin film and fiber reinforced composite material base in fiber reinforced composite material | good | good | good | good | poor | good | poor | good | poor | good | poor | good |
| | surface smoothness after UV curing | good | good | good | good | good | good | good | good | good | good | good | good |
| | quantity of resin getting into resin film from fiber reinforced composite material base during heat-molding step | 1,592 cm$^{-1}$ peak value in IR measurement (-) | 0.02 | 0.03 | 0.00 | 0.00 | 0.00 | 0.00 | 0.00 | 0.00 | 0.00 | 0.00 | 0.00 | 0.00 |
| | | rating | good | good | good | good | good | good | good | good | good | good | good | good |

EP 4 082 677 A1

[Table 25]

[Table 25]

| | | Example 184 | Example 185 | Example 186 | Example 187 | Example 188 | Example 189 | Example 190 | Example 191 | Example 192 |
|---|---|---|---|---|---|---|---|---|---|---|
| epoxy resin composition (resin film) | component [A] non-aromatic epoxy resin | | | | | | | | | |
| | (3',4'-epoxycyclohexane) methyl 3,4-epoxycycloh exan e carboxylate (CELLOXIDE 2021P) (parts by mass) | 100 | 100 | 100 | 100 | 100 | 100 | 100 | 100 | 100 |
| | component [B] pigment with volume average particle size 0.1 to 10 $\mu$m | | | | | | | | | |
| | titanium oxide (rutile type) (R-960) (parts by mass) | 20 | 20 | 20 | 20 | 20 | 20 | 20 | 20 | 20 |
| | component [C] non-aromatic thermoplastic resin | | | | | | | | | |
| | polyvinyl formal (Vinylec K) (parts by mass) | 0.2 | 0.2 | 0.2 | 0.2 | 0.2 | 0.2 | 0.2 | 0.2 | 0.2 |
| | component [D] cationic curing agent or anion curing agent | | | | | | | | | |
| | benzylmethyl p-hydroxyphenylsulfonium hexafluoroantimonate (SAN-AID SI-150) (parts by mass) | 0.5 | 0.5 | 0.5 | 0.5 | 0.5 | 0.5 | 0.5 | 0.5 | 0.5 |
| fiber reinforced composite material base precursor | | RTM material prepared by impregnating preform composed of six T300 woven fabric sheets with resin A by vacuum drawing | | | | | | | | |
| degree of cure of fiber reinforced composite material base precursor (%) | | 0 | 10 | 10 | 20 | 20 | 30 | 30 | 40 | 40 |
| UV curing of resin film | | performed | performed | performed | performed | performed | performed | performed | performed | performed |
| surface polishing of photo-cured resin film | | none | none | performed | none | performed | none | performed | none | performed |

103

(continued)

| physical properties of fiber reinforced composite material | | | Example 184 | Example 185 | Example 186 | Example 187 | Example 188 | Example 189 | Example 190 | Example 191 | Example 192 |
|---|---|---|---|---|---|---|---|---|---|---|---|
| | adhesiveness between resin film and fiber reinforced composite material base in fiber reinforced composite material | | good | good | good | good | good | good | good | good | good |
| | surface smoothness after UV curing | | good | good | good | good | good | good | good | good | good |
| | quantity of resin getting into resin film from fiber reinforced composite material base during heat-molding step | 1,592 $cm^{-1}$ peak value in IR measurement (-) | 0.59 | 0.50 | 0.46 | 0.39 | 0.36 | 0.29 | 0.30 | 0.25 | 0.23 |
| | | rating | good | good | good | good | good | good | good | good | good |

[Table 26]

[Table 26]

| | | | Comparative example 27 | Comparative example 28 |
|---|---|---|---|---|
| epoxy resin composition (resin film) | component [A] non-aromatic epoxy resin | | | |
| | (3',4'-epoxycyclohexane)methyl 3,4-epoxycyclohexane carboxylate (CELLOXIDE 2021P) (parts by mass) | | 100 | 100 |
| | component [B] pigment with volume average particle size 0.1 to 10 $\mu$m | | | |
| | titanium oxide (rutile type) (R-960) (parts by mass) | | 20 | 20 |
| | component [C] non-aromatic thermoplastic resin | | | |
| | polyvinyl formal (Vinylec K) (parts by mass) | | 30.0 | 30.0 |
| | component [D] cationic curing agent or anion curing agent | | | |
| | benzylmethyl p-hydroxyphenylsulfonium hexafluoroantimonate (SAN-AID SI-150) (parts by mass) | | 0.5 | 0.5 |
| fiber reinforced composite material base precursor | | | T300/3631-2 woven fabric prepreg (6 sheets stacked) | RTM material prepared by impregnating preform composed of six T300 woven fabric sheets with resin A by vacuum drawing |
| degree of cure of fiber reinforced composite material base (%) | | | 0 | 0 |
| UV curing of resin film | | | none | none |
| surface polishing of photo-cured resin film | | | none | none |
| physical properties of fiber reinforced composite material | adhesiveness between resin film and fiber reinforced composite material base in fiber reinforced composite material | | good | good |
| | surface smoothness after UV curing | | good | good |
| | quantity of resin getting into resin film from fiber reinforced composite material base during heat-molding step | 1,592 cm$^{-1}$ peak value in IR measurement (-) | 0.92 | 0.98 |
| | | rating | poor | poor |

[Table 27]

EP 4 082 677 A1

[Table 27]

| | | Example 193 | Example 194 | Example 195 | Example 196 | Example 197 | Example 198 | Example 199 | Example 200 | Example 201 | Example 202 | Example 203 | Example 204 |
|---|---|---|---|---|---|---|---|---|---|---|---|---|---|
| epoxy resin composition (resin film) | component [A] non-aromatic epoxy resin | | | | | | | | | | | | |
| | (3',4'-epoxycy-clohexane)methyl 3,4-epoxycyclohex-ane carboxylate (CELLOXIDE 2021P) (parts by mass) | 100 | 100 | 100 | 100 | 100 | 100 | 100 | 100 | 100 | 100 | 100 | 100 |
| | component [B] pigment with volume average particle size 0.1 to 10 μm | | | | | | | | | | | | |
| | titanium oxide (rutile type) (R-960) (parts by mass) | 20 | 20 | 20 | 20 | 20 | 20 | 20 | 20 | 20 | 20 | 20 | 20 |
| | component [C] non-aromatic thermoplastic resin | | | | | | | | | | | | |
| | polyvinyl formal (Vinylec K) (parts by mass) | 0.2 | 0.2 | 0.2 | 0.2 | 0.2 | 0.2 | 0.2 | 0.2 | 0.2 | 0.2 | 0.2 | 0.2 |
| | component [D] cationic curing agent or anion curing agent | | | | | | | | | | | | |

106

(continued)

| | Example 193 | Example 194 | Example 195 | Example 196 | Example 197 | Example 198 | Example 199 | Example 200 | Example 201 | Example 202 | Example 203 | Example 204 |
|---|---|---|---|---|---|---|---|---|---|---|---|---|
| benzylmethyl p-hydroxyphenylsulfonium hexafluoroantimonate (SAN-AID SI-150) (parts by mass) | 0.5 | 0.5 | 0.5 | 0.5 | 0.5 | 0.5 | 0.5 | 0.5 | 0.5 | 0.5 | 0.5 | 0.5 |
| fiber reinforced composite material base precursor | RTM material prepared by impregnating preform composed of six T300 woven fabric sheets with resin A by vacuum drawing | | | | | | | | | | | |
| degree of cure of fiber reinforced composite material base (%) | 50 | 50 | 60 | 60 | 70 | 70 | 80 | 80 | 90 | 90 | 100 | 100 |
| UV curing of resin film | performed | performed | performed | performed | performed | performed | performed | performed | performed | performed | performed | performed |
| surface polishing of photo-cured resin film | none | performed | none | performed | none | performed | none | performed | none | performed | none | performed |
| physical properties of fiber reinforced composite material — adhesiveness between resin film and fiber reinforced composite material base in fiber reinforced composite material | good | good | good | good | poor | good | poor | good | poor | good | poor | good |
| surface smoothness after UV curing | good | good | good | good | good | good | good | good | good | good | good | good |
| composite material — quantity of resin getting into resin film from fiber reinforced composite material base during heat-molding step / 1,592 cm$^{-1}$ peak value in IR measurement (-) | 0.10 | 0.14 | 0.00 | 0.00 | 0.00 | 0.00 | 0.00 | 0.00 | 0.00 | 0.00 | 0.00 | 0.00 |
| rating | good | good | good | good | good | good | good | good | good | good | good | good |

[Table 28]

[Table 28]

| | | Example 205 | Example 206 | Example 207 | Example 208 | Example 209 | Example 210 | Example 211 | Example 212 | Example 213 | Example 214 |
|---|---|---|---|---|---|---|---|---|---|---|---|
| epoxy resin composition (resin film) | component [A] non-aromatic epoxy resin | | | | | | | | | | |
| | (3',4'-epoxycyclohexane)methyl 3,4-epoxycyclohexane carboxylate (CELLOXIDE 2021P) (parts by mass) | 100 | 100 | 100 | 100 | 100 | 100 | 70 | 70 | 70 | 70 |
| | diglycidyl ether of 2,2-bis(4-hydroxycyclohexyl)propane (YX8000) (parts by mass) | | | | | | | 30 | 30 | 30 | 30 |
| | component [B] pigment with volume average particle size 0.1 to 10 $\mu$m | | | | | | | | | | |
| | titanium oxide (rutile type) (R-960) (parts by mass) | 20 | 20 | 20 | 20 | 20 | 20 | 20 | 20 | 20 | 20 |
| | component [C] non-aromatic thermoplastic resin | | | | | | | | | | |
| | polyvinyl formal (Vinylec K) (parts by mass) | 30 | 30 | 30 | 30 | 30 | 30 | 30 | 30 | 30 | 30 |
| | component [D] cationic curing agent or anion curing agent | | | | | | | | | | |

|  |  | Example 205 | Example 206 | Example 207 | Example 208 | Example 209 | Example 210 | Example 211 | Example 212 | Example 213 | Example 214 |
|---|---|---|---|---|---|---|---|---|---|---|---|
|  | benzylmethyl p-hydroxy-phenylsulfonium hexafluoroantimonate (SAN-AID SI-150) (parts by mass) | 0.5 | 0.5 | 0.5 | 0.5 | 0.5 | 0.5 | 0.5 | 0.5 | 0.5 | 0.5 |
|  | component [E] thixotropic agent |  |  |  |  |  |  |  |  |  |  |
|  | fumed silica (RY200 S) (parts by mass) | 4 | 4 |  |  |  |  |  |  | 4 | 4 |
|  | component [F] cure stabilizer |  |  |  |  |  |  |  |  |  |  |
|  | 4-(methylthio)phenol (SAN-AID S-ME) (parts by mass) |  |  | 0.1 | 0.1 |  |  |  |  | 0.1 | 0.1 |
|  | component [G] rubber |  |  |  |  |  |  |  |  |  |  |
|  | silicon rubber powder (KMP-601) (parts by mass) |  |  |  |  | 10 | 10 |  |  | 10 | 10 |
| fiber reinforced composite material base | | T300/3631-2 woven fabric prepreg (6 sheets stacked) | | | | | | | | | |
| degree of cure of fiber reinforced composite material base (%) | | 0 | 20 | 0 | 20 | 0 | 20 | 0 | 20 | 0 | 20 |
| UV curing of resin film | | performed | performed | performed | performed | performed | performed | performed | performed | performed | performed |
| surface polishing of photo-cured resin film | | none | none | none | none | none | none | none | none | none | none |

(continued)

| | | Example 205 | Example 206 | Example 207 | Example 208 | Example 209 | Example 210 | Example 211 | Example 212 | Example 213 | Example 214 | |
|---|---|---|---|---|---|---|---|---|---|---|---|---|
| physical properties of fiber reinforced composite material | adhesiveness between resin film and fiber reinforced composite material base in fiber reinforced composite material | | good | good | good | good | good | good | good | good | good | good |
| | surface smoothness after UV curing | | good | good | good | good | good | good | good | good | good | good |
| | quantity of resin getting into resin film from fiber reinforced composite material base during heat-molding step | $1{,}592\ \mathrm{cm^{-1}}$ peak value in IR measurement (-) | | 0.33 | 0.21 | 0.43 | 0.35 | 0.30 | 0.17 | 0.46 | 0.38 | 0.36 | 0.21 |
| | | rating | | good | good | good | good | good | good | good | good | good | good |

**Claims**

1. A coating agent for spraying or manual application comprising an epoxy resin composition containing at least the components [A] to [D] given below, wherein relative to the total quantity of epoxy resin, which accounts for 100 parts by mass, the component [A] accounts for 90 to 100 parts by mass; the component [B] accounts for 15 to 75 parts by mass; the component [C] accounts for 0.05 to 75 parts by mass; and the component [D] accounts for 0.1 to 10 parts by mass:

   [A] non-aromatic epoxy resin,
   [B] pigment having a number average particle size of 0.1 to 10 $\mu$m,
   [C] non-aromatic thermoplastic resin, and
   [D] cationic curing agent or anionic curing agent.

2. A coating agent as set forth in claim 1, wherein the epoxy resin composition further comprises a thixotropic agent as the component [E].

3. A coating agent as set forth in either claim 1 or 2, wherein the epoxy resin composition further comprises a cure stabilizer as the component [F].

4. A coating agent as set forth in any one of claims 1 to 3, wherein the non-aromatic epoxy resin of the component [A] is an alicyclic epoxy resin.

5. A coating agent as set forth in any one of claims 1 to 4, wherein the epoxy resin composition further comprises a rubber as the component [G].

6. A coating agent as set forth in any one of claims 1 to 5, wherein the epoxy resin composition contains at least two non-aromatic epoxy resin compounds as the components [A].

7. A coating agent as set forth in any one of claims 1 to 5, wherein the non-aromatic thermoplastic resin of the component [C] is at least one selected from the group consisting of polyvinyl alcohol, polyvinyl formal, polyvinyl butyral, polyvinyl acetoacetal, and polyvinyl acetate.

8. A coating agent as set forth in any one of claims 1 to 7 that gives a DSC exothermic peak temperature of 80°C to 120°C.

9. A coating agent as set forth in any one of claims 1 to 8 that shows a volatilization percentage of 10% or less.

10. A coating agent as set forth in any one of claims 1 to 9, wherein a cured epoxy resin composition shows a color difference $\Delta$E*ab of 4 or less after being irradiated with 1,000 kJ/m$^2$ of ultraviolet light in the wavelength range of 300 to 400 nm.

11. A production method for a fiber reinforced composite intermediate comprising a step for applying an epoxy resin composition containing the components [A] to [D] given below over the surface of a fiber reinforced composite material base and a subsequent step for photo-curing the epoxy resin composition:

   [A] non-aromatic epoxy resin,
   [B] pigment having an average particle size of 0.1 to 10 $\mu$m,
   [C] non-aromatic thermoplastic resin, and
   [D] cationic curing agent or anionic curing agent.

12. A production method for a fiber reinforced composite intermediate as set forth in claim 11, wherein the epoxy resin composition further comprises a thixotropic agent as the component [E].

13. A production method for a fiber reinforced composite intermediate as set forth in either claim 11 or 12, wherein the epoxy resin composition further comprises a cure stabilizer as the component [F].

14. A production method for a fiber reinforced composite intermediate as set forth in any one of claims 11 to 13, wherein the epoxy resin composition further comprises a rubber as the component [G].

15. A production method for a fiber reinforced composite intermediate as set forth in any one of claims 11 to 14, wherein the epoxy resin composition comprises two or more non-aromatic epoxy resin compounds as the component [A].

16. A production method for a fiber reinforced composite intermediate as set forth in any one of claims 11 to 15, wherein the epoxy resin composition is sprayed for coating the surface of a fiber reinforced composite material base.

17. A production method for a fiber reinforced composite intermediate as set forth in any one of claims 11 to 16, wherein the epoxy resin composition is applied manually for coating the surface of a fiber reinforced composite material base.

18. A production method for a fiber reinforced composite intermediate as set forth in any one of claims 11 to 17, wherein the fiber reinforced composite material base is cured to a degree of cure of 70% or more before applying the epoxy resin composition and subsequently the surface of the fiber reinforced composite material base is polished before applying the epoxy resin composition.

19. A production method for a fiber reinforced composite intermediate as set forth in any one of claims 11 to 18, wherein the surface of the fiber reinforced composite material base is plasma-treated before applying the epoxy resin composition.

20. A production method for a fiber reinforced composite intermediate as set forth in any one of claims 11 to 19, wherein the application of an epoxy resin composition to the surface of a fiber reinforced composite material base is followed by removing excess resin before photo-curing the epoxy resin composition.

21. A production method for a fiber reinforced composite intermediate as set forth in any one of claims 11 to 20, wherein the photo-curing of the epoxy resin composition is followed by polishing the cured surface of the epoxy resin composition.

22. A production method for a fiber reinforced composite intermediate as set forth in any one of claims 11 to 21, wherein the photo-curing of the epoxy resin composition is followed by plasma-treating the cured surface of the epoxy resin composition.

23. A production method for a fiber reinforced composite intermediate as set forth in any one of claims 11 to 22, wherein the reinforcing fiber is carbon fiber.

24. A production method for a fiber reinforced composite intermediate as set forth in any one of claims 11 to 23, wherein the fiber reinforced composite material base is cured to a degree of cure of 20% to 70% before applying the epoxy resin composition.

25. A production method for a fiber reinforced composite material further comprising a step for performing thermal post-curing of a fiber reinforced composite intermediate produced by a production method for a fiber reinforced composite intermediate as set forth in any one of claims 11 to 24.

26. A sheet shaped intermediate material comprising a metal mesh or a metal foil impregnated with an epoxy resin composition containing the components [A] to [D] given below:

    [A] non-aromatic epoxy resin,
    [B] pigment having a volume average particle size of 0.1 to 10 $\mu$m,
    [C] non-aromatic thermoplastic resin, and
    [D] cationic curing agent or anionic curing agent.

27. A sheet shaped intermediate material as set forth in claim 26, wherein the non-aromatic thermoplastic resin of [C] is at least one selected from the group consisting of polyvinyl alcohol, polyvinyl formal, polyvinyl butyral, polyvinyl acetoacetal, and polyvinyl acetate.

28. A sheet shaped intermediate material as set forth in either claim 26 or 27, wherein the epoxy resin composition further comprises a thixotropic agent as the component [E].

29. A sheet shaped intermediate material as set forth in any one of claims 26 to 28, wherein the epoxy resin composition further comprises a cure stabilizer as the component [F].

**30.** A sheet shaped intermediate material as set forth in any one of claims 26 to 29, wherein the non-aromatic epoxy resin of [A] is an alicyclic epoxy resin.

**31.** A sheet shaped intermediate material as set forth in any one claims 26 to 30, wherein the epoxy resin composition further comprises a rubber as the component [G].

**32.** A sheet shaped intermediate material as set forth in any one of claims 26 to 31, wherein the epoxy resin composition contains two or more non-aromatic epoxy resin compounds as the component [A].

**33.** A sheet shaped intermediate material as set forth in any one of claims 26 to 32, wherein the epoxy resin composition shows a DSC exothermic peak temperature of 80°C to 120°C.

**34.** A sheet shaped intermediate material as set forth in any one of claims 26 to 33 that shows a resin flow percentage of 20% or less.

**35.** A sheet shaped intermediate material as set forth in any one of claims 26 to 34, wherein the metal mesh or the metal foil is made of copper.

**36.** A sheet shaped intermediate material as set forth in any one of claims 26 to 34, wherein the metal mesh or the metal foil is made of aluminum.

**37.** A sheet shaped intermediate material as set forth in any one of claims 26 to 36 that contains two or more cationic curing agent compounds as the component [D].

**38.** A sheet shaped intermediate material as set forth in any one of claims 26 to 37, wherein one surface of the metal mesh or the metal foil is impregnated or coated with the epoxy resin composition.

**39.** A sheet shaped intermediate material as set forth in any one of claims 26 to 37, wherein both surfaces of the metal mesh or the metal foil are impregnated or coated with the epoxy resin composition.

**40.** A fiber reinforced composite material comprising a cured product of a sheet shaped intermediate material as set forth in claims 26 to 39 integrated with a fiber reinforced composite material.

**41.** A production method for a fiber reinforced composite intermediate comprising a step for attaching to a mold a resin film containing an epoxy resin composition comprising the components [A] to [D] given below, a subsequent step for photo-curing the epoxy resin composition, and a step for laying a fiber reinforced composite material base on the resin film:

    [A] non-aromatic epoxy resin,
    [B] pigment having a volume average particle size of 0.1 to 10 $\mu$m,
    [C] non-aromatic thermoplastic resin, and
    [D] cationic curing agent or anionic curing agent.

**42.** A production method for a fiber reinforced composite intermediate as set forth in claim 41, wherein the epoxy resin composition further comprises a thixotropic agent as the component [E].

**43.** A production method for a fiber reinforced composite intermediate as set forth in either claim 41 or 42, wherein the epoxy resin composition further comprises a cure stabilizer as the component [F].

**44.** A production method for a fiber reinforced composite intermediate as set forth in any one of claims 41 to 43, wherein the epoxy resin composition further comprises a rubber as the component [G].

**45.** A production method for a fiber reinforced composite intermediate as set forth in any one of claims 41 to 44, wherein the epoxy resin composition comprises two or more compounds as the component [A].

**46.** A production method for a fiber reinforced composite intermediate as set forth in any one of claims 41 to 45 comprising a step for photo-curing a resin film containing an epoxy resin composition comprising the components [A] to [D] and a subsequent step for polishing and/or plasma-treating the surface of the resin film.

**47.** A production method for a fiber reinforced composite intermediate as set forth in any one of claims 41 to 46, wherein the photo-curing of the epoxy resin composition is followed by curing the fiber reinforced composite material base to a degree of cure of 20% to 60% before laying the fiber reinforced composite material base on the resin film.

**48.** A production method for a fiber reinforced composite intermediate as set forth in any one of claims 41 to 47, wherein the photo-curing of the epoxy resin composition is followed by curing the fiber reinforced composite material base to a degree of cure of 20% to 60% before laying the fiber reinforced composite material base on the resin film, and finally polishing and/or plasma-treating the surface of the fiber reinforced composite material base

**49.** A production method for a fiber reinforced composite intermediate as set forth in any one of claims 41 to 48, wherein the reinforcing fiber is carbon fiber.

**50.** A production method for a fiber reinforced composite material, wherein a fiber reinforced composite intermediate produced by a production method for a fiber reinforced composite intermediate as set forth in any one of claims 41 to 49 is molded by additional heating and/or pressing.

**51.** A production method for a fiber reinforced composite material as set forth in claim 50, wherein the surface having the resin film containing an epoxy resin composition comprising the components [A] to [D] used for the fiber reinforced composite material is polished and/or plasma-treated.

**52.** A photo-curable resin film comprising an epoxy resin composition that includes the components [A] to [D] given below:

[A] non-aromatic epoxy resin,
[B] pigment having a volume average particle size of 0.1 to 10 $\mu$m,
[C] non-aromatic thermoplastic resin, and
[D] cationic curing agent or anionic curing agent.

**53.** A photo-curable resin film as set forth in claim 52, wherein the epoxy resin composition further comprises a thixotropic agent as the component [E].

**54.** A photo-curable resin film as set forth in either claim 52 or 53, wherein the epoxy resin composition further comprises a cure stabilizer as the component [F].

**55.** A photo-curable resin film as set forth in any one of claims 52 to 54, wherein the epoxy resin composition further comprises a rubber as the component [G].

**56.** A photo-curable resin film as set forth in any one of claims 52 to 55, wherein the epoxy resin composition comprises two or more compounds as the component [A].

## INTERNATIONAL SEARCH REPORT

| International application No. |
| --- |
| PCT/JP2021/002399 |

### A. CLASSIFICATION OF SUBJECT MATTER

B05D 3/06(2006.01)i; B05D 7/00(2006.01)i; B05D 7/24(2006.01)i; B32B 5/10(2006.01)i; B32B 27/16(2006.01)i; B32B 27/20(2006.01)i; B32B 27/26(2006.01)i; B32B 27/38(2006.01)i; C08G 59/40(2006.01)i; C08G 59/68(2006.01)i; C08L 29/04(2006.01)i; C08L 29/14(2006.01)i; C08L 31/04(2006.01)i; C08L 101/00(2006.01)i; C09D 163/00(2006.01)i; C09D 201/00(2006.01)i; C08L 63/00(2006.01)i; C08J 5/04(2006.01)i; C08J 5/24(2006.01)i; B32B 15/082(2006.01)i; B32B 15/092(2006.01)i; C08K 3/013(2018.01)i; C09D 7/61(2018.01)i; C09D 7/63(2018.01)i; C08J 7/00(2006.01)i

FI: C09D163/00; C08J5/24 CFC; C08L29/14; C08L31/04 D; C08K3/013; B32B27/38; B32B27/20 A; C09D201/00; C09D7/61; B32B15/082 Z; B05D7/24 303F; C08L63/00 Z; B05D7/24 302U; B05D7/24 301T; B32B5/10; B32B27/16 101; B32B27/26; C08G59/68; C09D7/63; C08J7/00 304; C08G59/40; C08J5/04 CFC; C08L101/00; C08L29/04 D; B32B15/092; B05D7/00 B; B05D3/06 Z

According to International Patent Classification (IPC) or to both national classification and IPC

### B. FIELDS SEARCHED

Minimum documentation searched (classification system followed by classification symbols)
B05D3/06; B05D7/00; B05D7/24; B32B5/10; B32B27/16; B32B27/20; B32B27/26; B32B27/38; C08G59/40; C08G59/68; C08L29/04; C08L29/14; C08L31/04; C08L101/00; C09D163/00; C09D201/00; C08L63/00; C08J5/04; C08J5/24; B32B15/082; B32B15/092; C08K3/013; C09D7/61; C09D7/63; C08J7/00

| Documentation searched other than minimum documentation to the extent that such documents are included in the fields searched | |
| --- | --- |
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2004-504427 A (SUNCOLOR CORPORATION) 12 February 2004 (2004-02-12) claims, paragraphs [0008]-[0009], [0019], [0024], [0035], [0041]-[0042], [0054], [0060], [0063], [0068]-[0069], examples | 1-56 |

☒ Further documents are listed in the continuation of Box C.     ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 13 April 2021 (13.04.2021) | 20 April 2021 (20.04.2021) |

| Name and mailing address of the ISA/ | Authorized officer |
| --- | --- |
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

International application No.

PCT/JP2021/002399

C (Continuation).   DOCUMENTS CONSIDERED TO BE RELEVANT

| Category* | Citation of document, with indication, where appropriate, of the relevant passages | Relevant to claim No. |
|---|---|---|
| X | JP 11-302563 A (KANSAI PAINT CO., LTD.) 02 November 1999 (1999-11-02) claims, paragraphs [0006], [0011]-[0013], [0033]-[0040], [0063]-[0064], [0069], examples | 1-6, 8-10 |
| X | JP 11-217518 A (KANSAI PAINT CO., LTD.) 10 August 1999 (1999-08-10) claims, paragraphs [0005], [0032], [0045], examples | 1-6, 8-10 |
| X | WO 1994/021737 A1 (MAZDA MOTOR CORPORATION) 29 September 1994 (1994-09-29) claims, page 2, lines 3-10, page 45, line 20 to page 46, line 3, page 48, lines 17-21, examples | 1-6, 8-10 |
| X | WO 2011/021670 A1 (ASAHI GLASS CO., LTD.) 24 February 2011 (2011-02-24) claims, paragraphs [0005], [0060], [0070], [0096], [0116]-[0123], [0125]-[0126], [0131], examples | 11-56 |
| A | JP 59-184220 A (SERICOL GROUP LIMITED) 19 October 1984 (1984-10-19) entire text | 1-56 |
| A | JP 2003-306633 A (DAINIPPON INK AND CHEMICALS, INCORPORATED) 31 October 2003 (2003-10-31) entire text | 1-56 |

Form PCT/ISA/210 (continuation of second sheet) (January 2015)

**INTERNATIONAL SEARCH REPORT**

Information on patent family members

| International application No. |
|---|
| PCT/JP2021/002399 |

| Patent Documents referred in the Report | Publication Date | Patent Family | Publication Date |
|---|---|---|---|
| JP 2004-504427 A | 12 Feb. 2004 | US 2002/0086161 A1 claims, paragraphs [0008]-[0009], [0020], [0025], [0038], [0044], [0057], [0066], [0069], [0074]-[0075], examples WO 2002/006371 A2 EP 1303553 A2 | |
| JP 11-302563 A | 02 Nov. 1999 | (Family: none) | |
| JP 11-217518 A | 10 Aug. 1999 | (Family: none) | |
| WO 1994/021737 A1 | 29 Sep. 1994 | US 5786435 A claims, column 2, lines 1-10, column 26, lines 37-52, column 28, lines 25-32, examples | |
| WO 2011/021670 A1 | 24 Feb. 2011 | US 2012/0149798 A1 claims, paragraphs [0012], [0076], [0092], [0127], [0161]-[0175], [0178]-[0181], [0187], examples EP 2468816 A1 CN 102482473 A | |
| JP 59-184220 A | 19 Oct. 1984 | US 4548890 A entire text EP 124292 A2 | |
| JP 2003-306633 A | 31 Oct. 2003 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015507648 W

- WO 2003002661 A